# EUROPEAN PATENT SPECIFICATION

(11) **EP 3 093 210 B1**
(45) Date of publication and mention of the grant of the patent: **27.02.2019**
(21) Application number: 16169339.5
(22) Date of filing: 12.05.2016
(51) Int. Cl.: B62D 1/04, B62D 1/28, B60R 16/023, G06F 3/16, G06F 3/01, G09G 5/12, G06F 3/0362, G06F 3/0481, G06F 3/0487

(54) **IN-VEHICLE APPARATUS AND VEHICLE**
FAHRZEUGINTERNE VORRICHTUNG UND FAHRZEUG
APPAREIL EMBARQUÉ DANS UN VÉHICULE ET VÉHICULE

(30) Priority: 12.05.2015 KR 20150066001
(43) Date of publication of application: 16.11.2016
(73) Proprietor: LG ELECTRONICS INC., Yeongdeungpo-gu Seoul 07336 (KR)
(72) Inventor: Park, Sangha, 07336 Seoul (KR)
(74) Representative: Frenkel, Matthias Alexander

(56) References cited:
- US-A1- 2012 271 500
- US-A1- 2014 081 521
- US-A1- 2014 277 951

## Description

### CROSS-REFERENCE TO RELATED APPLICATION

This application claims the benefit of an earlier filing date and right of priority to Korean Patent Application No. 10-2015-0066001, filed on May 12, 2015 in the Korean Intellectual Property Office.

### TECHNICAL FIELD

The present disclosure relates to an in-vehicle input apparatus.

### BACKGROUND

A vehicle is an apparatus configured to move in a direction desired by a user operating the vehicle. A representative example of a vehicle is a car.

Some vehicles include an in-vehicle input apparatus that provides a user interface. The user interface provided by such an input apparatus may allow a user of the vehicle to perform various operations related to the vehicle, such as navigation operations, or other audio-visual operations.

US 2012/271500 A1 discloses a system enabling a driver to input a vehicle control instruction into an autonomous vehicle controller while the autonomous vehicle controller is operating a vehicle in either an autonomous mode or a semi-autonomous mode. The system includes a sensor that is configured to detect a driver input and to generate a signal corresponding with the driver input. The system further includes a communication sub-system communicatively coupled with the sensor and configured to be communicatively coupled with the autonomous vehicle controller. The communication sub-system is further configured to deliver the signal from the sensor to the autonomous vehicle controller. The autonomous vehicle controller controls the vehicle in a manner that corresponds with the driver input when the autonomous vehicle controller receives the signal.

### SUMMARY

Systems and techniques are disclosed that enable an in-vehicle input apparatus that is attached to a steering wheel and that is configured to generate a user input signal based on detecting a contact region or change of contact region where a hand of a user contacts a rim of the steering wheel.

In one aspect, an in-vehicle input apparatus may include an input unit including at least one sensor attached to a steering wheel of a vehicle. The at least one sensor may be configured to sense contact by a user with a rim of the steering wheel of the vehicle; and output at least one input signal based on the sensed contact by the user with the rim of the steering wheel of the vehicle. The in-vehicle input apparatus may also include at least one processor configured to: monitor, over time, the at least on input signal; based on the monitored at least one input signal, determined a change of a contact region where a hand of the user contacts the rim of the steering wheel of the vehicle; determine, based on the determined change of the contact region where the hand of the used contact s the rim of the steering wheel of the vehicle, a control operation for the vehicle; and generate a control signal based on the determined control operation for the vehicle. The input unit further includes a first input unit configured to generate a first user input signal based on a change of a first contact region where a first hand of the user contacts the rim of the steering wheel. And the processor is further configured to: receive, through the first input unit, the first user input signal as a first type of signal based on a change in a rotation along a first direction toward the user, or as a second type of signal based on a change in a rotation along a second direction away from the user; receive the first type of signal and then subsequently receive the second type of signal within a preset time after the first type of signal is received through the first input unit; and generate a control signal different from control signals individually generated based on the first type and second type of signals, as the first type of signal is received and then the second type of signal is received.

In some implementations, the at least one input unit may be configured to determine the change of the contact region by determining at least one of a change in a location of the contact region, a change in a surface area of the contact region, a change in
a number of contact regions, a change in a rotation of the contact region, or a speed of a change of the contact region.

In some implementations, the at least one input unit may be configured to determine the change of the contact region by determining that the contact region moves radially along a circumference of the rim of the steering wheel, or determining that the contact region moves in a twisting motion toward or away from the user.

In some implementations, determining the change in the rotation of the contact region may include determining at least one of a change in a rotation along a first direction toward the user, a change in a rotation along a second direction away from the use, a change in a rotation along a third direction in which the rim rotates for a left-turn steering movement, or a change in a rotation along a fourth direction in which the rim rotates for a right-turn steering movement.

In some implementations, the at least one input unit may include: a first input unit configured to generate a first user input signal based on a change of a first contact region where a first hand of the user contacts the rim of the steering wheel; and a second input unit configured to generate a second user input signal based on a change of a second contact region where a second hand of the user contacts the rim of the steering wheel.

In some implementations, the processor may be configured to generate the control signal based on a combination of the first user input signal generated by the first input unit and the second user input signal generated by the second input unit.

In some implementations, the processor may further be configured to: receive, through the first input unit, the first use input signal as a first type of signal based on a change in a rotation along a first direction toward the user, or as a second type of signal based on a change in a rotation along a second direction away from the user; receive, through the second input unit, the second user input signal as a third type of signal based on a change in a rotation along the first direction, or as a fourth type of signal based on a change in a rotation along the second direction; and generate the control signal based on at least one of the first type of signal, the second type of signal, the third type of signal, or the fourth type of signal.

In some implementation, the processor may further be configured to: receive, through the first input unit, the first input signal as a fifth type of signal based on a change in a rotation along a third direction in which the rim rotates for a left-turn steering movement, or a sixth type of signal based on a change in a rotation along a fourth direction in which the rim rotates for a right-turn steering movement; receive, through the second input unit, the second input signal as a seventh type of a signal based on a change in a rotation along the third direction, or an eighth type of signal based on a change in a rotation along the fourth direction; and generate the control signal based on at least one of the fifth type of signal, the sixth type of signal, the seventh type of signal, or the eighth type of signal.

In another aspect, an in-vehicle input apparatus may include at least one input unit attached to a steering wheel of a vehicle, and a processor configured to generate a control signal based on a user input received by the at least one input unit. The at least one input unit may be configured to receive the user input based on at least one of twist gesture input corresponding to a change of a grip angle through a twisting motion of a wrist of a user while a rim of the steering wheel is gripped by a hand of the user, or a sweep gesture input corresponding to a change of a grip location along a curvature of the steering wheel while the rim of the steering wheel is gripped by the hand of the user.

In some implementations, the at least one input unit may include: a first input unit configured to receive the twist gesture input or the sweep gesture input generated by a first hand of the user; and a second input unit configured to receive the twist gesture input or the sweep gesture input generated by a second hand of the user.

In some implementations, the processor may further be configured to: receive, through the first input unit, a first twist gesture input based on a change in a rotation of the twisting motion of the wrist of the user in a first direction toward the user, or a second twist gesture input based on a change in a rotation of the twisting motion of the wrist of the used in a second direction away from the user; receive through the second input unit, a third twist gesture based on a change in a rotation of the twisting motion of the wrist of the user in the first direction, or a fourth twist gesture input based on a change in a rotation of the twisting motion of the wrist of the used in the second direction; and generate the control signal based on at least one of the first twist gesture input, the second twist gesture input, the third twist gesture input, or the fourth twist gesture input.

In some implementations, the processor may be configured to generate the control signal based on a combination of two or more of the first wrist gesture input, the second twist gesture input, the third twist gesture input, or the fourth twist gesture input.

In some implementation, the processor may be configured to: receive, through the first input unit, a first sweep gesture input based on a change in a rotation of the grip location of the user along a third direction in which the rim of the steering wheel rotates for a left-turn steering movement, or a second sweep gesture input based on a change in a rotation of the grip location of the used along a fourth direction in which the rim rotates for a right-turn steering movement; receive, through the second input unit, a third sweep gesture based on a change in a rotation of the grip location of the user along the third direction, or a fourth sweep gesture input based on a change in a rotation of the grip location of the use along the fourth direction; and generate the control signal based on at least one the first sweep gesture input, the second sweep gesture input, the third sweep gesture input, or the fourth sweep gesture input.

In some implementations, the processor may be configured to receive the first sweep gesture input or the second sweep gesture input through the first input unit separate from receipt of the third sweep gesture input and the fourth sweep gesture input through the second input unit.

In some implementations, the processor may be configured to receive the third sweep gesture input or the fourth sweep gesture input through the second input unit separate from receipt of the first sweep gesture input and the second sweep gesture input through the first input unit.

In some implementations, the at least one input unit may include a handle that defines a part of a circumference of the rim and that is configured to be rotatable in a twisting motion toward or away from the user. The input unit may be configured to receive the twist gesture input based on a change in a rotation angle of the handle in a twisting motion toward or away from the user.

In some implementations, the at least one input unit may include a plurality of protrusions that are provided on a surface of the rim of the steering wheel and that are configured to bend in a first direction. The at least one input unit may be configured to receive the sweep gesture input based on the first direction in which at least one of the plurality of protrusions bend.

In another aspect a vehicle includes a display apparatus and at least one input unit attached to a steering wheel. The at least one input unit may be configured to: sense contact by a user with a rim of the steering wheel of the vehicle; monitor, over time, sensed contact by the user with the rim of the steering wheel of the vehicle; based on the monitored contact by the user with the rim of the steering wheel of the vehicle, determine a change of a contact region where a hand of the user contacts the rim of the steering wheel of the vehicle; and generate at least one user input signal based on the determined change of the contact region where the hand of the user contacts the rim of the steering wheel of the vehicle. The vehicle may also include a processor configured to generate a control signal to control the display apparatus based on the at least one user input signal generated by the at least one input unit.

In some implementations, the display apparatus may be configured to provide a display screen on a windshield of the vehicle.

In some implementations, the vehicle may further include a gaze detection module configured to detect a gaze of the user. The display screen may be provided on a region of the windshield corresponding to the gaze of the user.

In some implementations, the processor may be configured to: determine that the at least one user input signal generated by the at least one input unit corresponds to a first type of input; and provide a control signal for displaying a first screen comprising a plurality of icons on the display apparatus based on the determination that the at least one user input signal generated by the at least one input unit corresponds to the first type of input.

In some implementations, the vehicle may further include a communication unit configured to perform short range communication with a first mobile device. The display apparatus may be configured to display call signal reception information based on the first mobile device receiving a call signal from a second mobile device. The processor may be configured to: determine that the at least one user input signal generated by the at least one input unit corresponds to a first type of input; and provide, based on the determination that the at least one user input signal generated by the at least one input unit corresponds to the first type of input, a control signal for accepting a phone call from the second mobile device.

In some implementations, the vehicle may further include a communication unit configured to perform short range communication with a fist mobile device; and a sound output unit configured to convert an electrical signal into a sound signal and output the sound signal. The processor may further be configured to: determine that a message is received by the first mobile device from a second mobile device; determine that the at least one user input signal generated by the at least one input unit corresponds to a first type of input. The processor may also be configured to, based on the determination that a message is received by the first mobile device from the second mobile device and based on the determination that the at least one user input signal generated by the at least one input unit corresponds to the first type of input: provide a control signal for displaying content of the received message on the display apparatus, or convert the content of the received message into a voice signal and output the voice signal through the sound output unit.

In some implementations, the vehicle may further include a third input unit configured to convert and audio input into an electrical signal. The processor may further be configured to: determine that the at least one user input signal generated by the at least one input unit corresponds to a second type of input; provide, based on the determination that the at least one user input signal generated by the at least one input unit corresponds to the second type of input, a control signal for receiving a voice of the user and converting the voice into text as a reply message through the third input unit; determine that the at least one user input signal generated by the at least one input unit corresponds to a third type of input; and provide, based on the determination that the at least one user input signal generated by the at least one input unit corresponds to the third type of input, a control signal for transmitting the reply message to the second mobile device.

In some implementations, the processor may further be configured to: determine vehicle speed information or steering wheel rotation angle information; determine a current driving condition of the vehicle based on the vehicle speed information or the steering wheel rotation angle information; and determine whether a user input is receivable in the determined current driving condition of the vehicle that is based on the vehicle speed information or the steering wheel rotation angle information.

In some implementations, the at least one input unit may be configured to determine the change of the contact region by determining at least one of a number of taps by the used on the contact region, a fingerprint of the user sensed in the contact region, or a predetermined pattern of movement of a hand of the used on the contact region.

All or part of the features described throughout this application can be implemented as a computer program product including instructions that are stored on one or more non-transitory machine-readable storage media, and that are executable on one or more processing devices. All or part of the features described throughout this application can be implemented as an apparatus, method, or electronic system that can include one or more processing devices and memory to store executable instructions to implement the stated functions.

The details of one or more implementations are set forth in the accompanying drawings and the description below. Other features will be apparent from the description and drawings, and from the claims. The description and specific examples below are given by way of illustration only, and various changes and modifications will be apparent

### BRIEF DESCRIPTION OF THE DRAWINGS

FIG. 1 is a view illustrating an example of the exterior of a vehicle including an in-vehicle input apparatus;
FIGS. 2A and 2B are reference views illustrating examples of user inputs using the in-vehicle input apparatus;
FIGS. 3A and 3B are block diagrams illustrating an in-vehicle input apparatus;
FIGS. 4A to 4E are reference views illustrating an input unit of an in-vehicle input apparatus;
FIGS. 5A to 5D are diagrams illustrating examples of user inputs received through a first input unit;
FIGS. 6A to 6D are diagrams illustrating user inputs received through a second input unit;
FIGS. 7A to 7D are diagrams illustrating examples of user inputs received through first and second input units;
FIGS. 8A to 8D are diagrams illustrating examples of user inputs received through a first input unit;
FIGS. 9A to 9D are diagrams illustrating examples of user inputs received through a second input unit;
FIG. 10A is a block diagram illustrating an example of a vehicle;
FIG. 10B is a block diagram illustrating an example of a display apparatus;
FIG. 11A is a flowchart illustrating an example of an operation of a vehicle;
FIG. 11B is a reference view illustrating an operation of displaying a display screen to correspond to a gaze of a user;
FIGS. 12A to 12H are reference views illustrating examples of an operation for receiving a first input;
FIG. 13 is a reference view illustrating an example of an operation for displaying a first screen;
FIGS. 14A to 17 are reference views illustrating examples of an operation for animating and popping up a plurality of icons;
FIGS. 18A to 18F are diagrams illustrating examples of display locations of a plurality of icons;
FIG. 19 is a reference view illustrating an example of an operation of highlighting a first icon;
FIGS. 20A to 20H are reference views illustrating examples of an operation of receiving a second input;
FIG. 21 is a reference view illustrating an example of an operation of selecting a first item;
FIGS. 22A to 22D are reference views illustrating examples of an operation of receiving a third input;
FIG. 23 is a reference view illustrating an example of an operation of switching a highlighted icon;
FIGS. 24A to 24D are reference views illustrating examples of an operation of receiving a third input;
FIG. 25 is a reference view illustrating an example of an operation of switching a highlighted icon;
FIG. 26 is a flowchart illustrating an example of an operation of a vehicle when a call signal is received;
FIG. 27 is a flowchart illustrating an example of an operation of a vehicle when a message is received; and
FIGS. 28 to 32 are reference views illustrating examples of sub menu structures of items displayed on a display apparatus.

### DETAILED DESCRIPTION

Systems and techniques are described that enable an in-vehicle input apparatus that is attached to a steering wheel and that is configured to generate a user input signal based on detecting a contact region or change of contact region where a hand of a user contacts a rim of the steering wheel.

In some scenarios, an input apparatus attached to the steering wheel may be limited to providing only basic user inputs. In addition, the input apparatus may cause a user to look away from the road to operate the input apparatus on the steering wheel.

Accordingly, an in-vehicle input apparatus is disclosed that is configured to receive user inputs based on a region of contact by the user's hand with the steering wheel. As such, the in-vehicle input apparatus may facilitate a user controlling the vehicle to look ahead at the road while operating the input apparatus, thus reducing the risk of an accident.

Although some vehicles may include an in-vehicle input apparatus that provides a user interface, such as a user interface provided on a center fascia of the vehicle, such configurations may cause a user to look away from the road while operating the input apparatus, thereby increasing the risk of a traffic accident. Implementations described herein provide an input apparatus on a steering wheel of a vehicle, and the input apparatus received a user's input based on the user's contact with the steering wheel. As such, implementations described herein may facilitate a user controlling a vehicle to operate the input apparatus in a more safe and efficient manner.

A vehicle described in this application may include a car or a motorcycle, but implementations are not necessarily limited thereto, and may generally include any suitable vehicle that transports people. The following description is focused on a car as the vehicle.

In addition, a vehicle described in this application may include an internal combustion engine vehicle including an engine as a power source, a hybrid vehicle including both an engine and an electric motor as a power source, an electric vehicle including an electric motor as a power source, or generally a vehicle that is motorized by any suitable power source.

In the following description, the left of a vehicle refers to a left side based on a driving direction of the vehicle, and the right of the vehicle refers to a right side based on the driving direction of the vehicle.

Furthermore, the front of the vehicle refers to the driving direction of the vehicle, and the back of the vehicle refers to a reverse driving direction of the vehicle.

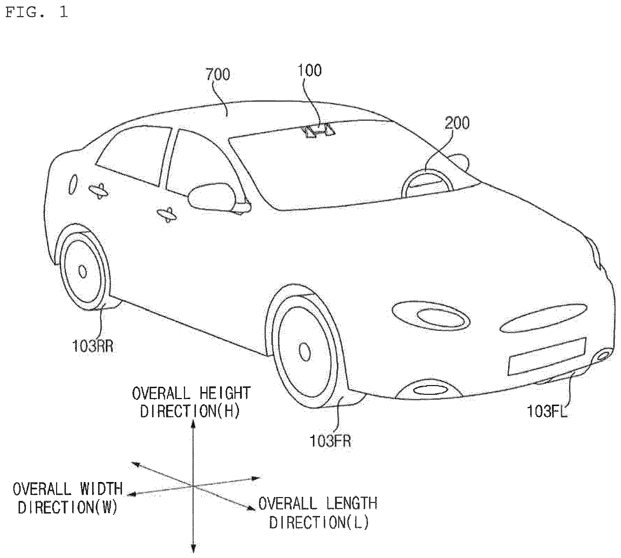

FIG. 1 is a view showing the exterior of a vehicle 700 including an in-vehicle input apparatus 200.

Referring to FIG. 1, the vehicle 700 may include wheels 103FR, 103FL, 103RL, ... rotating due to power supplied from a power source, and a driver assistance apparatus 100 and the in-vehicle input apparatus 200 provided in the vehicle 700.

The driver assistance apparatus 100 may include at least one camera, and an image obtained by the camera may be processed into a signal by a processor.

FIG. 1 illustrates an example driver assistance apparatus 100 that includes two cameras.

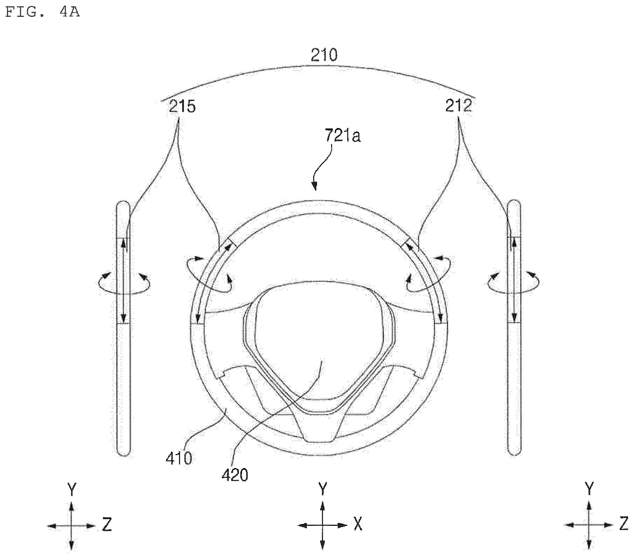

The in-vehicle input apparatus 200 is attached to a steering wheel 721a (see FIG. 4A). The in-vehicle input apparatus 200 may receive various user inputs.

An overall length refers to the length of the vehicle 700 from a front part to a back part, an overall width refers to the width of the vehicle 700, and an overall height refers to the height of the vehicle 700 from the bottom of the wheels to the roof. In the following description, an overall length direction L may refer to a reference direction for measuring the overall length of the vehicle 700, an overall width direction W may refer to a reference direction for measuring the overall width of the vehicle 700, and an overall height direction H may refer to a reference direction for measuring the overall height of the vehicle 700.

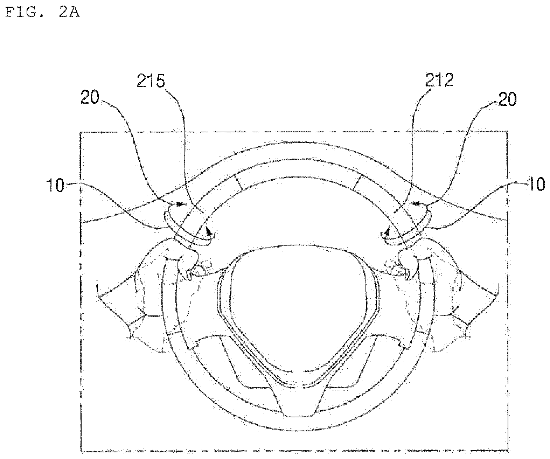

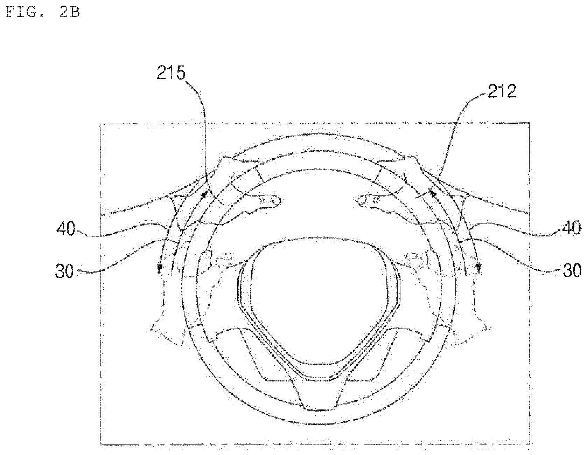

FIGS. 2A and 2B are reference views for describing user inputs using the in-vehicle input apparatus 200.

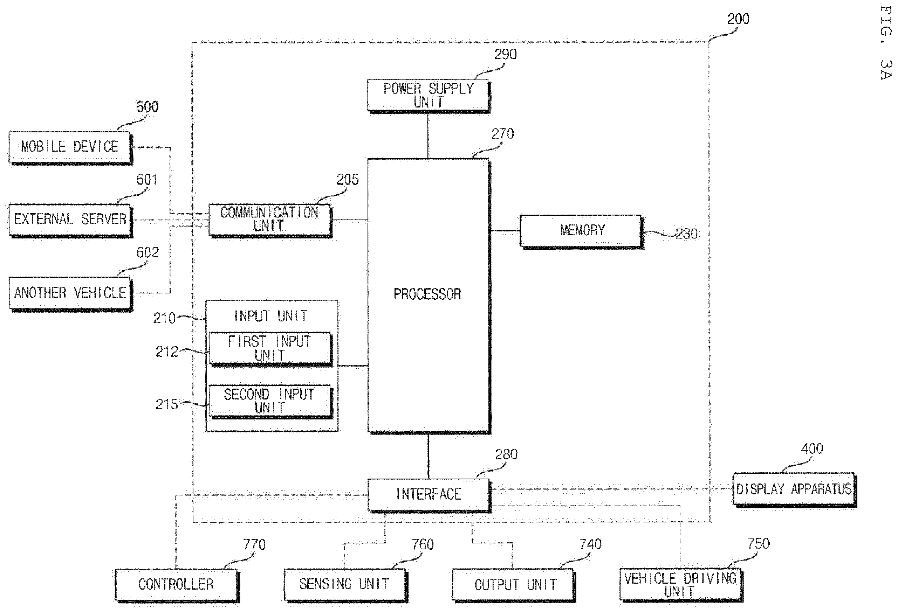

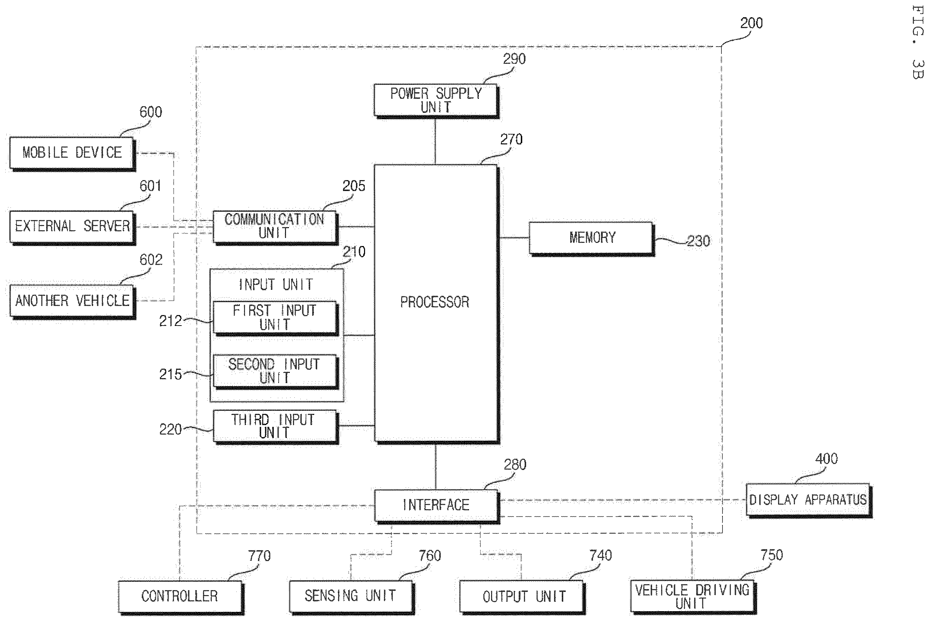

Referring to FIGS. 2A and 2B, at least one input unit 210 (see FIGS. 3A and 3B) may be attached to the steering wheel. Here, the input unit 210 may be provided in the form of a touchpad capable of receiving touch inputs of the user. For example, the input unit 210 may be integrated with a rim of the steering wheel. The input unit 210 may include a first input unit 212 or a second input unit 215. Here, the first input unit 212 may contact a first hand of the user, and the second input unit 215 may contact a second hand of the user. The first hand may be the right hand. The second hand may be the left hand.

In some implementations, the input unit 210 may generate a user input signal based on a change of a contact region where a hand of the user contacts the rim of the steering wheel. In general, a single contact region corresponds to a single hand of a user contacting the rim of the steering wheel.

The change of the contact region may be a change in location of the contact region, a change in area of the contact region, a change in number of the contact regions, or a change in rotation of the contact region.

For example, as illustrated in FIG. 2A, while the hands of the user are in contact with the rim of the steering wheel, if the user twists the wrists and thus changes in location and rotation of the contact region occur, the input unit 210 may generate a user input signal corresponding thereto.

For example, as illustrated in FIG. 2B, while the hands of the user are in contact with the rim of the steering wheel, if the user moves the hands along the circumference of the rim of the steering wheel and thus changes in location and rotation of the contact region occur, the input unit 210 may generate a user input signal corresponding thereto.

In the following description, a first direction 10 is a direction toward the user based on the steering wheel.

A second direction 20 is a direction away from the user based on the steering wheel.

A third direction 30 is a direction in which the steering wheel rotates for a left steering input of a driving direction of the vehicle.

A fourth direction 40 is a direction in which the steering wheel rotates for a right steering input of the driving direction of the vehicle.

In the following description, a first user input may be an input received through the first input unit 212 based on a change in rotation of the contact region which occurs due to rotation in the first direction 10.

A second user input may be an input received through the first input unit 212 based on a change in rotation of the contact region which occurs due to rotation in the second direction 20.

A third user input may be an input received through the second input unit 215 based on a change in rotation of the contact region which occurs due to rotation in the first direction 10.

A fourth user input may be an input received through the second input unit 215 based on a change in rotation of the contact region which occurs due to rotation in the second direction 20.

A fifth user input may be an input received through the first input unit 212 based on a change in rotation of the contact region which occurs due to rotation in the third direction 30.

A sixth user input may be an input received through the first input unit 212 based on a change in rotation of the contact region which occurs due to rotation in the fourth direction 40.

A seventh user input may be an input received through the second input unit 215 based on a change in rotation of the contact region which occurs due to rotation in the third direction 30.

An eighth user input may be an input received through the second input unit 215 based on a change in rotation of the contact region which occurs due to rotation in the fourth direction 40.

In the following description, a twist gesture may be a gesture for changing a grip angle through motion of the wrist while the rim of the steering wheel is gripped by the hand.

A sweep gesture may be a gesture for changing a grip location according to the curvature of the rim of the steering wheel while the rim of the steering wheel is gripped by the hand.

FIGS. 3A and 3B are block diagrams of the in-vehicle input apparatus 200.

Referring to FIG. 3A, the in-vehicle input apparatus 200 may include a communication unit 205, the input unit 210, a memory 230, a processor 270, an interface 280, and a power supply unit 290.

The communication unit 205 may include one or more communication modules for enabling wireless communication with an external apparatus. In addition, the communication unit 205 may include one or more communication modules for connecting the in-vehicle input apparatus 200 to one or more networks. The communication unit 205 may exchange data with the external apparatus. Here, the external apparatus may include a mobile device 600, an external server 601, and another vehicle 602.

If data is received from the external apparatus, the communication unit 205 may transmit the received data to the processor 270.

The input unit 210 may be attached to the steering wheel. The input unit 210 may be attached to the rim of the steering wheel to form a part of the steering wheel. The input unit 210 may be integrated with the steering wheel.

The input unit 210 may receive a user input. For example, the input unit 210 may include a touchpad.

The input unit 210 may generate a user input signal based on a change of a contact region where a hand of the user contacts the steering wheel. In general, a single contact region corresponds to a single hand of a user contacting the rim of the steering wheel.

The change of the contact region may be a change in location of the contact region, a change in area of the contact region, a change in number of the contact regions, or a change in rotation of the contact region.

The change in rotation of the contact region may be a change in rotation along any one direction among a first direction, a second direction, a third direction, and a fourth direction.

In some implementations, the input unit 210 may include the first input unit 212 and the second input unit 215.

The first input unit 212 may generate a user input signal based on a change of a contact region where a first hand of the user contacts the rim of the steering wheel. Here, the first hand may be the right hand.

The second input unit 215 may generate a user input signal based on a change of a contact region where a second hand of the user contacts the rim of the steering wheel. Here, the second hand may be the left hand.

In some implementations, the input unit 210 may form a part of the circumference of the rim of the steering wheel. The input unit 210 may include a handle provided to be rotatable toward the user (first direction) or away from the user (second direction). In this case, the input unit 210 may generate an input signal corresponding to a twist gesture based on a change in rotation angle of the handle toward or away from the user.

In some implementations, the input unit 210 may be provided on the surface of the rim of the steering wheel and may include a plurality of protrusions which are configured to bend in a certain direction. For example, the protrusions may be configured to bend in response to a force or motion applied by a grip of a user. In this case, the input unit 210 may generate an input signal corresponding to a sweep gesture based on the direction in which the protrusions bend as a result of the motion of the grip of the user.

In some implementations, the input unit 210 may receive the twist gesture input or the sweep gesture input. Here, the twist gesture may be a gesture for changing a grip angle through motion of the wrist while the rim of the steering wheel is gripped by the hand. The sweep gesture may be a gesture for changing a grip location according to the curvature of the rim of the steering wheel while the rim of the steering wheel is gripped by the hand.

The first input unit 212 may receive a twist gesture input or a sweep gesture input generated by the first hand of the user. The second input unit 215 may receive a twist gesture input or a sweep gesture input generated by the second hand of the user.

The memory 230 may store basic data about each element of the in-vehicle input apparatus 200, control data for controlling operation of each element, and data input to and output from the in-vehicle input apparatus 200.

The memory 230 may include a variety of storage apparatuses such as a read-only memory (ROM), a random access memory (RAM), an erasable programmable read-only memory (EPROM), a flash drive, and a hard drive, in terms of hardware.

The memory 230 may store various types of data for overall operation of the in-vehicle input apparatus 200, e.g., programs for process or control operations of the processor 270.

The memory 230 may store data generated by the input unit 210. The memory 230 may store information or data received through the communication unit 205.

The processor 270 may control overall operations of elements in the in-vehicle input apparatus 200.

The processor 270 may generate a control signal based on a user input received through the input unit 210.

The control signal generated by the processor 270 may be transmitted through the interface 280 to a controller 770, a sensing unit 760, an output unit 740, a vehicle driving unit 750, or a display apparatus 400. Particularly, the processor 270 may provide a control signal for controlling the display apparatus 400, based on a user input received through the input unit 210.

In some implementations, the control signal generated by the processor 270 may be transmitted through the controller 770 to the sensing unit 760, the output unit 740, the vehicle driving unit 750, or the display apparatus 400.

The processor 270 may generate a control signal based on a combination of a user input received from the first input unit 212 and a user input received from the second input unit 215.

The processor 270 may receive a first user input or a second user input through the first input unit 212. Here, the first user input may be an input received through the first input unit 212 based on a change in rotation of the contact region which occurs due to rotation in the first direction 10 (see FIG. 2A). In addition, the second user input may be an input received through the first input unit 212 based on a change in rotation of the contact region which occurs due to rotation in the second direction 20 (see FIG. 2A).

The processor 270 may receive a third user input or a fourth user input through the second input unit 215. Here, the third user input may be an input received through the second input unit 215 based on a change in rotation of the contact region which occurs due to rotation in the first direction 10 (see FIG. 2A). In addition, the fourth user input may be an input received through the second input unit 215 based on a change in rotation of the contact region which occurs due to rotation in the second direction 20 (see FIG. 2A).

The processor 270 may generate a control signal based on at least one of the first to fourth user inputs.

The processor 270 may generate a control signal based on a combination of two or more of the first to fourth user inputs.

The processor 270 may receive a fifth user input or a sixth user input through the first input unit 212. Here, the fifth user input may be an input received through the first input unit 212 based on a change in rotation of the contact region which occurs due to rotation in the third direction 30 (see FIG. 2B). In addition, the sixth user input may be an input received through the first input unit 212 based on a change in rotation of the contact region which occurs due to rotation in the fourth direction 40 (see FIG. 2B).

The processor 270 may receive a seventh user input or an eighth user input through the second input unit 215. Here, the seventh user input may be an input received through the second input unit 215 based on a change in rotation of the contact region which occurs due to rotation in the third direction 30 (see FIG. 2B). In addition, the eighth user input may be an input received through the second input unit 215 based on a change in rotation of the contact region which occurs due to rotation in the fourth direction 40 (see FIG. 2B).

The processor 270 may generate a control signal based on at least one of the fifth to eighth user inputs.

The processor 270 may receive the fifth or sixth user input through the first input unit 212 while the seventh or eighth user input is not received through the second input unit 215. In this case, the processor 270 may generate a control signal based on the fifth or sixth user input.

The processor 270 may receive the seventh or eighth user input through the second input unit 215 while the fifth or sixth user input is not received through the first input unit 212. In this case, the processor 270 may generate a control signal based on the seventh or eighth user input.

The processor 270 may receive a first twist gesture input or a second twist gesture input through the first input unit 212. Here, the first twist gesture input may be a gesture input based on a change in grip angle which occurs when the first hand rotates in the first direction 10 (see FIG. 2A) through motion of the wrist while the first input unit 212 is gripped by the first hand. The second twist gesture input may be a gesture input based on a change in grip angle which occurs when the first hand rotates in the second direction 20 (see FIG. 2A) through motion of the wrist while the first input unit 212 is gripped by the first hand. Here, the first hand may be the right hand of the user.

The processor 270 may receive a third twist gesture input or a fourth twist gesture input through the second input unit 215. Here, the third twist gesture input may be a gesture input based on a change in grip angle which occurs when the second hand rotates in the first direction 10 (see FIG. 2A) through motion of the wrist while the second input unit 215 is gripped by the second hand. The fourth twist gesture input may be a gesture input based on a change in grip angle which occurs when the second hand rotates in the second direction 20 (see FIG. 2A) through motion of the wrist while the second input unit 215 is gripped by the second hand. Here, the second hand may be the left hand of the user.

The processor 270 may generate a control signal based on at least one of the first to fourth twist gesture inputs.

The processor 270 may generate a control signal based on a combination of two or more of the first to fourth twist gesture inputs.

The processor 270 may receive a first sweep gesture input or a second sweep gesture input through the first input unit 212. Here, the first sweep gesture input may be a gesture input for changing a grip location by rotating the first hand in the third direction 30 (see FIG. 2B) according to the curvature of the rim of the steering wheel while the first input unit 212 is gripped by the first hand. The second sweep gesture input may be a gesture input for changing a grip location by rotating the first hand in the fourth direction 40 (see FIG. 2B) according to the curvature of the rim of the steering wheel while the first input unit 212 is gripped by the first hand. Here, the first hand may be the right hand of the user.

The processor 270 may receive a third sweep gesture input or a fourth sweep gesture input through the second input unit 215. Here, the third sweep gesture input may be a gesture input for changing a grip location by rotating the second hand in the third direction 30 (see FIG. 2B) according to the curvature of the rim of the steering wheel while the second input unit 215 is gripped by the second hand. The fourth sweep gesture input may be a gesture input for changing a grip location by rotating the second hand in the fourth direction 40 (see FIG. 2B) according to the curvature of the rim of the steering wheel while the second input unit 215 is gripped by the second hand. Here, the second hand may be the left hand of the user.

The processor 270 may generate a control signal based on at least one of the first to fourth sweep gesture inputs.

The processor 270 may receive the first or second sweep gesture input through the first input unit 212 while the third or fourth sweep gesture input is not received through the second input unit 215. In this case, the processor 270 may generate a control signal based on the first or second sweep gesture input.

The processor 270 may receive the third or fourth sweep gesture input through the second input unit 215 while the first or second sweep gesture input is not received through the first input unit 212. In this case, the processor 270 may generate a control signal based on the third or fourth sweep gesture input.

The processor 270 may provide a control signal corresponding to a user input signal through the interface 280 to the display apparatus 400.

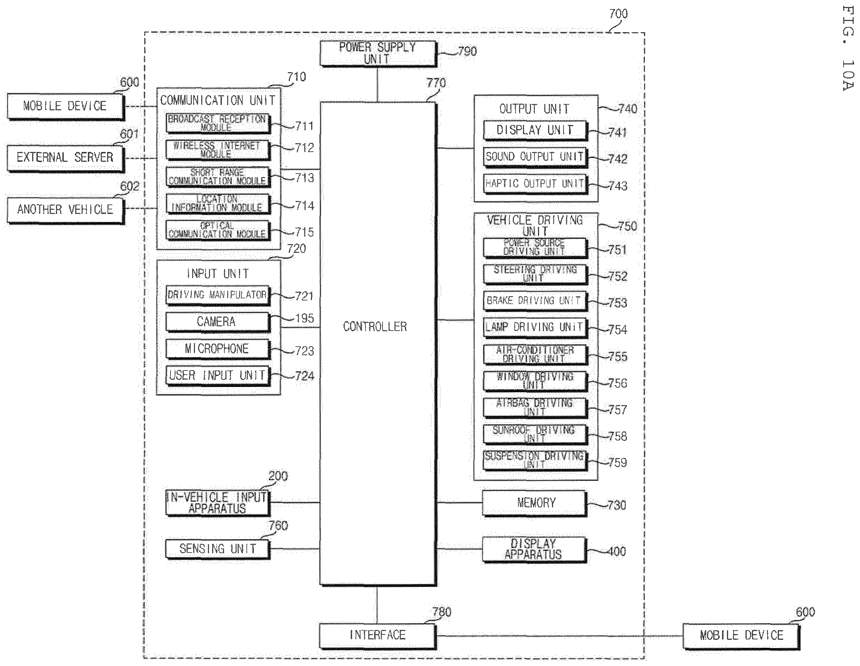

The processor 270 may provide a control signal corresponding to a user input signal to the vehicle driving unit 750. Specifically, the processor 270 may receive an on/off input for turning on/off any of various apparatuses in the vehicle, through the input unit 210. The processor 270 may generate a control signal corresponding to the on/off input and provide the generated control signal to a lamp driving unit 754, a air-conditioner driving unit 755, a window driving unit 756, or a sunroof driving unit 758 (see FIG. 10A).

The lamp driving unit 754, the air-conditioner driving unit 755, the window driving unit 756, or the sunroof driving unit 758 may turn on/off lamps, an air-conditioner, windows, or a sunroof based on the control signal.

The processor 270 may be controlled by the controller 770.

The processor 270 may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units for performing other functions, in terms of hardware.

The interface 280 may exchange data with the controller 770, the sensing unit 760, the output unit 740, the vehicle driving unit 750, and the display apparatus 400 of the vehicle 700.

The interface 280 may receive data or user inputs related to the vehicle, and may transmit signals processed or generated by the processor 270 to the outside. Particularly, the interface 280 may transmit a control generated by the processor 270 to one of the controller 770, the sensing unit 760, the output unit 740, the vehicle driving unit 750, and the display apparatus 400.

To this end, the interface 280 may perform data communication with the controller 770, the sensing unit 760, the output unit 740, the vehicle driving unit 750, and the display apparatus 400 of the vehicle 700 in a wired or wireless manner.

In some implementations, the control signal generated by the processor 270 may be transmitted through the controller 770 to the sensing unit 760, the output unit 740, the vehicle driving unit 750, or the display apparatus 400.

In some implementations, the interface 280 may receive sensor information from the controller 770 or the sensing unit 760.

Here, the sensor information may include at least one of vehicle direction information, vehicle location information (e.g., global positioning system (GPS) information), vehicle angle information, vehicle speed information, vehicle acceleration information, vehicle tilt information, vehicle drive/reverse information, battery information, fuel information, tire information, vehicle lamp information, vehicle internal temperature information, vehicle internal humidity information, and vehicle external illumination information.

This sensor information may be acquired using a heading sensor, a yaw sensor, a gyro sensor, a position module, a vehicle drive/reverse sensor, a wheel sensor, a vehicle speed sensor, a vehicle tilt sensor, a battery sensor, a fuel sensor, a tire sensor, a steering sensor, a vehicle internal temperature sensor, a vehicle internal humidity sensor, an illumination sensor, etc. In some implementations, the position module may include a GPS module for receiving the GPS information.

In some implementations, the vehicle direction information, the vehicle location information, the vehicle angle information, the vehicle speed information, and the vehicle tilt information of the sensor information related to driving of the vehicle may be referred to as vehicle driving information.

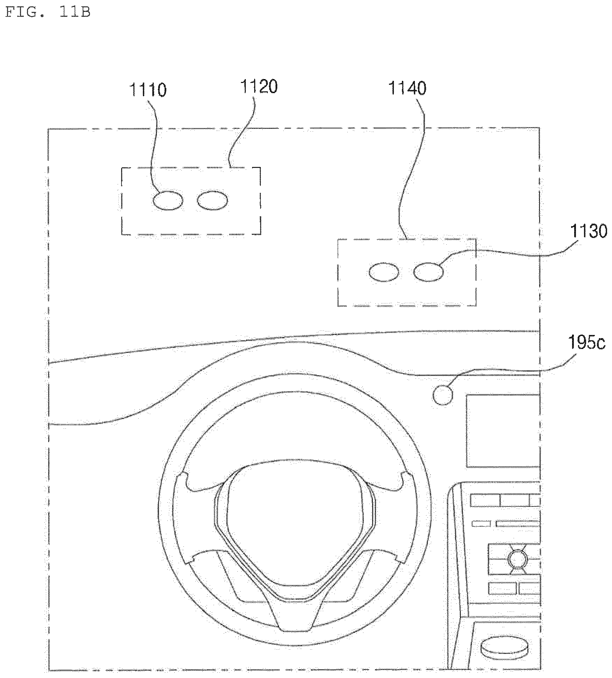

In some implementations, the interface 280 may receive user gaze information acquired by an internal camera 195c (see FIG. 11B).

The power supply unit 290 may supply power necessary for operation of each element of the in-vehicle input apparatus 200, under control of the processor 270. Particularly, the power supply unit 290 may receive power supplied from, for example, a battery in the vehicle 700.

Compared to the in-vehicle input apparatus 200 of FIG. 3A, the in-vehicle input apparatus 200 of FIG. 3B is different therefrom in further including a third input unit 220. The following description is focused on such difference, and a description of the in-vehicle input apparatus 200 of FIG. 3A other than the difference may follow that of the in-vehicle input apparatus 200 of FIG. 3B.

Referring to FIG. 3B, the in-vehicle input apparatus 200 may further include the third input unit 220. Here, the third input unit 220 may be an input unit separate from the input unit 210.

The third input unit 220 may be one of a voice input unit, a button input unit, a dial input unit, and a motion input unit.

The voice input unit may include a microphone capable of receiving voice of the user.

The motion input unit may include a motion sensor capable of sensing motion of the user.

The processor 270 may generate a control signal based on a combination of a user input received through the input unit 210 and a user input received through the third input unit 220.

FIGS. 4A to 4E are reference views for describing the input unit 210 of the in-vehicle input apparatus 200.

FIGS. 4A to 4C illustrate the steering wheel 721a as viewed by the user.

Referring to FIG. 4A, the steering wheel 721a includes a rim 410 and spokes 420.

The rim 410 may be provided in a circular shape. The input unit 210 may be attached to at least one region of the rim 410.

The input unit 210 may be attached to top left and top right parts of the rim 410 as illustrated in FIG. 4A. Alternatively, in FIG. 4A, the input unit 210 may be attached to bottom left and bottom right parts of the rim 410.

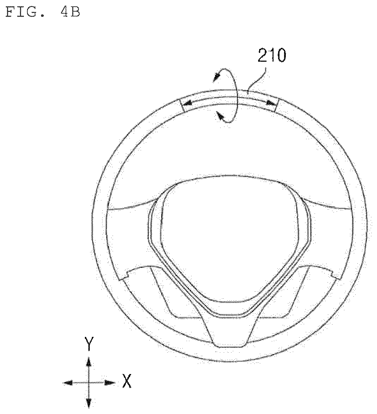

The input unit 210 may be attached to a top part of the rim 410 as illustrated in FIG. 4B.

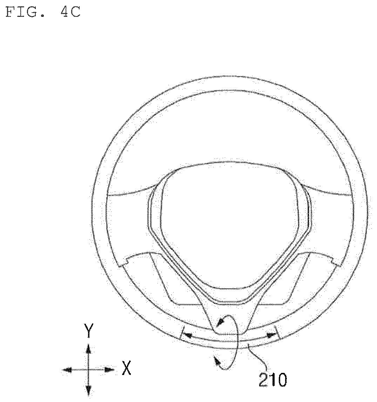

The input unit 210 may be attached to a bottom part of the rim 410 as illustrated in FIG. 4C.

In some implementations, the input unit 210 may be attached to the rim 410 of the steering wheel 721a to form a part of the rim 410 of the steering wheel 721a. The input unit 210 may be integrated with the steering wheel 721a.

The input unit 210 may receive a user input based on a change of a contact region where a hand of the user contact the rim of the steering wheel. Particularly, the input unit 210 may receive a user input based on a change in rotation or location of the contact region.

For example, if a change in rotation of the contact region in the first direction 10 (see FIG. 2A), the second direction 20 (see FIG. 2A), the third direction 30 (see FIG. 2B), or the fourth direction 40 (see FIG. 2B) is detected while the hands of the user are in contact with the input unit 210 forming a part of the rim, the input unit 210 may receive a user input corresponding thereto. The input unit 210 may generate an input signal based on a change in rotation in the first direction, the second direction, the third direction, or the fourth direction. The generated input signal may be transmitted to the processor 270.

The input unit 210 may include the first input unit 212 and the second input unit 215. The first input unit 212 contacts the first hand of the user. The second input unit 215 contacts the second hand of the user.

The first input unit 212 may receive a first user input based on a change in rotation or location of the contact region which occurs when the first hand of the user rotates in the first direction while the first hand is in contact with the first input unit 212. The first input unit 212 may generate a first input signal corresponding to the first user input. The first input unit 212 may transmit the generated first input signal to the processor 270.

The first input unit 212 may receive a second user input based on a change in rotation or location of the contact region which occurs when the first hand of the user rotates in the second direction while the first hand is in contact with the first input unit 212. The first input unit 212 may generate a second input signal corresponding to the second user input. The first input unit 212 may transmit the generated second input signal to the processor 270.

The first input unit 212 may receive a fifth user input based on a change in rotation or location of the contact region which occurs when the first hand of the user rotates in the third direction while the first hand is in contact with the first input unit 212. The first input unit 212 may generate a fifth input signal corresponding to the fifth user input. The first input unit 212 may transmit the generated fifth input signal to the processor 270.

The first input unit 212 may receive a sixth user input based on a change in rotation or location of the contact region which occurs when the first hand of the user rotates in the fourth direction while the first hand is in contact with the first input unit 212. The first input unit 212 may generate a sixth input signal corresponding to the sixth user input. The first input unit 212 may transmit the generated sixth input signal to the processor 270.

The second input unit 215 may receive a third user input based on a change in rotation or location of the contact region which occurs when the second hand of the user rotates in the first direction while the second hand is in contact with the second input unit 215. The second input unit 215 may generate a third input signal corresponding to the third user input. The second input unit 215 may transmit the generated third input signal to the processor 270.

The second input unit 215 may receive a fourth user input based on a change in rotation or location of the contact region which occurs when the second hand of the user rotates in the second direction while the second hand is in contact with the second input unit 215. The second input unit 215 may generate a fourth input signal corresponding to the fourth user input. The second input unit 215 may transmit the generated fourth input signal to the processor 270.

The second input unit 215 may receive a seventh user input based on a change in rotation or location of the contact region which occurs when the second hand of the user rotates in the third direction while the second hand is in contact with the second input unit 215. The second input unit 215 may generate a seventh input signal corresponding to the seventh user input. The second input unit 215 may transmit the generated seventh input signal to the processor 270.

The second input unit 215 may receive an eighth user input based on a change in rotation or location of the contact region which occurs when the second hand of the user rotates in the fourth direction while the second hand is in contact with the second input unit 215. The second input unit 215 may generate an eighth input signal corresponding to the eighth user input. The second input unit 215 may transmit the generated eighth input signal to the processor 270.

In some implementations, the first input unit 212 may receive a first twist gesture input or a second twist gesture input.

The first twist gesture input may be a gesture input corresponding to a change in grip angle which occurs when the first hand rotates in the first direction due to motion of the wrist of the user while the first input unit 212 is gripped by the first hand. If the first twist gesture input is received, the first input unit 212 may generate a first twist gesture input signal corresponding to the first twist gesture input. The first input unit 212 may transmit the generated first twist gesture input signal to the processor 270.

The second twist gesture input may be a gesture input corresponding to a change in grip angle which occurs when the first hand rotates in the second direction due to motion of the wrist of the user while the first input unit 212 is gripped by the first hand. If the second twist gesture input is received, the first input unit 212 may generate a second twist gesture input signal corresponding to the second twist gesture input. The first input unit 212 may transmit the generated second twist gesture input signal to the processor 270.

The first input unit 212 may receive a first sweep gesture input or a second sweep gesture input.

The first sweep gesture input may be a gesture input corresponding to a change in grip location which occurs when the first hand rotates in the third direction according to the curvature of the rim 410 of the steering wheel 721a while the first input unit 212 is gripped by the first hand. If the first sweep gesture input is received, the first input unit 212 may generate a first sweep gesture input signal corresponding to the first sweep gesture input. The first input unit 212 may transmit the generated first sweep gesture input signal to the processor 270.

The second sweep gesture input may be a gesture input corresponding to a change in grip location which occurs when the first hand rotates in the fourth direction according to the curvature of the rim 410 of the steering wheel 721a while the first input unit 212 is gripped by the first hand. If the second sweep gesture input is received, the first input unit 212 may generate a second sweep gesture input signal corresponding to the second sweep gesture input. The first input unit 212 may transmit the generated second sweep gesture input signal to the processor 270.

The second input unit 215 may receive a third twist gesture input or a fourth twist gesture input.

The third twist gesture input may be a gesture input corresponding to a change in grip angle which occurs when the second hand rotates in the first direction due to motion of the wrist of the user while the second input unit 215 is gripped by the second hand. If the third twist gesture input is received, the second input unit 215 may generate a third twist gesture input signal corresponding to the third twist gesture input. The second input unit 215 may transmit the generated third twist gesture input signal to the processor 270.

The fourth twist gesture input may be a gesture input corresponding to a change in grip angle which occurs when the second hand rotates in the second direction due to motion of the wrist of the user while the second input unit 215 is gripped by the second hand. If the fourth twist gesture input is received, the second input unit 215 may generate a fourth twist gesture input signal corresponding to the fourth twist gesture input. The second input unit 215 may transmit the generated fourth twist gesture input signal to the processor 270.

The second input unit 215 may receive a third sweep gesture input or a fourth sweep gesture input.

The third sweep gesture input may be a gesture input corresponding to a change in grip location which occurs when the second hand rotates in the third direction according to the curvature of the rim 410 of the steering wheel 721a while the second input unit 215 is gripped by the second hand. If the third sweep gesture input is received, the second input unit 215 may generate a third sweep gesture input signal corresponding to the third sweep gesture input. The second input unit 215 may transmit the generated third sweep gesture input signal to the processor 270.

The fourth sweep gesture input may be a gesture input corresponding to a change in grip location which occurs when the second hand rotates in the fourth direction according to the curvature of the rim 410 of the steering wheel 721a while the second input unit 215 is gripped by the second hand. If the fourth sweep gesture input is received, the second input unit 215 may generate a fourth sweep gesture input signal corresponding to the fourth sweep gesture input. The second input unit 215 may transmit the generated fourth sweep gesture input signal to the processor 270.

Although FIG. 4A exemplary shows that the number of the spokes 420 is 3, the number of the spokes 420 may be 2 or 4 or any other suitable number of spokes.

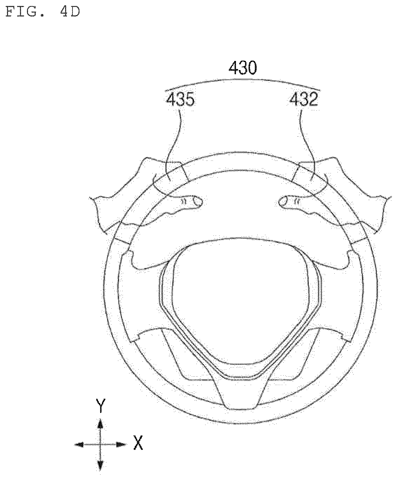

FIG. 4D is a reference view for describing a handle 430 for receiving a twist gesture input.

Referring to FIG. 4D, the input unit 210 may include the handle 430. The handle 430 may form a part of the circumference of the rim 410 of the steering wheel 721a. The handle 430 may be provided to be rotatable in the first direction or the second direction.

The input unit 210 may receive a twist gesture input based on a change in angle of rotation of the handle 430 in the first direction or the second direction. In this case, the change in angle of rotation may be a change in grip angle based on the rim 410 of the steering wheel 721a.

In some implementations, the handle 430 may include a first handle 432 and a second handle 435. The first handle 432 is a handle to be gripped by the first hand. The second handle 435 is a handle to be gripped by the second hand.

If a change in angle of rotation in the first direction occurs on the first handle 432, the input unit 210 may receive a first twist gesture input.

If a change in angle of rotation in the second direction occurs on the first handle 432, the input unit 210 may receive a second twist gesture input.

If a change in angle of rotation in the first direction occurs on the second handle 435, the input unit 210 may receive a third twist gesture input.

If a change in angle of rotation in the second direction occurs on the second handle 435, the input unit 210 may receive a fourth twist gesture input.

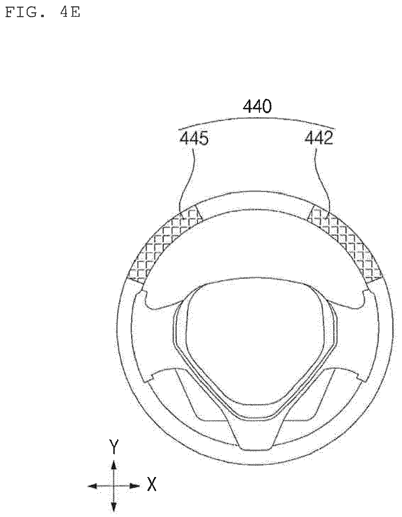

FIG. 4E is a reference view for describing a plurality of protrusions 440 for receiving a sweep gesture input. The protrusions 440 may be configured to bend in response to a motion of a grip of a user who is gripping the steering wheel.

Referring to FIG. 4E, the input unit 210 may include the protrusions 440. The protrusions 440 may be provided on the surface of the rim 410 of the steering wheel 721a. The protrusions 440 may bend in the third direction or the fourth direction due to motion of the hand of the user. The input unit 210 may receive a sweep gesture input based on the direction in which the protrusions 440 bend.

In some implementations, the protrusions 440 may be provided on the surface of a first region 442 and a second region 445 of the rim 410 of the steering wheel 721a. The protrusions 440 provided in the first region 442 may bend in a certain direction due to motion of the first hand. The protrusions 440 provided in the second region 445 may bend in a certain direction due to motion of the second hand.

If the protrusions 440 provided in the first region 442 bend in the third direction, the input unit 210 may receive a first sweep gesture input.

If the protrusions 440 provided in the first region 442 bend in the fourth direction, the input unit 210 may receive a second sweep gesture input.

If the protrusions 440 provided in the second region 445 bend in the third direction, the input unit 210 may receive a third sweep gesture input.

If the protrusions 440 provided in the second region 445 bend in the fourth direction, the input unit 210 may receive a fourth sweep gesture input.

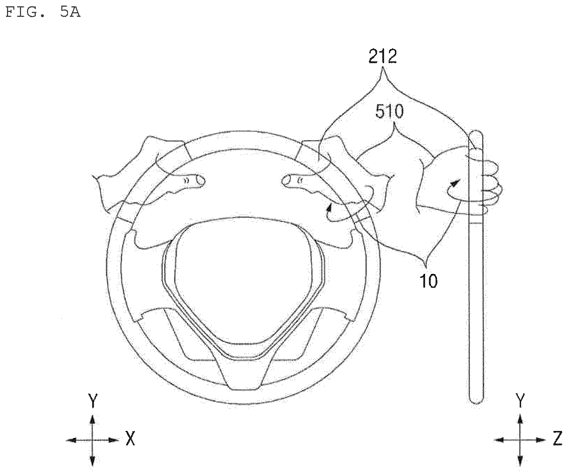

FIGS. 5A to 9D are reference views for describing user inputs received through the input unit 210.

FIGS. 5A to 5D exemplarily illustrate user inputs received through the first input unit 212.

Referring to FIG. 5A, if a first hand 510 rotates in the first direction 10 while the first hand 510 is in contact with the first input unit 212 and thus a contact region is generated, the contact region may rotate in the first direction 10 and thus a change in rotation of the contact region may occur. Alternatively, the contact region may rotate in the first direction 10 and thus a change in location of the contact region may occur. The processor 270 may receive a first user input based on the change in rotation or location of the contact region.

In some implementations, the processor 270 may receive a first twist gesture input through the first input unit 212. Here, the first twist gesture input may be a gesture input generated based on a change in grip angle which occurs when the first hand 510 rotates in the first direction 10 due to motion of the wrist while the first input unit 212 is gripped by the first hand 510.

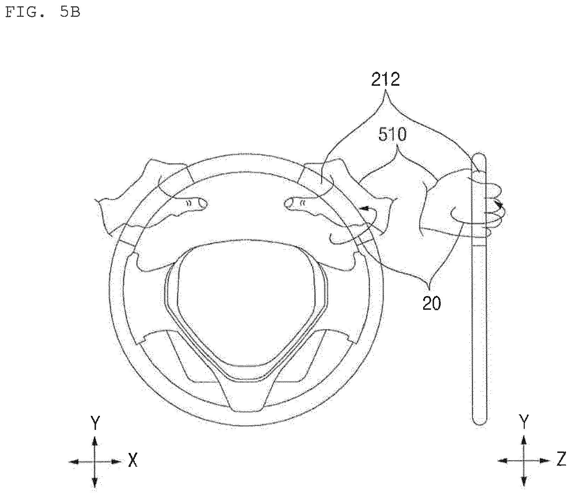

Referring to FIG. 5B, if the first hand 510 rotates in the second direction 20 while the first hand 510 is in contact with the first input unit 212 and thus a contact region is generated, the contact region may rotate in the second direction 20 and thus a change in rotation of the contact region may occur. Alternatively, the contact region may rotate in the second direction 20 and thus a change in location of the contact region may occur. The processor 270 may receive a second user input based on the change in rotation or location of the contact region.

In some implementations, the processor 270 may receive a second twist gesture input through the first input unit 212. Here, the second twist gesture input may be a gesture input generated based on a change in grip angle which occurs when the first hand 510 rotates in the second direction 20 due to motion of the wrist while the first input unit 212 is gripped by the first hand 510.

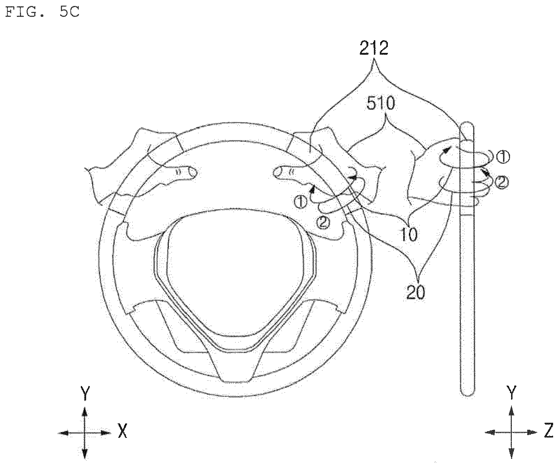

Referring to FIG. 5C, the processor 270 receives the first user input described above in relation to FIG. 5A and then subsequently receive the second user input described above in relation to FIG. 5B within a preset time after the first user input is received through the first input unit 212. As the first user input is received and then the second user input is received, the processor 270 generates a control signal different from control signals individually generated based on the first and second user inputs.

In some implementations, the processor 270 may receive the first twist gesture input described above in relation to FIG. 5A and then subsequently receive the second twist gesture input described above in relation to FIG. 5B within a preset time after the first twist gesture input is received through the first input unit 212. As the first twist gesture input is received and then the second twist gesture input is received, the processor 270 may generate a control signal different from control signals individually generated based on the first and second twist gesture inputs.

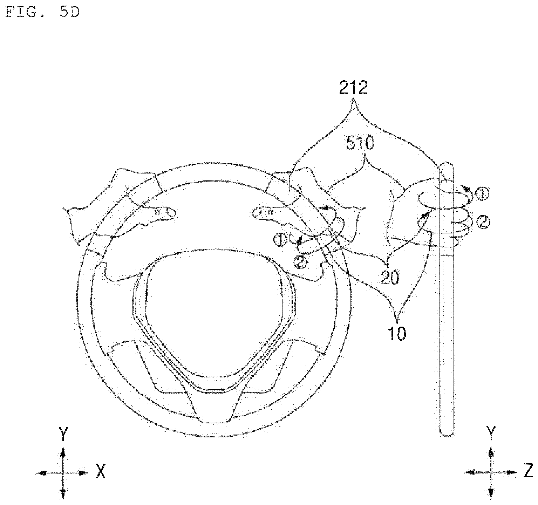

Referring to FIG. 5D, the processor 270 may receive the second user input described above in relation to FIG. 5B and then subsequently receive the first user input described above in relation to FIG. 5A within a preset time after the second user input is received through the first input unit 212. As the second user input is received and then the first user input is received, the processor 270 may generate a control signal different from control signals individually generated based on the first and second user inputs.

In some implementations, the processor 270 may receive the second twist gesture input described above in relation to FIG. 5B and then subsequently receive the first twist gesture input described above in relation to FIG. 5A within a preset time after the second twist gesture input is received through the first input unit 212. As the second twist gesture input is received and then the first twist gesture input is received, the processor 270 may generate a control signal different from control signals individually generated based on the first and second twist gesture inputs.

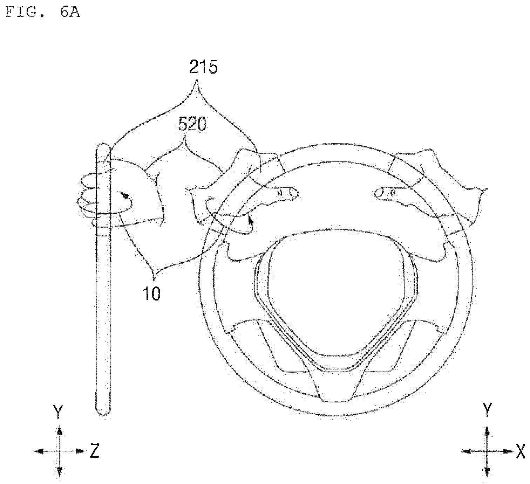

FIGS. 6A to 6D exemplarily illustrate user inputs received through the second input unit 215.

Referring to FIG. 6A, if a second hand 520 rotates in the first direction 10 while the second hand 520 is in contact with the second input unit 215 and thus a contact region is generated, the contact region may rotate in the first direction 10 and thus a change in rotation of the contact region may occur. Alternatively, the contact region may rotate in the first direction 10 and thus a change in location of the contact region may occur. The processor 270 may receive a third user input based on the change in rotation or location of the contact region.

In some implementations, the processor 270 may receive a third twist gesture input through the second input unit 215. Here, the third twist gesture input may be a gesture input generated based on a change in grip angle which occurs when the second hand 520 rotates in the first direction 10 due to motion of the wrist while the second input unit 215 is gripped by the second hand 520.

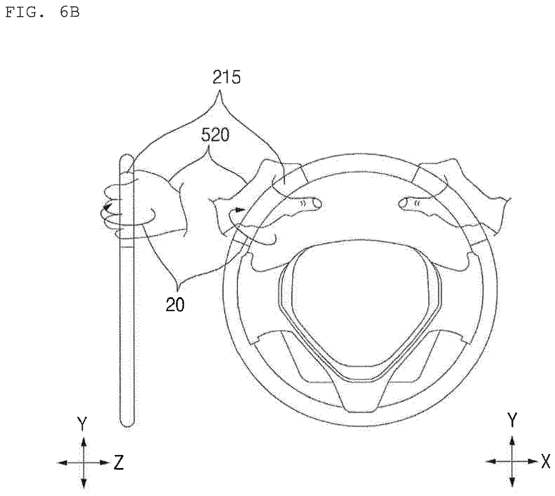

Referring to FIG. 6B, if the second hand 520 rotates in the second direction 20 while the second hand 520 is in contact with the second input unit 215 and thus a contact region is generated, the contact region may rotate in the second direction 20 and thus a change in rotation of the contact region may occur. Alternatively, the contact region may rotate in the second direction 20 and thus a change in location of the contact region may occur. The processor 270 may receive a fourth user input based on the change in rotation or location of the contact region.

In some implementations, the processor 270 may receive a fourth twist gesture input through the second input unit 215. Here, the fourth twist gesture input may be a gesture input generated based on a change in grip angle which occurs when the second hand 520 rotates in the second direction 20 due to motion of the wrist while the second input unit 215 is gripped by the second hand 520.

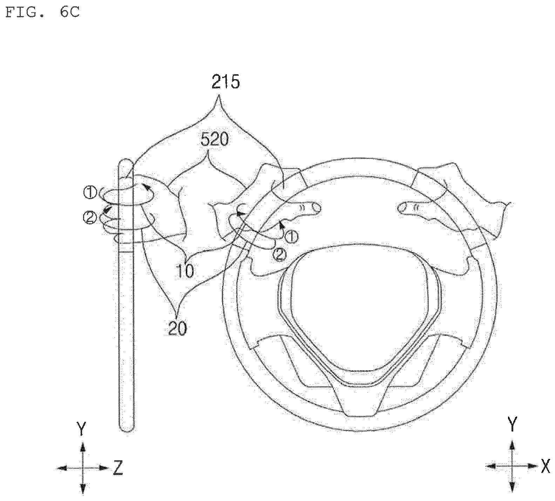

Referring to FIG. 6C, the processor 270 may receive the third user input described above in relation to FIG. 6A and then subsequently receive the fourth user input described above in relation to FIG. 6B within a preset time after the third user input is received through the second input unit 215. As the third user input is received and then the fourth user input is received, the processor 270 may generate a control signal different from control signals individually generated based on the third and fourth user inputs.

In some implementations, the processor 270 may receive the third twist gesture input described above in relation to FIG. 6A and then subsequently receive the fourth twist gesture input described above in relation to FIG. 6B within a preset time after the third twist gesture input is received through the second input unit 215. As the third twist gesture input is received and then the fourth twist gesture input is received, the processor 270 may generate a control signal different from control signals individually generated based on the third and fourth twist gesture inputs.

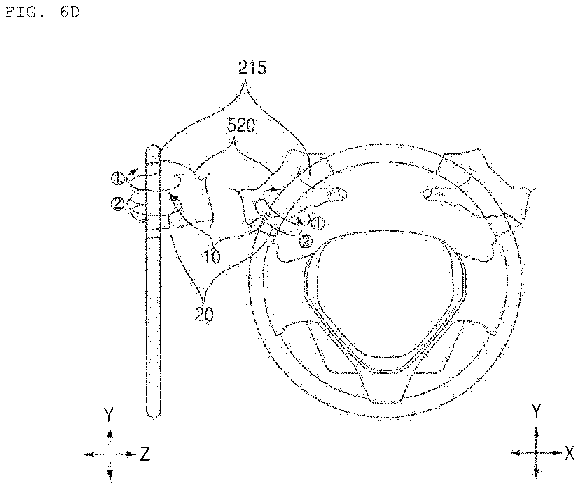

Referring to FIG. 6D, the processor 270 may receive the fourth user input described above in relation to FIG. 6B and then subsequently receive the third user input described above in relation to FIG. 6A within a preset time after the fourth user input is received through the second input unit 215. As the fourth user input is received and then the third user input is received, the processor 270 may generate a control signal different from control signals individually generated based on the third and fourth user inputs.

In some implementations, the processor 270 may receive the fourth twist gesture input described above in relation to FIG. 6B and then subsequently receive the third twist gesture input described above in relation to FIG. 6A within a preset time after the fourth twist gesture input is received through the second input unit 215. As the fourth twist gesture input is received and then the third twist gesture input is received, the processor 270 may generate a control signal different from control signals individually generated based on the third and fourth twist gesture inputs.

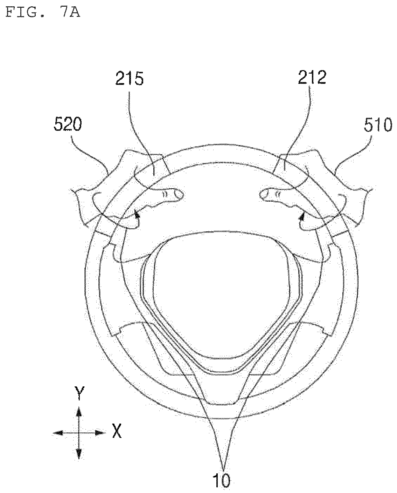

FIGS. 7A to 7D exemplarily illustrate user inputs received through the first and second input units 212 and 215.

Referring to FIG. 7A, the processor 270 may receive the first and third user inputs described above in relation to FIGS. 5A and 6A through the first and second input units 212 and 215. In this case, the first and third user inputs may be received simultaneously or with a small time interval therebetween. If the first and third user inputs are received, the processor 270 may generate a control signal different from control signals individually generated based on the first and third user inputs.

In some implementations, the processor 270 may receive the first and third twist gesture inputs described above in relation to FIGS. 5A and 6A through the first and second input units 212 and 215. In this case, the first and third twist gesture inputs may be received simultaneously or with a small time interval therebetween. If the first and third twist gesture inputs are received, the processor 270 may generate a control signal different from control signals individually generated based on the first and third twist gesture inputs.

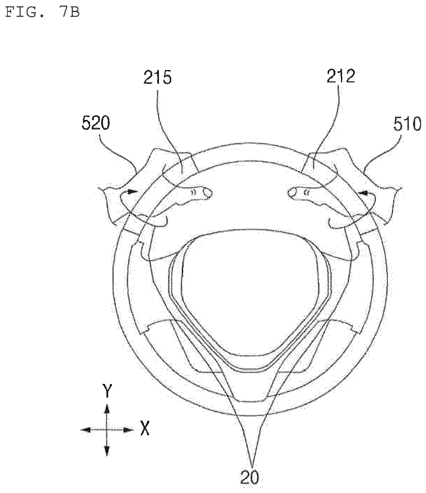

Referring to FIG. 7B, the processor 270 may receive the second and fourth user inputs described above in relation to FIGS. 5B and 6B through the first and second input units 212 and 215. In this case, the second and fourth user inputs may be received simultaneously or with a small time interval therebetween. If the second and fourth user inputs are received, the processor 270 may generate a control signal different from control signals individually generated based on the second and fourth user inputs.

In some implementations, the processor 270 may receive the second and fourth twist gesture inputs described above in relation to FIGS. 5B and 6B through the first and second input units 212 and 215. In this case, the second and fourth twist gesture inputs may be received simultaneously or with a small time interval therebetween. If the second and fourth twist gesture inputs are received, the processor 270 may generate a control signal different from control signals individually generated based on the second and fourth twist gesture inputs.

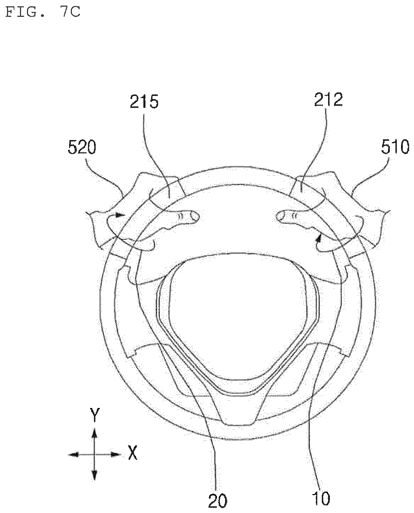

Referring to FIG. 7C, the processor 270 may receive the first and fourth user inputs described above in relation to FIGS. 5A and 6B through the first and second input units 212 and 215. In this case, the first and fourth user inputs may be received simultaneously or with a small time interval therebetween. If the first and fourth user inputs are received, the processor 270 may generate a control signal different from control signals individually generated based on the first and fourth user inputs.

In some implementations, the processor 270 may receive the first and fourth twist gesture inputs described above in relation to FIGS. 5A and 6B through the first and second input units 212 and 215. In this case, the first and fourth twist gesture inputs may be received simultaneously or with a small time interval therebetween. If the first and fourth twist gesture inputs are received, the processor 270 may generate a control signal different from control signals individually generated based on the first and fourth twist gesture inputs.

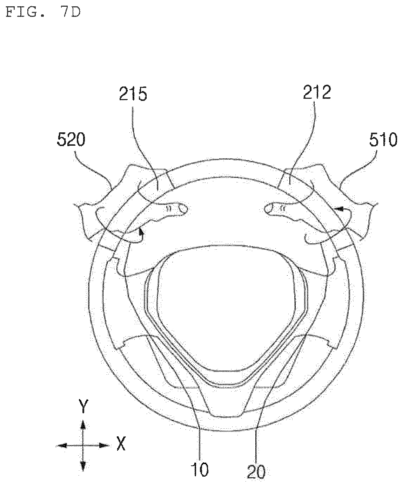

Referring to FIG. 7D, the processor 270 may receive the second and third user inputs described above in relation to FIGS. 5B and 6A through the first and second input units 212 and 215. In this case, the second and third user inputs may be received simultaneously or with a small time interval therebetween. If the second and third user inputs are received, the processor 270 may generate a control signal different from control signals individually generated based on the second and third user inputs.

In some implementations, the processor 270 may receive the second and third twist gesture inputs described above in relation to FIGS. 5B and 6A through the first and second input units 212 and 215. In this case, the second and third twist gesture inputs may be received simultaneously or with a small time interval therebetween. If the second and third twist gesture inputs are received, the processor 270 may generate a control signal different from control signals individually generated based on the second and third twist gesture inputs.

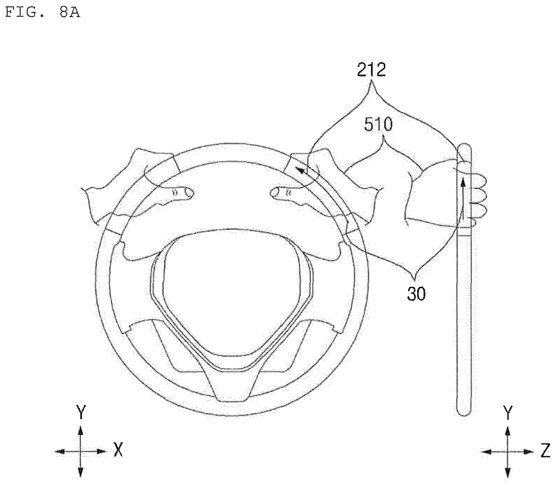

FIGS. 8A to 8D exemplarily illustrate user inputs received through the first input unit 212.

Referring to FIG. 8A, if the first hand 510 rotates in the third direction 30 according to the curvature of the rim of the steering wheel while the first hand 510 is in contact with the first input unit 212 and thus a contact region is generated, the contact region may rotate in the third direction 30 and thus a change in rotation of the contact region may occur. Alternatively, the contact region may rotate in the third direction 30 and thus a change in location of the contact region may occur. The processor 270 may receive a fifth user input based on the change in rotation or location of the contact region.

In some implementations, the processor 270 may receive a first sweep gesture input through the first input unit 212. Here, the first sweep gesture input may be a gesture input generated based on a change in grip location which occurs when the first hand 510 rotates in the third direction 30 while the first input unit 212 is gripped by the first hand 510.

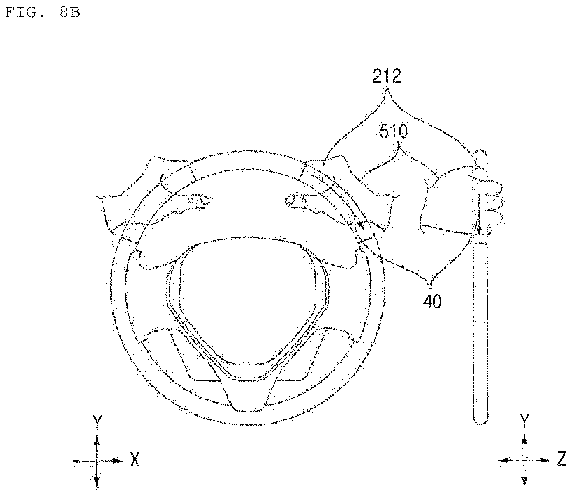

Referring to FIG. 8B, if the first hand 510 rotates in the fourth direction 40 according to the curvature of the rim of the steering wheel while the first hand 510 is in contact with the first input unit 212 and thus a contact region is generated, the contact region may rotate in the fourth direction 40 and thus a change in rotation of the contact region may occur. Alternatively, the contact region may rotate in the fourth direction 40 and thus a change in location of the contact region may occur. The processor 270 may receive a sixth user input based on the change in rotation or location of the contact region.

In some implementations, the processor 270 may receive a second sweep gesture input through the first input unit 212. Here, the second sweep gesture input may be a gesture input generated based on a change in grip location which occurs when the first hand 510 rotates in the fourth direction 40 while the first input unit 212 is gripped by the first hand 510.

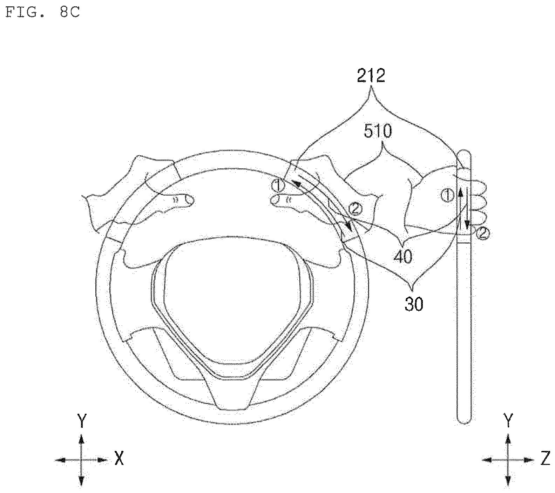

Referring to FIG. 8C, the processor 270 may receive the fifth user input described above in relation to FIG. 8A and then subsequently receive the sixth user input described above in relation to FIG. 8B within a preset time after the fifth user input is received through the first input unit 212. As the fifth user input is received and then the sixth user input is received, the processor 270 may generate a control signal different from control signals individually generated based on the fifth and sixth user inputs.

In some implementations, the processor 270 may receive the first sweep gesture input described above in relation to FIG. 8A and then subsequently receive the second sweep gesture input described above in relation to FIG. 8B within a preset time after the first sweep gesture input is received through the first input unit 212. As the first sweep gesture input is received and then the second sweep gesture input is received, the processor 270 may generate a control signal different from control signals individually generated based on the first and second sweep gesture inputs.

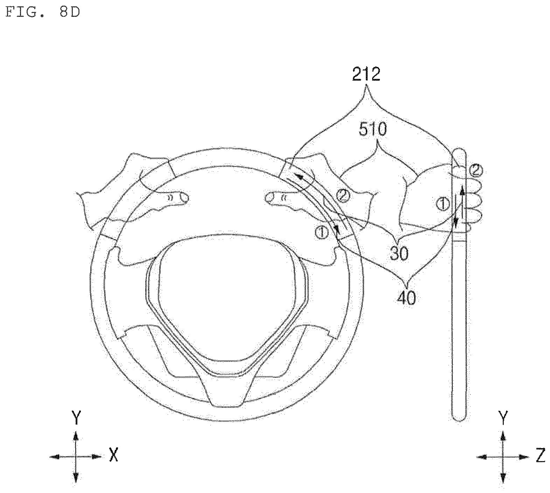

Referring to FIG. 8D, the processor 270 may receive the sixth user input described above in relation to FIG. 8B and then subsequently receive the fifth user input described above in relation to FIG. 8A within a preset time after the sixth user input is received through the first input unit 212. As the sixth user input is received and then the fifth user input is received, the processor 270 may generate a control signal different from control signals individually generated based on the fifth and sixth user inputs.

In some implementations, the processor 270 may receive the second sweep gesture input described above in relation to FIG. 8B and then subsequently receive the first sweep gesture input described above in relation to FIG. 8A within a preset time after the second sweep gesture input is received through the first input unit 212. As the second sweep gesture input is received and then the first sweep gesture input is received, the processor 270 may generate a control signal different from control signals individually generated based on the first and second sweep gesture inputs.

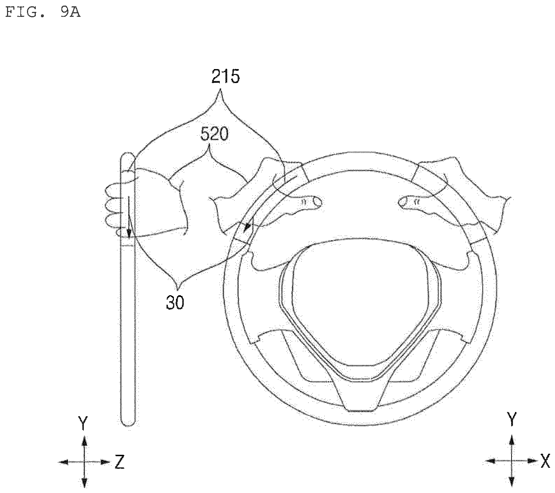

FIGS. 9A to 9D exemplarily illustrate user inputs received through the second input unit 215.

Referring to FIG. 9A, if a second hand 520 rotates in the third direction 30 according to the curvature of the rim of the steering wheel while the second hand 520 is in contact with the second input unit 215 and thus a contact region is generated, the contact region may rotate in the third direction 30 and thus a change in rotation of the contact region may occur. Alternatively, the contact region may rotate in the third direction 30 and thus a change in location of the contact region may occur. The processor 270 may receive a seventh user input based on the change in rotation or location of the contact region.

In some implementations, the processor 270 may receive a third sweep gesture input through the second input unit 215. Here, the third sweep gesture input may be a gesture input generated based on a change in grip location which occurs when the second hand 520 rotates in the third direction 30 while the second input unit 215 is gripped by the second hand 520.

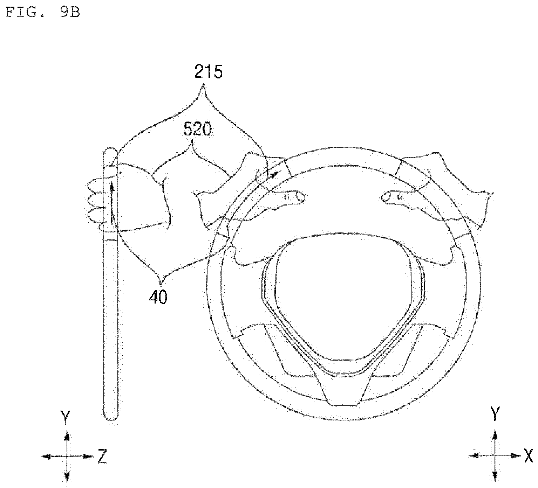

Referring to FIG. 9B, if the second hand 520 rotates in the fourth direction 40 according to the curvature of the rim of the steering wheel while the second hand 520 is in contact with the second input unit 215 and thus a contact region is generated, the contact region may rotate in the fourth direction 40 and thus a change in rotation of the contact region may occur. Alternatively, the contact region may rotate in the fourth direction 40 and thus a change in location of the contact region may occur. The processor 270 may receive an eighth user input based on the change in rotation or location of the contact region.

In some implementations, the processor 270 may receive a fourth sweep gesture input through the second input unit 215. Here, the fourth sweep gesture input may be a gesture input generated based on a change in grip location which occurs when the second hand 520 rotates in the fourth direction 40 while the second input unit 215 is gripped by the second hand 520.

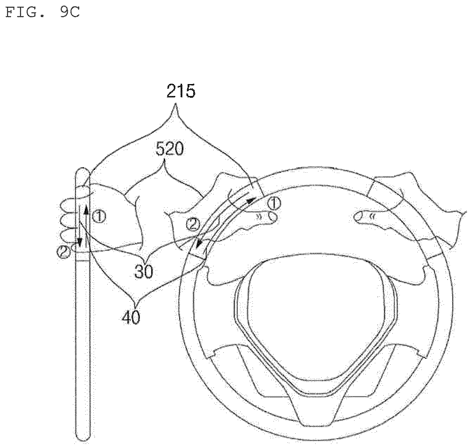

Referring to FIG. 9C, the processor 270 may receive the seventh user input described above in relation to FIG. 9A and then subsequently receive the eighth user input described above in relation to FIG. 9B within a preset time after the seventh user input is received through the second input unit 215. As the seventh user input is received and then the eighth user input is received, the processor 270 may generate a control signal different from control signals individually generated based on the seventh and eighth user inputs.

In some implementations, the processor 270 may receive the third sweep gesture input described above in relation to FIG. 9A and then subsequently receive the fourth sweep gesture input described above in relation to FIG. 9B within a preset time after the third sweep gesture input is received through the second input unit 215. As the third sweep gesture input is received and then the fourth sweep gesture input is received, the processor 270 may generate a control signal different from control signals individually generated based on the third and fourth sweep gesture inputs.

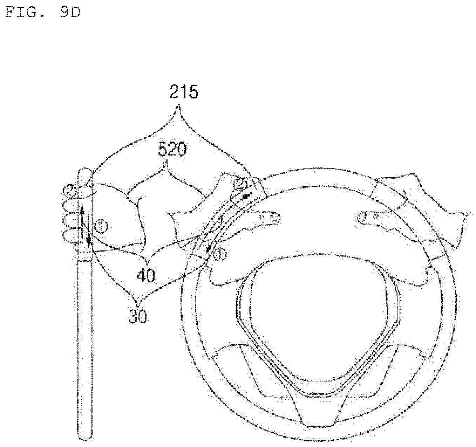

Referring to FIG. 9D, the processor 270 may receive the eighth user input described above in relation to FIG. 9B and then subsequently receive the seventh user input described above in relation to FIG. 9A within a preset time after the eighth user input is received through the second input unit 215. As the eighth user input is received and then the seventh user input is received, the processor 270 may generate a control signal different from control signals individually generated based on the seventh and eighth user inputs.

In some implementations, the processor 270 may receive the fourth sweep gesture input described above in relation to FIG. 9B and then subsequently receive the third sweep gesture input described above in relation to FIG. 9A within a preset time after the fourth sweep gesture input is received through the second input unit 215. As the fourth sweep gesture input is received and then the third sweep gesture input is received, the processor 270 may generate a control signal different from control signals individually generated based on the third and fourth sweep gesture inputs.

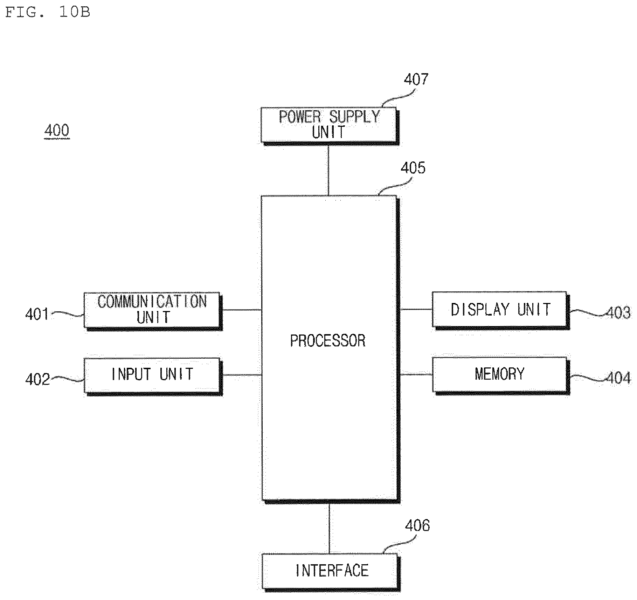

FIG. 10A is a block diagram of the vehicle 700. FIG. 10B is a block diagram of the display apparatus 400.

Referring to FIG. 10A, the vehicle 700 may include a communication unit 710, an input unit 720, the sensing unit 760, the output unit 740, the vehicle driving unit 750, a memory 730, an interface 780, the controller 770, a power supply unit 790, the driver assistance apparatus 100, the in-vehicle input apparatus 200, and the display apparatus 400.

The communication unit 710 may include one or more modules for enabling wireless communication between the vehicle 700 and the mobile device 600, between the vehicle 700 and the external server 601, or between the vehicle 700 and the other vehicle 602. In addition, the communication unit 710 may include one or more modules for connecting the vehicle 700 to one or more networks.

The communication unit 710 may receive car accident information, road construction or repair information, or road congestion information from external apparatuses (e.g., 600, 510, and 520). For example, the communication unit 710 may receive the car accident information, the road construction or repair information, or the road congestion information through a wireless Internet module 712.

The communication unit 710 may include a broadcast reception module 711, the wireless Internet module 712, a short range communication module 713, a location information module 714, and an optical communication module 715.

The broadcast reception module 711 receives a broadcast signal or broadcast-related information through a broadcast channel from an external broadcast management server. Here, broadcast includes radio broadcast or TV broadcast.

The wireless Internet module 712 refers to a module for wireless Internet access and may be embedded in or separate from the vehicle 700. The wireless Internet module 712 is configured to transmit and receive wireless signals in communication networks according to wireless Internet technologies.

The wireless Internet technologies include, for example, Wireless LAN (WLAN), Wireless-Fidelity (Wi-Fi), Wireless-Fidelity Direct (Wi-Fi Direct), Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and Long Term Evolution-Advanced (LTE-A), and the wireless Internet module 712 transmits and receives data according to at least one wireless Internet technology in a range of Internet technologies listed and not listed above. For example, the wireless Internet module 712 may wirelessly exchange data with the external server 601. The wireless Internet module 712 may receive weather information and traffic condition information (e.g., Transport Protocol Expert Group (TPEG) information) from the external server 601.

The short range communication module 713 is used for short range communication and may support short range communication using at least one technology among Bluetooth™, Radio Frequency Identification (RFID), Infrared Data Association (IrDA), Ultra Wideband (UWB), ZigBee, Near Field Communication (NFC), Wireless-Fidelity (Wi-Fi), Wireless-Fidelity Direct (Wi-Fi Direct), and Wireless Universal Serial Bus (Wireless USB).

This short range communication module 713 may form a wireless local area network and perform short range communication between the vehicle 700 and at least one external apparatus. For example, the short range communication module 713 may wirelessly exchange data with the mobile device 600. The short range communication module 713 may receive weather information and traffic condition information (e.g., Transport Protocol Expert Group (TPEG) information) from the mobile device 600. For example, if the user gets in the vehicle 700, the mobile device 600 of the user and the vehicle 700 may be paired with each other automatically or due to execution of an application of the user.

The location information module 714 is a module for acquiring location information of the vehicle 700, and a representative example thereof is a global positioning system (GPS) module. For example, if the GPS module is used, the vehicle 700 may acquire the location information of the vehicle 700 using a signal transmitted from a GPS satellite.

The optical communication module 715 may include a light transmitter and a light receiver.

The light receiver may receive information by converting a light signal into an electrical signal. The light receiver may include a photo diode (PD) for receiving light. The PD may convert light into an electrical signal. For example, the light receiver may receive information about a vehicle ahead using light emitted from a light source of the car ahead.

The light transmitter may include at least one light-emitting device for converting an electrical signal into a light signal. Here, the light-emitting device may be a light-emitting diode (LED). The light transmitter converts an electrical signal into a light signal and emits the light signal. For example, the light transmitter may emit the light signal by turning on a light-emitting device corresponding to a certain frequency. According to an implementation, the light transmitter may include an array of a plurality of light-emitting devices. According to an implementation, the light transmitter may be integrated with lamps included in the vehicle 700. For example, the light transmitter may be at least one of headlights, tail lights, brake lights, turn signal lights, and side lights. For example, the optical communication module 715 may exchange data with the other vehicle 602 through optical communication.

The input unit 720 may include a driving manipulator 721, the camera 195, a microphone 723, and a user input unit 724.

The driving manipulator 721 receives a user input for driving the vehicle 700. The driving manipulator 721 may include a steering input unit 721a, a shift input unit 721b, an acceleration input unit 721c, and a brake input unit 721d.

The steering input unit 721a receives a driving direction input of the vehicle 700 from the user. The steering input unit 721a may be provided in the form of a wheel capable of providing a steering input due to rotation. According to an implementation, the steering input unit 721a may alternatively be provided in the form of a touchscreen, a touchpad, or buttons.

The shift input unit 721b receives a park (P), drive (D), neutral (N), or reverse (R) input of the vehicle 700 from the user. The shift input unit 721b may be provided in the form of a lever. According to an implementation, the shift input unit 721b may alternatively be provided in the form of a touchscreen, a touchpad, or buttons.

The acceleration input unit 721c receives an input for accelerating the vehicle 700 from the user. The brake input unit 721d receives an input for decelerating the vehicle 700 from the user. The acceleration input unit 721c and the brake input unit 721d may be provided in the form of pedals. According to an implementation, the acceleration input unit 721c or the brake input unit 721d may alternatively be provided in the form of a touchscreen, a touchpad, or buttons.

The camera 195 may include an image sensor and an image processing module. The camera 195 may process a still image or a moving image obtained by the image sensor (e.g., a complementary metal oxide semiconductor (CMOS) or a charge-coupled device (CCD)). The image processing module may extract necessary information by processing the still or moving image obtained by the image sensor, and transmit the extracted information to the controller 770. In some implementations, the vehicle 700 may include the camera 195 for capturing an image of a front or peripheral part of the vehicle 700, and the internal camera 195c (see, e.g., FIG. 11B) for capturing an image of the inside of the vehicle 700.

The internal camera 195c may obtain an image of a driver. The internal camera 195c may obtain an image for acquiring biometric information of the driver.

Although FIG. 10A shows that the camera 195 is included in the input unit 720, the camera 195 may alternatively or additionally be included in the driver assistance apparatus 100.

The microphone 723 may process an external sound signal into electrical data. The processed data may be utilized in various ways based on a function currently performed by the vehicle 700. The microphone 723 may convert a voice command of the user into electrical data. The converted electrical data may be transmitted to the controller 770.

In some implementations, the camera 195 or the microphone 723 may not be included in the input unit 720 but may be included in the sensing unit 760.

The user input unit 724 is used to receive information from the user. If information is input through the user input unit 724, the controller 770 may control operation of the vehicle 700 to correspond to the input information. The user input unit 724 may include a touch input unit or a mechanical input unit. According to an implementation, the user input unit 724 may be provided on a region of the steering wheel. In this case, the driver may manipulate the user input unit 724 with fingers while gripping the steering wheel.

The sensing unit 760 senses signals related to, for example, driving of the vehicle 700. To this end, the sensing unit 760 may include a crash sensor, a wheel sensor, a speed sensor, a tilt sensor, a weight sensor, a heading sensor, a yaw sensor, a gyro sensor, a position module, a vehicle drive/reverse sensor, a battery sensor, a fuel sensor, a tire sensor, a steering sensor, a vehicle internal temperature sensor, a vehicle internal humidity sensor, an ultrasonic sensor, a radar, LADAR(Light Detection And Ranging) an illumination sensor, etc.

As such, the sensing unit 760 may acquire sensing signals related to vehicle crash information, vehicle direction information, vehicle location information (e.g., GPS information), vehicle angle information, vehicle speed information, vehicle acceleration information, vehicle tilt information, vehicle drive/reverse information, battery information, fuel information, tire information, vehicle lamp information, vehicle internal temperature information, vehicle internal humidity information, steering wheel rotation angle, etc., and vehicle external illumination information.

In some implementations, the sensing unit 760 may further include an accelerator pedal sensor, a pressure sensor, an engine speed sensor, an air flow sensor (AFS), an air temperature sensor (ATS), a water temperature sensor (WTS), a throttle position sensor (TPS), a top dead center (TDC) sensor, a crank angle sensor (CAS), etc.

The sensing unit 760 may include a biometric information detection unit. The biometric information detection unit senses and acquires biometric information of the driver. The biometric information may include fingerprint information, iris-scan information, retina-scan information, hand geometry information, facial recognition information, and voice recognition information. The biometric information detection unit may include a sensor for sensing the biometric information of the driver. Here, the internal camera 195c and the microphone 723 may operate as sensors. The biometric information detection unit may acquire the hand geometry information and the facial recognition information through the internal camera 195c.

The output unit 740 is used to output information processed by the controller 770, and may include a display unit 741, a sound output unit 742, and a haptic output unit 743.

The display unit 741 may display the information processed by the controller 770. For example, the display unit 741 may display vehicle information. Here, the vehicle information may include vehicle control information for directly controlling the vehicle 700, or driver assistance information for providing driving guide service to the driver of the vehicle 700. In addition, the vehicle information may include vehicle state information indicating a current state of the vehicle 700, or vehicle driving information related to driving of the vehicle 700.

The display unit 741 may include at least one of a liquid crystal display (LCD), a thin film transistor-liquid crystal display (TFT LCD), an organic light-emitting diode (OLED), a flexible display, a 3-dimensional (3D) display, and an electrophoretic ink (e-ink) display.

The display unit 741 may be layered on or integrated with a touch sensor, and thus may implement a touchscreen. This touchscreen may serve as the user input unit 724 for providing an input interface between the vehicle 700 and the user and, at the same time, provide an output interface between the vehicle 700 and the user. In this case, the display unit 741 may include a touch sensor for sensing a touch on the display unit 741, and thus may receive a control command input using touch. As such, if the display unit 741 is touched, the touch sensor may sense the touch and the controller 770 may generate a control command corresponding to the touch. An input using a touch may be, for example, text, a number, or a menu item indictable or specifiable in various modes.

In some implementations, the display unit 741 may include a cluster such that the driver may check the vehicle state information or the vehicle driving information immediately after the driver starts driving. The cluster may be provided on a dashboard. In this case, the driver may check the information displayed on the cluster while continuously looking ahead.

In some implementations, the display unit 741 may be implemented as a head up display (HUD). If the display unit 741 is implemented as a HUD, the display unit 741 may output the information using a transparent display included in a windshield. Alternatively, the display unit 741 may include a projection module and thus may output the information using an image projected onto the windshield.

In some implementations, the display unit 741 may be integrated with the display apparatus 400 to be described below.

The sound output unit 742 converts an electrical signal received from the controller 770, into an audio signal, and outputs the audio signal. To this end, the sound output unit 742 may include, for example, a speaker. The sound output unit 742 may also output sound corresponding to operation of the user input unit 724.

The haptic output unit 743 generates a haptic output. For example, the haptic output unit 743 may vibrate a steering wheel, a seat belt, or a seat to make the user recognize the output.

The vehicle driving unit 750 may control operations of various apparatuses of the vehicle 700. The vehicle driving unit 750 may include a power source driving unit 751, a steering driving unit 752, a brake driving unit 753, the lamp driving unit 754, the air-conditioner driving unit 755, the window driving unit 756, an airbag driving unit 757, the sunroof driving unit 758, and a suspension driving unit 759.

The power source driving unit 751 may electronically control a power source in the vehicle 700.

For example, if an engine of the vehicle based on fossil fuel is the power source, the power source driving unit 751 may electronically control the engine. As such, the power source driving unit 751 may control, for example, an output torque of the engine. When the power source driving unit 751 is an engine, the power source driving unit 751 may limit the speed of the vehicle 700 by restricting an output torque of the engine under control of the controller 770.

As another example, if a motor of the vehicle based on electricity is a power source, the power source driving unit 751 may control the motor. As such, the power source driving unit 751 may control, for example, the speed and torque of the motor.

The steering driving unit 752 may electronically control a steering apparatus in the vehicle 700. As such, the steering driving unit 752 may change the driving direction of the vehicle.

The brake driving unit 753 may electronically control a brake apparatus in the vehicle 700. For example, the brake driving unit 753 may control operation of brakes provided on wheels, and thus reduce the speed of the vehicle 700. As another example, the brake driving unit 753 may differently control operations of brakes provided on a left wheel and a right wheel, and thus may adjust the driving direction of the vehicle 700 to the left or right.

The lamp driving unit 754 may control lamps provided inside or outside the vehicle 700, to be turned on or off. In addition, the lamp driving unit 754 may control, for example, the intensity and direction of light provided by the lamps. For example, the lamp driving unit 754 may control turn signal lights and brake lights.

The air-conditioner driving unit 755 may electronically control an air-conditioner in the vehicle 700. For example, if the temperature inside the vehicle 700 is high, the air-conditioner driving unit 755 may control the air-conditioner to supply cool air into the vehicle 700.

The window driving unit 756 may electronically control a window apparatus in the vehicle 700. For example, the window driving unit 756 may control left and right windows of the vehicle 700 to be opened or closed.

The airbag driving unit 757 may electronically control an airbag apparatus in the vehicle 700. For example, the airbag driving unit 757 may control an airbag to inflate when the vehicle 700 crashes.

The sunroof driving unit 758 may electronically control a sunroof apparatus in the vehicle 700. For example, the sunroof driving unit 758 may control the sunroof to be opened or closed.

The suspension driving unit 759 may electronically control a suspension apparatus in the vehicle 700. For example, the suspension driving unit 759 may control the suspension apparatus on a bumpy road to reduce impact applied to the vehicle 700.

The memory 730 is electrically connected to the controller 770. The memory 730 may store basic data about each element, control data for controlling operation of each element, and input and output data. The memory 730 may include a variety of storage apparatuses such as a ROM, a RAM, an EPROM, a flash drive, and a hard drive, in terms of hardware. The memory 730 may store various types of data for overall operation of the vehicle 700, e.g., programs for process or control operations of the controller 770.

The interface 780 may serve as a path to various external apparatuses connected to the vehicle 700. For example, the interface 780 may include a port connectable to the mobile device 600, and may be connected through the port to the mobile device 600. In this case, the interface 780 may exchange data with the mobile device 600.

In some implementations, the interface 780 may serve as a path for supplying electrical energy to the connected mobile device 600. If the mobile device 600 is electrically connected to the interface 780, the interface 780 provides electrical energy supplied from the power supply unit 790, to the mobile device 600 under control of the controller 770.

The controller 770 may control overall operations of elements in the vehicle 700. The controller 770 may be called an electronic control unit (ECU).

The controller 770 may be implemented using at least one of ASICs, DSPs, DSPDs, PLDs, FPGAs, processors, controllers, microcontrollers, microprocessors, and electrical units for performing other functions, in terms of hardware.

The power supply unit 790 may supply power necessary for operation of each element under control of the controller 770. Particularly, the power supply unit 790 may receive power supplied from, for example, a battery in the vehicle 700.

The in-vehicle input apparatus 200 may be the in-vehicle input apparatus 200 described above in relation to FIGS. 1 to 9D.

The display apparatus 400 may be controlled based on a control signal received from the in-vehicle input apparatus 200. The display apparatus 400 may receive a control signal from the in-vehicle input apparatus 200. According to an implementation, the display apparatus 400 may receive a control signal output from the in-vehicle input apparatus 200, through the controller 770.

In some implementations, the display apparatus 400 may be integrated with the above-described user input unit 724 and the display unit 741. In this case, the display apparatus 400 may receive a user input based on a touch gesture. In addition, the display apparatus 400 may display certain contents.

Referring to FIG. 10B, the display apparatus 400 may be configured to implement a display screen on the windshield of the vehicle 700.

The display apparatus 400 may include a projection module, and include a head up display (HUD) for projecting an image onto the windshield. In this case, the user may view the image projected onto the windshield while continuously looking ahead.

The display apparatus 400 may include a transparent display. The transparent display may be attached to or integrated with the windshield. In this case, the user may view an image displayed on the transparent display while continuously looking ahead. The transparent display may include at least one of a transparent thin film electroluminescent (TFEL) display, a transparent organic light-emitting diode (OLED), a transparent liquid crystal display (LCD), a transparent plasma display panel (PDP), a transparent light-emitting diode (LED), and a transparent active matrix organic light-emitting diode (AMOLED).

In some implementations, the display apparatus 400 may include a communication unit 401, an input unit 402, a display unit 403, a memory 404, a processor 405, an interface 406, and a power supply unit 407.

The communication unit 401 may include one or more communication modules for enabling wireless communication with an external apparatus. In addition, the communication unit 401 may include one or more communication modules for connecting the display apparatus 400 to one or more networks. The communication unit 401 may exchange data with the external apparatus. Here, the external apparatus may include the mobile device 600, the external server 601, and the other vehicle 602.

If data is received from the external apparatus, the communication unit 401 may transmit the received data to the processor 405.

The input unit 402 may be provided as a touchscreen and may be integrated with the display unit 403.

The display unit 403 may display information processed by the processor 405. The display unit 403 may display various screens, information items, and images under control of the processor 405.

The display unit 403 may include at least one of an LCD, a TFT LCD, an OLED, a flexible display, a 3D display, and an e-ink display.

The memory 404 may store basic data about each element, control data for controlling operation of each element, and input and output data. The memory 404 may include a variety of storage apparatuses such as a ROM, a RAM, an EPROM, a flash drive, and a hard drive, in terms of hardware. The memory 404 may store various types of data for overall operation of the display apparatus 400, e.g., programs for process or control operations of the processor 405.

The processor 405 may control each element of the display apparatus 400. Particularly, the processor 405 may control the display unit 403 based on a control signal received through the interface 406 from the in-vehicle input apparatus 200.

The interface 406 may exchange data with the controller 770, the sensing unit 760, or the in-vehicle input apparatus 200. Particularly, the interface 406 may receive a control signal from the in-vehicle input apparatus 200 and transmit the control signal to the processor 405.

The power supply unit 407 may supply power necessary for operation of each element of the display apparatus 400, under control of the processor 405. Particularly, the power supply unit 407 may receive power supplied from, for example, a battery in the vehicle 700.

In some implementations, the display apparatus 400 may be controlled by the controller 770.

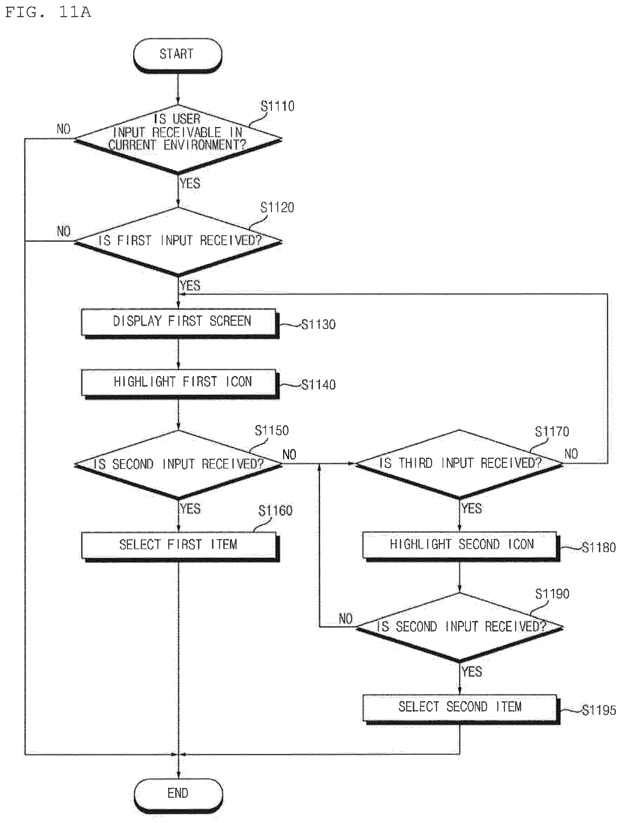

FIG. 11A is a flowchart for describing operation of the vehicle 700.

Referring to FIG. 11A, the processor 270 may determine whether a user input is receivable in a current environment (S1110). The current environment may relate to a travelling condition of the vehicle, a condition of a driver of the vehicle, or any other environmental information related to driving of the vehicle. Such information may be determined, for example, based on a speed of the vehicle or a rotation angle of the steering wheel.

The processor 270 may receive vehicle speed information or steering wheel rotation angle information through the interface 280 from the sensing unit 760. The processor 270 may determine whether a user input is receivable in the current environment, based on the vehicle speed information or the steering wheel rotation angle information.

If it is determined that a user input is receivable when a vehicle speed is equal to or greater than a preset speed or when a steering wheel rotation angle is equal to or greater than a preset angle, safe driving may not be achieved. Accordingly, safe driving may be achieved by blocking reception of a user input under the above condition.

If a user input is receivable in the current environment, the processor 270 may receive a first input (S1120).

The first input may be a user input received through the input unit 210.

The first input may be one of the first to eighth user inputs described above in relation to FIGS. 1 to 9D. Alternatively, the first input may be a combination of two or more of the first to eighth user inputs. Otherwise, the first input may be one of the first to fourth twist gesture inputs. Alternatively, the first input may be a combination of two or more of the first to fourth twist gesture inputs. Otherwise, the first input may be one of the first to fourth sweep gesture inputs. Alternatively, the first input may be a combination of two or more of the first to fourth sweep gesture inputs.

If the first input is received, the processor 270 may provide a control signal for allowing a first screen to be displayed on the display apparatus 400 (S1130). The control signal may be provided to the display apparatus 400.

The first screen may be a home screen, a menu screen, a list screen, or a user settings screen.

The home screen may be a screen displayed when an initial user input is received through the input unit 210. The home screen may display one or more icons for executing applications or internal functions.

The menu screen may be a screen for selecting one or more menus. The menu screen may display icons corresponding to menus.

The list screen may be a screen displayed when a menu is selected. The list screen may include one or more items. Each item may be displayed as an icon.

The user settings screen may be a screen for setting values for an application or an internal function by receiving a user input.

In some implementations, the first screen may include a plurality of icons. Here, each of the icons may have a circular, oval, polygonal, spherical, or polyhedral shape.

In some implementations, if the first input is received, the processor 270 may provide a control signal for popping up the first screen. In this case, the processor 270 may provide a control signal for animating and popping up the icons included in the first screen.

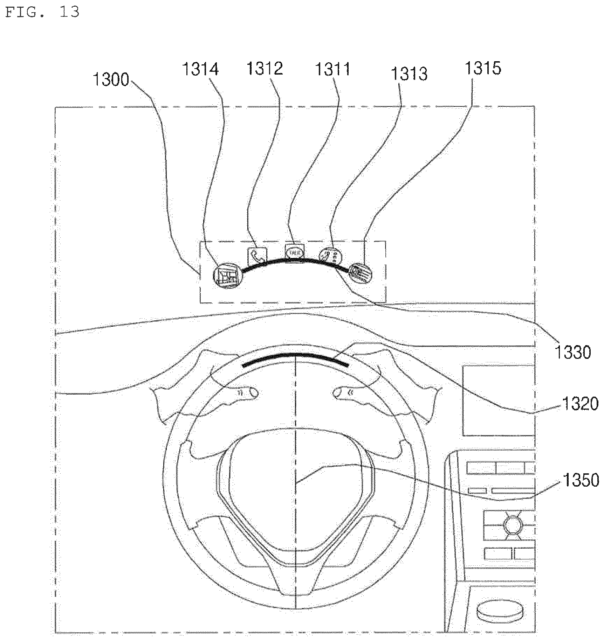

A detailed description of the operation for displaying the first screen will be given below with reference to FIGS. 13 to 18F.

After the first screen is displayed, the processor 270 may provide a control signal for highlighting a first icon among the plurality of icons (S1140). The control signal may be provided to the display apparatus 400.

The first icon may be a preset icon. The first icon may be an icon selected by default. Alternatively, the first icon may be an icon highlighted when the first screen was lastly displayed.

The processor 270 may provide a control signal for displaying the first icon with a different color or a different brightness level from icons other than the first icon among the plurality of icons.

The processor 270 may provide a control signal for dimming the icons other than the highlighted first icon among the plurality of icons included in the first screen.

After the first icon is highlighted, the processor 270 may receive a second input (S1150).

The second input may be a user input received through the input unit 210.

The second input may be one of the first to eighth user inputs described above in relation to FIGS. 1 to 9D. Alternatively, the second input may be a combination of two or more of the first to eighth user inputs. Otherwise, the second input may be one of the first to fourth twist gesture inputs. Alternatively, the second input may be a combination of two or more of the first to fourth twist gesture inputs. Otherwise, the second input may be one of the first to fourth sweep gesture inputs. Alternatively, the second input may be a combination of two or more of the first to fourth sweep gesture inputs.

If the second input is received, the processor 270 may provide a control signal for selecting a first item corresponding to the first icon (S1160). The control signal may be provided to the display apparatus 400.

If the second input is not received in step S1150, the processor 270 may receive a third input (S1170).

The third input may be a user input received through the input unit 210.

The third input may be one of the first to eighth user inputs described above in relation to FIGS. 1 to 9D. Alternatively, the third input may be a combination of two or more of the first to eighth user inputs. Otherwise, the third input may be one of the first to fourth twist gesture inputs. Alternatively, the third input may be a combination of two or more of the first to fourth twist gesture inputs. Otherwise, the third input may be one of the first to fourth sweep gesture inputs. Alternatively, the third input may be a combination of two or more of the first to fourth sweep gesture inputs.

If the third input is received, the processor 270 may provide a control signal for highlighting a second icon (S1180). The control signal may be provided to the display apparatus 400.

The icons may be located on the first screen to form a certain curvature according to the curvature of the rim of the steering wheel and to form a part of a circle corresponding to the certain curvature. In this case, if the third input is received, the processor 270 may provide a control signal for moving the icons to the left or right according to the certain curvature by preset distances. The control signal may be provided to the display apparatus 400.

In some implementations, if the third input is received, the processor 270 may provide a control signal for moving the icons, not displaying the third icon among the plurality of icons on the display apparatus 400, and displaying a fourth icon not included in the plurality of icons on the display apparatus 400. The control signal may be provided to the display apparatus 400.

In some implementations, the first icon may be located at the center of the icons in a horizontal direction. In addition, the second icon may be located at a left of right side of the first icon. In this case, if the third input is received, the processor 270 may provide a control signal for locating the second icon at the center of the icons in the horizontal direction. The control signal may be provided to the display apparatus 400.

After the second icon is highlighted, the processor 270 may receive a second input (S1190).

The second input may be a user input received through the input unit 210.

The second input may be one of the first to eighth user inputs described above in relation to FIGS. 1 to 9D. Alternatively, the second input may be a combination of two or more of the first to eighth user inputs. Otherwise, the second input may be one of the first to fourth twist gesture inputs. Alternatively, the second input may be a combination of two or more of the first to fourth twist gesture inputs. Otherwise, the second input may be one of the first to fourth sweep gesture inputs. Alternatively, the second input may be a combination of two or more of the first to fourth sweep gesture inputs.

If the second input is received, the processor 270 may provide a control signal for selecting a second item corresponding to the second icon (S1195). The control signal may be provided to the display apparatus 400.

In some implementations, the first, second, and third inputs described above in relation to FIG. 11A may be different types of user inputs or gesture inputs.

FIG. 11B is a reference view for describing an operation for displaying a display screen to correspond to a gaze of the user.

The display apparatus 400 may be configured to implement a display screen on the windshield.

Referring to FIG. 11B, the vehicle 700 may include a gaze detection module for detecting the gaze of the user. The gaze detection module may include the internal camera 195c included inside the vehicle 700 and an internal image processor for processing an image obtained by the internal camera 195c.

The gaze detection module may detect the gaze of the user. For example, the internal camera 195c may capture an image of the face of the user. The internal image processor may detect pupils on the image captured by the internal camera 195c, using, for example, circular edge detection. The internal image processor may detect the gaze of the user based on motion of the detected pupils. The detected gaze information of the user may be transmitted to the controller 770, the in-vehicle input apparatus 200, or the display apparatus 400.

The display apparatus 400 may adjust the location of the display screen based on the received gaze information. The display screen may be implemented on a region of the windshield corresponding to the gaze of the user.

For example, if the gaze of the user is directed to first points 1110, the display apparatus 400 may control the display screen to be displayed on a peripheral region 1120 of the first points 1110.

Otherwise, if the gaze of the user is directed to second points 1130, the display apparatus 400 may control the display screen to be displayed on a peripheral region 1130 of the second points 1130.

In some implementations, the display screen may be controlled by the processor 270 of the in-vehicle input apparatus 200 or the controller 770. Alternatively, the display screen may be controlled by another processor included in the display apparatus 400.

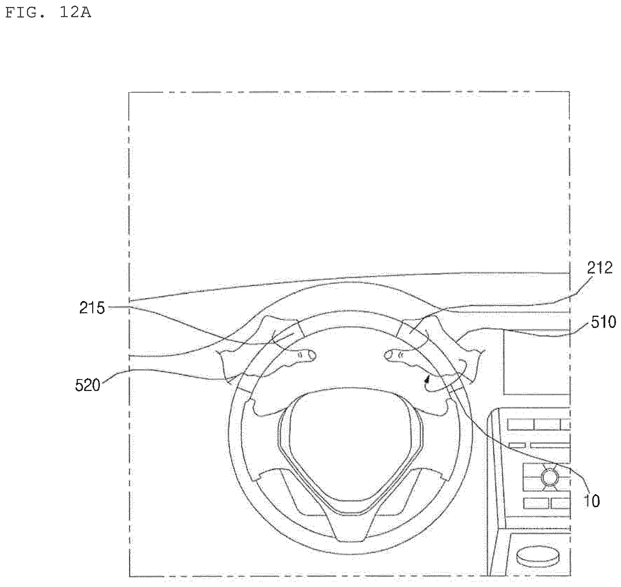

FIGS. 12A to 12H are reference views for describing an operation for receiving a first input.

The first input may be a user input for activating a first screen.

The first input may be a user input received through the input unit 210. The input unit 210 may include the first input unit 212 and the second input unit 215.

As illustrated in FIG. 12A, the first input may be a first user input. The first user input may be a user input generated based on a change in rotation or location of a contact region when the first hand 510 rotates in the first direction 10 while the first hand 510 is in contact with the first input unit 212 and thus the contact region is generated.

In some implementations, the first input may be a first twist gesture input. The first twist gesture input may be a gesture input generated based on a change in grip angle which occurs when the first hand 510 rotates in the first direction 10 due to motion of the wrist while the first input unit 212 is gripped by the first hand 510.

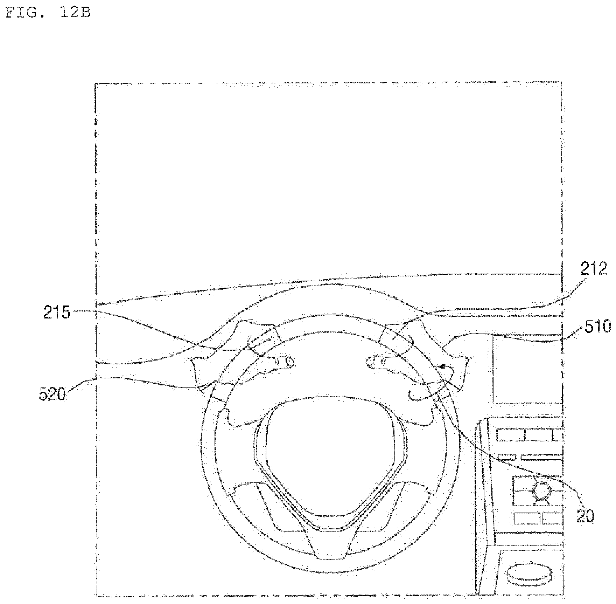

As illustrated in FIG. 12B, the first input may be a second user input. The second user input may be a user input generated based on a change in rotation or location of a contact region when the first hand 510 rotates in the second direction 20 while the first hand 510 is in contact with the first input unit 212 and thus the contact region is generated.

In some implementations, the first input may be a second twist gesture input. The second twist gesture input may be a gesture input generated based on a change in grip angle which occurs when the first hand 510 rotates in the second direction 20 due to motion of the wrist while the first input unit 212 is gripped by the first hand 510.

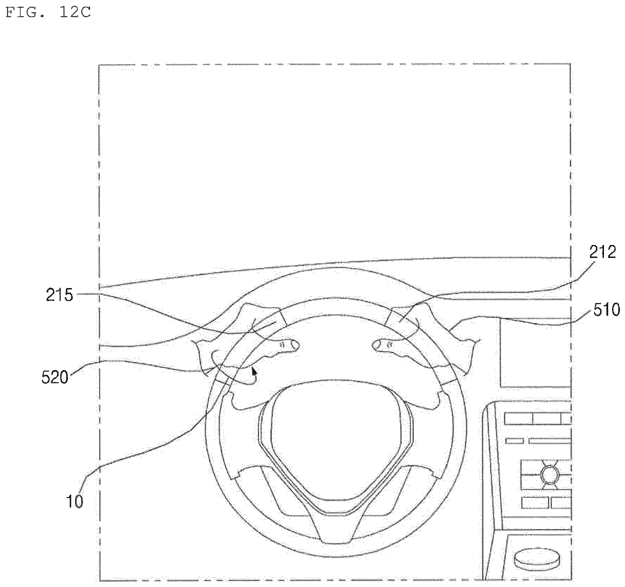

As illustrated in FIG. 12C, the first input may be a third user input. The third user input may be a user input generated based on a change in rotation or location of a contact region when the second hand 520 rotates in the first direction 10 while the second hand 520 is in contact with the second input unit 215 and thus the contact region is generated.

In some implementations, the first input may be a third twist gesture input. The third twist gesture input may be a gesture input generated based on a change in grip angle which occurs when the second hand 520 rotates in the first direction 10 due to motion of the wrist while the second input unit 215 is gripped by the second hand 520.

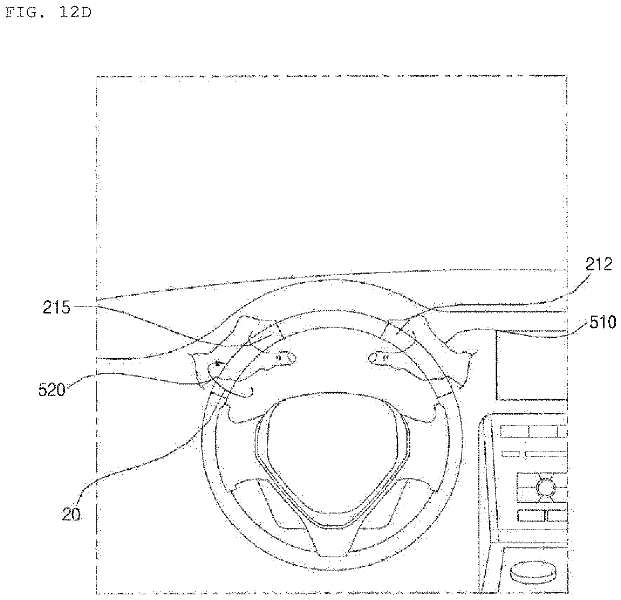

As illustrated in FIG. 12D, the first input may be a fourth user input. The fourth user input may be a user input generated based on a change in rotation or location of a contact region when the second hand 520 rotates in the second direction 20 while the second hand 520 is in contact with the second input unit 215 and thus the contact region is generated.

In some implementations, the first input may be a fourth twist gesture input. The fourth twist gesture input may be a gesture input generated based on a change in grip angle which occurs when the second hand 520 rotates in the second direction 20 due to motion of the wrist while the second input unit 215 is gripped by the second hand 520.

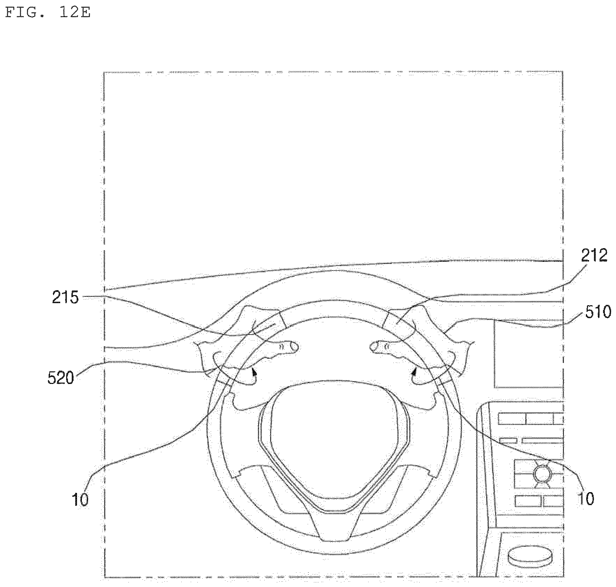

As illustrated in FIG. 12E, the first input may be an input generated based on a combination of the first and third user inputs.

In some implementations, the first input may be an input generated based on a combination of the first and third twist gesture inputs.

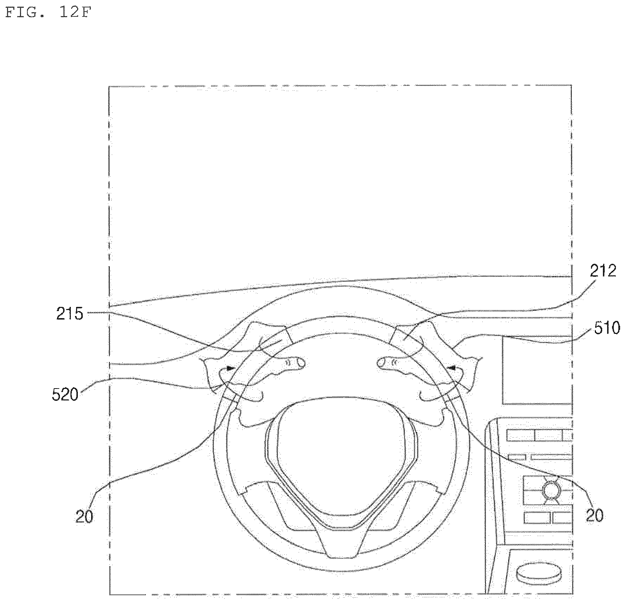

As illustrated in FIG. 12F, the first input may be an input generated based on a combination of the second and fourth user inputs.

In some implementations, the first input may be an input generated based on a combination of the second and fourth twist gesture inputs.

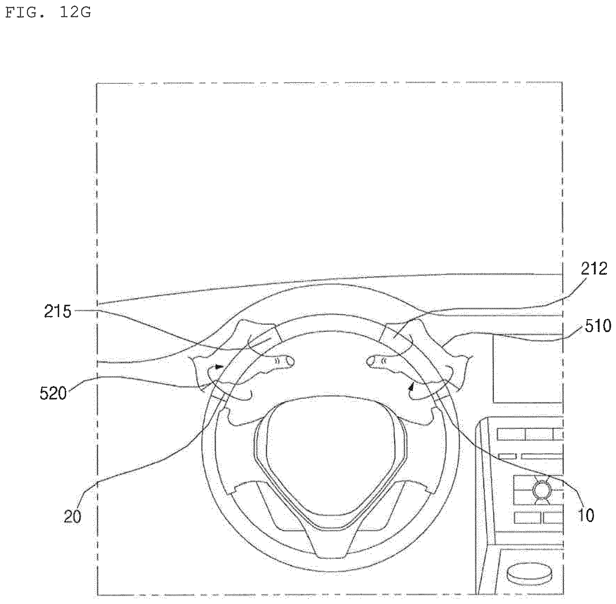

As illustrated in FIG. 12G, the first input may be an input generated based on a combination of the first and fourth user inputs.

In some implementations, the first input may be an input generated based on a combination of the first and fourth twist gesture inputs.

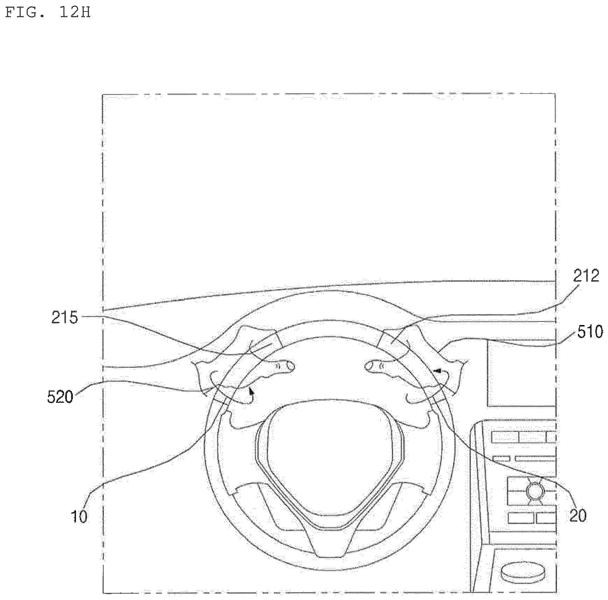

As illustrated in FIG. 12H, the first input may be an input generated based on a combination of the second and third user inputs.

In some implementations, the first input may be an input generated based on a combination of the second and third twist gesture inputs.

In some implementations, in FIGS. 12A to 12H, the first input may be an input based on any one or a combination of two or more of fifth to eighth user inputs. Alternatively, the first input may be an input based on any one or a combination of two or more of first to fourth sweep gesture inputs.

FIG. 13 is a reference view for describing an operation for displaying a first screen 1300.

The display apparatus 400 may be configured to implement a display screen on the windshield. FIG. 13 assumes 5 icons but the number of icons is not limited thereto.

Referring to FIG. 13, the processor 270 may provide a control signal to the display apparatus 400 to display the first screen 1300 on the display apparatus 400.

The display apparatus 400 may display the first screen 1300 based on the received control signal.

The first screen 1300 may include first to fifth icons 1311, 1312, 1313, 1314, and 1315.

The processor 270 may provide a control signal for locating the first to fifth icons 1311, 1312, 1313, 1314, and 1315 to form a certain curvature 1330 according to a curvature 1320 of the rim of the steering wheel, to the display apparatus 400. The display apparatus 400 may locate and display the first to fifth icons 1311, 1312, 1313, 1314, and 1315 to form the certain curvature 1330 according to the curvature 1320 of the rim of the steering wheel.

In some implementations, the processor 270 may provide a control signal for locating the first to fifth icons 1311, 1312, 1313, 1314, and 1315 to form the whole or a part of a circle corresponding to the certain curvature 1330, to the display apparatus 400. The display apparatus 400 may locate and display the first to fifth icons 1311, 1312, 1313, 1314, and 1315 to form the whole or a part of the circle.

In some implementations, the first icon 1311 may be located on a line extended from a vertical centerline 1350 of the rim of the steering wheel. In this case, the first icon 1311 may be located at the center of the first to fifth icons 1311, 1312, 1313, 1314, and 1315 in a horizontal direction.

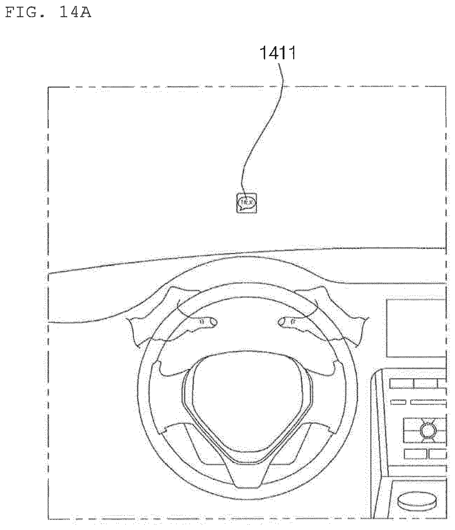

FIGS. 14A to 17 are reference views for describing an operation for animating and popping up a plurality of icons.

The processor 270 may provide a control signal for animating and popping up the icons included in a first screen, to the display apparatus 400. The display apparatus 400 may animate and pop up the icons based on the control signal.

FIGS. 14A to 14C are first reference views for describing an operation for popping up first to fifth icons 1411, 1412, 1413, 1414, and 1415 in a preset order.

The display apparatus 400 may be configured to implement a display screen on the windshield. FIGS. 14A to 14C assume 5 icons but the number of icons is not limited thereto.

The processor 270 may provide a control signal for popping up the first to fifth icons 1411, 1412, 1413, 1414, and 1415 included in a first screen, in the preset order, to the display apparatus 400. The display apparatus 400 may pop up the first to fifth icons 1411, 1412, 1413, 1414, and 1415 in the preset order based on the control signal.

If a first input is received, the display apparatus 400 displays the first icon 1411 as illustrated in FIG. 14A. The first icon 1411 may be located on a line extended from a vertical centerline of the rim of the steering wheel.

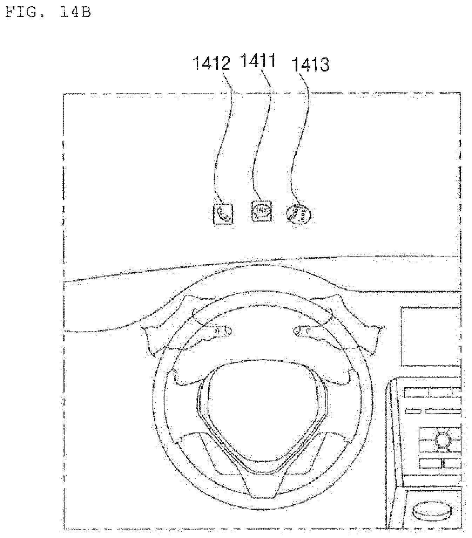

After the first icon 1411 is displayed, the display apparatus 400 may display the second icon 1412 at a bottom left side of the first icon 1411 as illustrated in FIG. 14B. In addition, the display apparatus 400 may display the third icon 1413 at a bottom right side of the first icon 1411. In this case, the second and third icons 1412 and 1413 may be simultaneously displayed. Furthermore, the second and third icons 1412 and 1413 may be provided to be horizontally symmetrical to each other with respect to the first icon 1411.

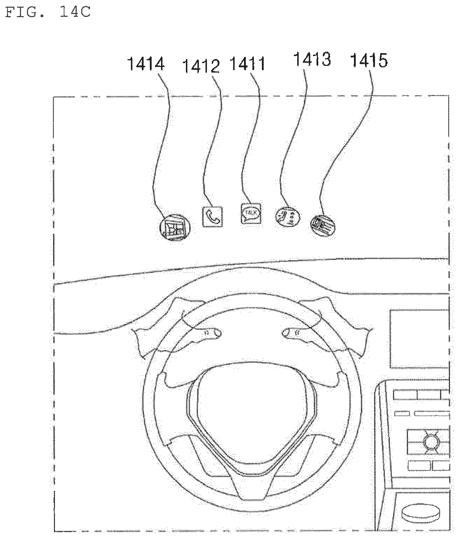

After the first to third icons 1411, 1412, and 1413 are displayed, the display apparatus 400 may display the fourth icon 1414 at a bottom left side of the second icon 1412 as illustrated in FIG. 14C. In addition, the display apparatus 400 may display the fifth icon 1415 at a bottom right side of the third icon 1413. In this case, the fourth and fifth icons 1414 and 1415 may be simultaneously displayed. Furthermore, the fourth and fifth icons 1414 and 1415 may be provided to be horizontally symmetrical to each other with respect to the first icon 1411.

The first to fifth icons 1411, 1412, 1413, 1414, and 1415 may be located to form the certain curvature 1330 according to the curvature of the rim of the steering wheel.

The first to fifth icons 1411, 1412, 1413, 1414, and 1415 may be located to be horizontally symmetrical to each other with respect to the first icon 1411.

In some implementations, the first to fifth icons 1411, 1412, 1413, 1414, and 1415 may be popped up based on a control signal received from the processor 270. Alternatively, the first to fifth icons 1411, 1412, 1413, 1414, and 1415 may be popped up based on a preset scheme.

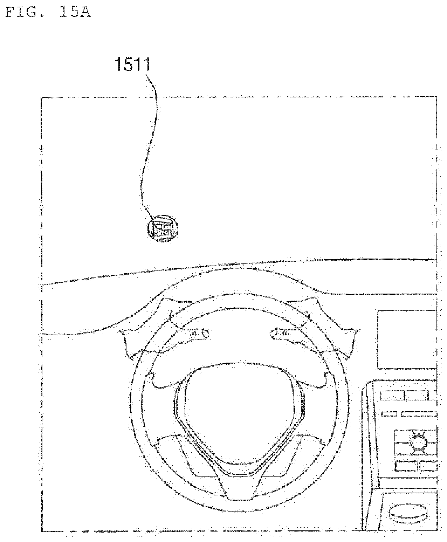

FIGS. 15A to 15E are second reference views for describing an operation for popping up first to fifth icons 1511, 1512, 1513, 1514, and 1515 in a preset order.

The display apparatus 400 may be configured to implement a display screen on the windshield. FIGS. 15A to 15E assume 5 icons but the number of icons is not limited thereto.

If a first input is received, the display apparatus 400 displays the first icon 1511 on a region of a screen as illustrated in FIG. 15A.

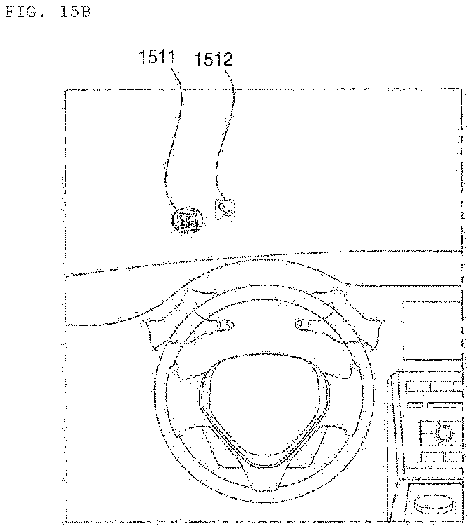

After the first icon 1511 is displayed, the display apparatus 400 displays the second icon 1512 at a top right side of the first icon 1511 as illustrated in FIG. 15B.

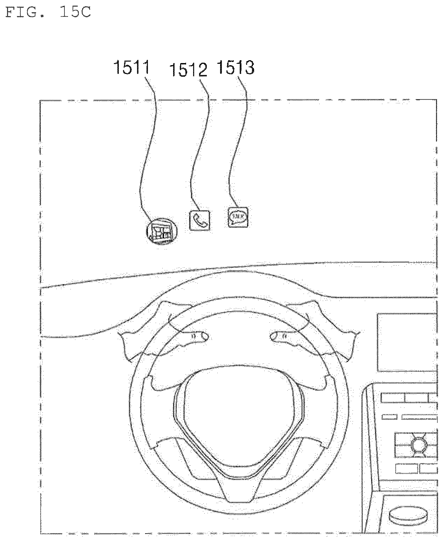

After the first and second icons 1511 and 1512 are displayed, the display apparatus 400 displays the third icon 1513 at a top right side of the second icon 1512 as illustrated in FIG. 15C.

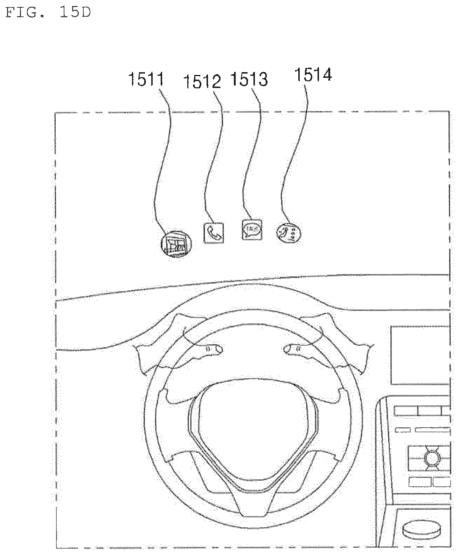

After the first to third icons 1511, 1512, and 1513 are displayed, the display apparatus 400 displays the fourth icon 1514 at a bottom right side of the third icon 1513 as illustrated in FIG. 15D.

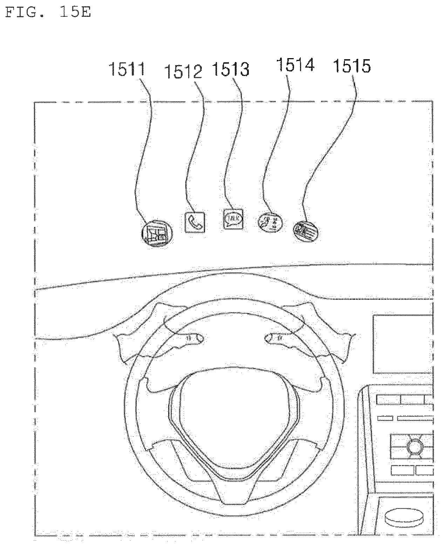

After the first to fourth icons 1511, 1512, 1513, and 1514 are displayed, the display apparatus 400 displays the fifth icon 1515 at a bottom right side of the fourth icon 1514 as illustrated in FIG. 15E.

The first to fifth icons 1511, 1512, 1513, 1514, and 1515 may be located to form the certain curvature 1330 according to the curvature of the rim of the steering wheel.

The first to fifth icons 1511, 1512, 1513, 1514, and 1515 may be located to be horizontally symmetrical to each other with respect to the third icon 1513.

In some implementations, the first to fifth icons 1511, 1512, 1513, 1514, and 1515 may be popped up based on a control signal received from the processor 270. Alternatively, the first to fifth icons 1511, 1512, 1513, 1514, and 1515 may be popped up based on a preset scheme.

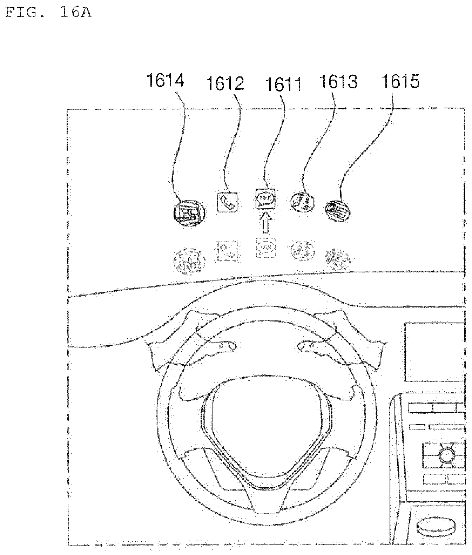

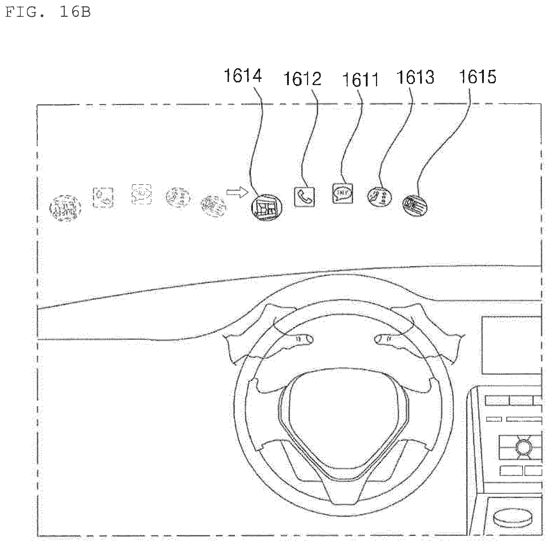

FIGS. 16A and 16B are reference view for describing an operation for moving and popping up all of first to fifth icons 1611, 1612, 1613, 1614, and 1615.

The display apparatus 400 may be configured to implement a display screen on the windshield. FIGS. 16A and 16B assume 5 icons but the number of icons is not limited thereto.

The processor 270 may provide a control signal for moving and popping up all of the first to fifth icons 1611, 1612, 1613, 1614, and 1615 included in a first screen, from one region to another region, to the display apparatus 400. The display apparatus 400 may move and pop up all of the first to fifth icons 1611, 1612, 1613, 1614, and 1615 from one region to another region based on the control signal.

As illustrated in FIG. 16A, if a first input is received, the display apparatus 400 may move all of the first to fifth icons 1611, 1612, 1613, 1614, and 1615 from a lower region to an upper region. Specifically, when the first to fifth icons 1611, 1612, 1613, 1614, and 1615 are not displayed on the screen, the display apparatus 400 may display and move the first to fifth icons 1611, 1612, 1613, 1614, and 1615 as time passes.

According to an implementation, the first icon 1611 initially appears on the screen to move upward from the bottom of the windshield, the second and third icons 1612 and 1613 subsequently appear on the screen to move upward from the bottom of the windshield, and then the fourth and fifth icons 1614 and 1615 subsequently appear on the screen to move upward from the bottom of the windshield. After all of the first to fifth icons 1611, 1612, 1613, 1614, and 1615 appear on the screen, the display apparatus 400 moves all of the first to fifth icons 1611, 1612, 1613, 1614, and 1615 upward to a certain region.

As illustrated in FIG. 16B, if a first input is received, the display apparatus 400 may move all of the first to fifth icons 1611, 1612, 1613, 1614, and 1615 from a left region to a right region. Specifically, when the first to fifth icons 1611, 1612, 1613, 1614, and 1615 are not displayed on the screen, the display apparatus 400 may display and move the first to fifth icons 1611, 1612, 1613, 1614, and 1615 as time passes.

According to an implementation, the fifth icon 1615 initially appears on the screen to move rightward from the left of the windshield, and then the third, first, second, and fourth icons 1613, 1611, 1612, and 1614 subsequently appear on the screen in listed order to move rightward from the left of the windshield. After all of the first to fifth icons 1611, 1612, 1613, 1614, and 1615 appear on the screen, the display apparatus 400 moves all of the first to fifth icons 1611, 1612, 1613, 1614, and 1615 rightward to a certain region.

In some implementations, in FIGS. 16A and 16B, the first to fifth icons 1611, 1612, 1613, 1614, and 1615 may appear to move from a right region to a left region. Alternatively, the first to fifth icons 1611, 1612, 1613, 1614, and 1615 may appear to move from an upper region to a lower region. Alternatively, the first to fifth icons 1611, 1612, 1613, 1614, and 1615 may appear to move in a diagonal direction.

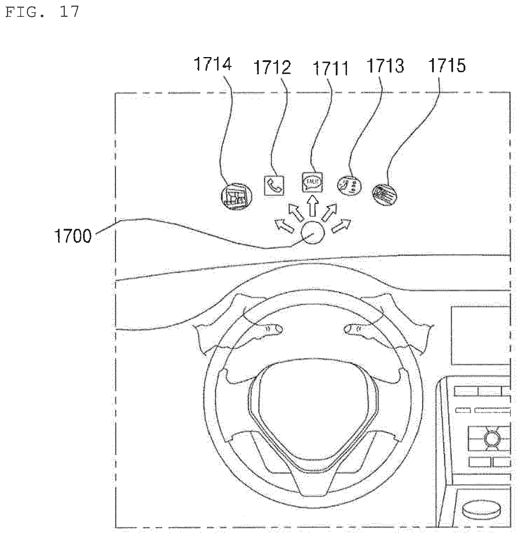

FIG. 17 is a reference view for describing an operation for moving and popping up each of first to fifth icons 1711, 1712, 1713, 1714, and 1715.

The display apparatus 400 may be configured to implement a display screen on the windshield. FIG. 17 assumes 5 icons but the number of icons is not limited thereto.

The processor 270 may provide a control signal for moving and popping up each of the first to fifth icons 1711, 1712, 1713, 1714, and 1715 included in a first screen, in a preset direction, to the display apparatus 400. The display apparatus 400 may move and pop up each of the first to fifth icons 1711, 1712, 1713, 1714, and 1715 in the preset direction based on the control signal.

As illustrated in FIG. 17, the display apparatus 400 may move each of the first to fifth icons 1711, 1712, 1713, 1714, and 1715 from a departure region 1700 to individual destination regions of the first to fifth icons 1711, 1712, 1713, 1714, and 1715.

The first to fifth icons 1711, 1712, 1713, 1714, and 1715 may be moved from the departure region 1700 to the individual destination regions of the first to fifth icons 1711, 1712, 1713, 1714, and 1715 at the same time or at different times.

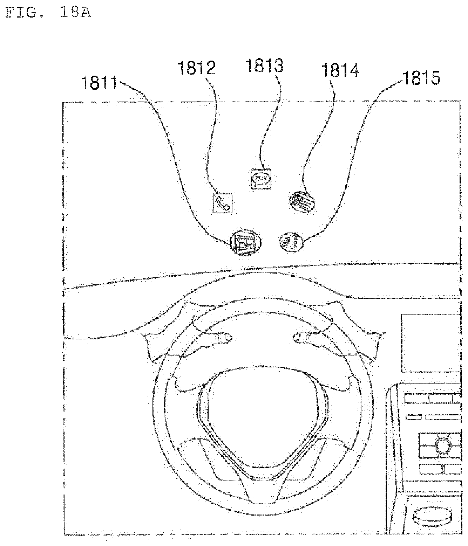

FIGS. 18A to 18F illustrate display locations of first to fifth icons 1811, 1812, 1813, 1814, and 1815.

The display apparatus 400 may be configured to implement a display screen on the windshield. FIGS. 18A to 18F assume 5 icons but the number of icons is not limited thereto.

As illustrated in FIG. 18A, the display apparatus 400 may locate and display the first to fifth icons 1811, 1812, 1813, 1814, and 1815 to form the whole or a part of a circle.

According to an implementation, the display apparatus 400 may locate and display the first to fifth icons 1811, 1812, 1813, 1814, and 1815 to form a certain curvature according to the curvature of the rim of the steering wheel.

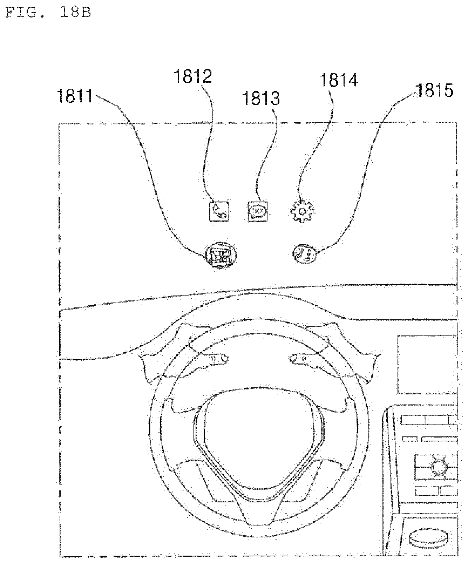

As illustrated in FIG. 18B, the display apparatus 400 may locate and display the first to fifth icons 1811, 1812, 1813, 1814, and 1815 to form the whole or a part of a rectangle.

In some implementations, although the first to fifth icons 1811, 1812, 1813, 1814, and 1815 are located to form a rectangle in FIG. 18B, the first to fifth icons 1811, 1812, 1813, 1814, and 1815 may also be located to form another polygon.

The display apparatus 400 may locate and display the first to fifth icons 1811, 1812, 1813, 1814, and 1815 to be horizontally or vertically symmetrical to each other.

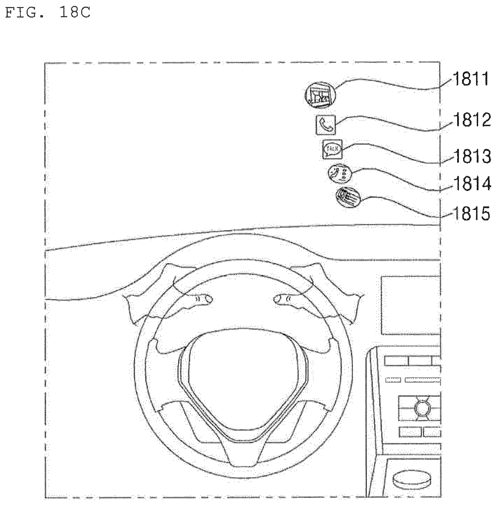

As illustrated in FIG. 18C, the display apparatus 400 may locate and display the first to fifth icons 1811, 1812, 1813, 1814, and 1815 to form a vertical line.

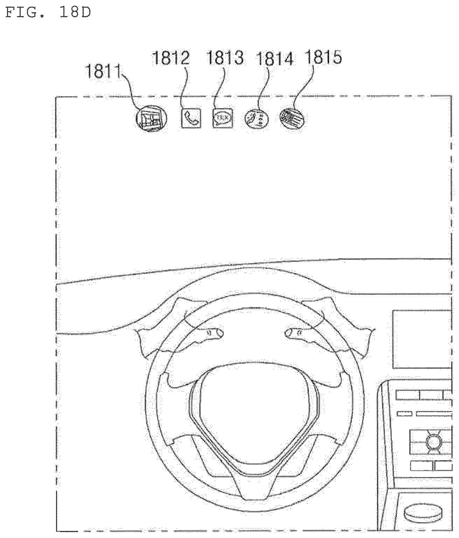

As illustrated in FIG. 18D, the display apparatus 400 may locate and display the first to fifth icons 1811, 1812, 1813, 1814, and 1815 to form a horizontal line.

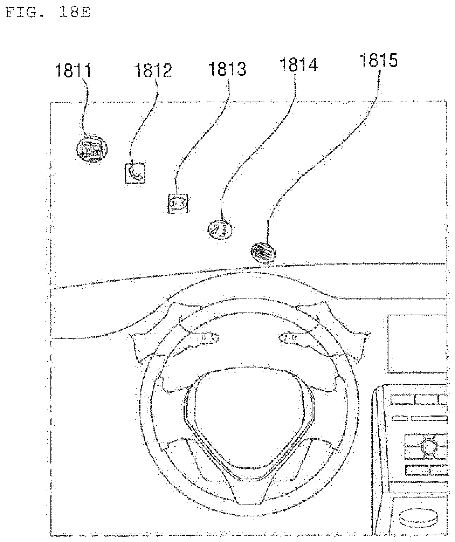

As illustrated in FIG. 18E, the display apparatus 400 may locate and display the first to fifth icons 1811, 1812, 1813, 1814, and 1815 to form a diagonal line.

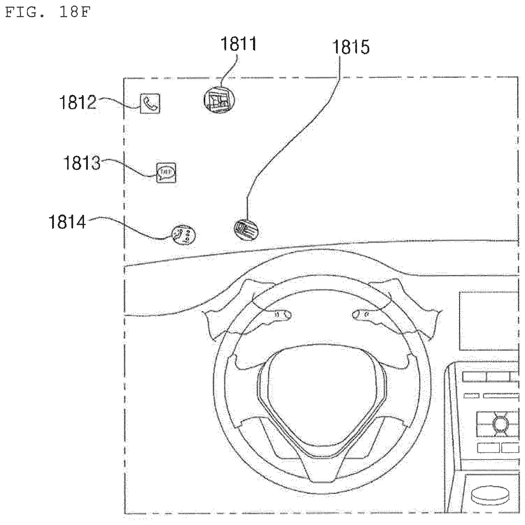

As illustrated in FIG. 18F, the display apparatus 400 may locate and display the first to fifth icons 1811, 1812, 1813, 1814, and 1815 along the edge of the windshield.

In some implementations, the first to fifth icons 1811, 1812, 1813, 1814, and 1815 may be located based on a control signal received from the processor 270. Alternatively, the first to fifth icons 1811, 1812, 1813, 1814, and 1815 may be located based on a preset scheme.

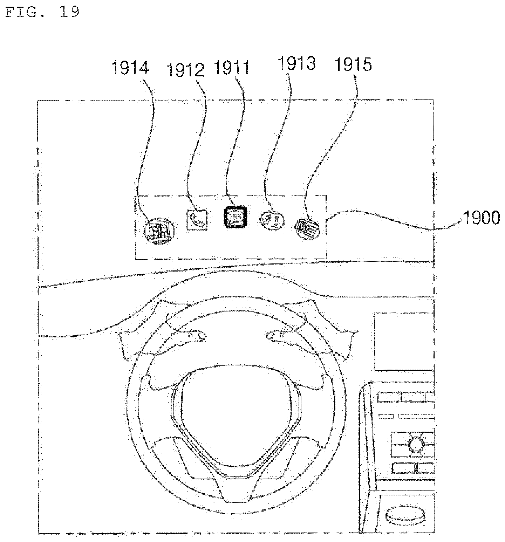

FIG. 19 is a reference view for describing an operation for highlighting a first icon 1911.

Referring to FIG. 19, after the first screen 1900 is displayed, the display apparatus 400 may highlight the first icon 1911.

For example, the display apparatus 400 may display the first icon 1911 with a different color or a different brightness level from second to fifth icons 1912, 1913, 1914, and 1915 other than the first icon 1911 among a plurality of icons.

For example, the display apparatus 400 may display the edge of the first icon 1911 with a different color from the second to fifth icons 1912, 1913, 1914, and 1915 other than the first icon 1911 among the plurality of icons.

For example, the display apparatus 400 may dim the second to fifth icons 1912, 1913, 1914, and 1915 other than the first icon 1911 among the plurality of icons.

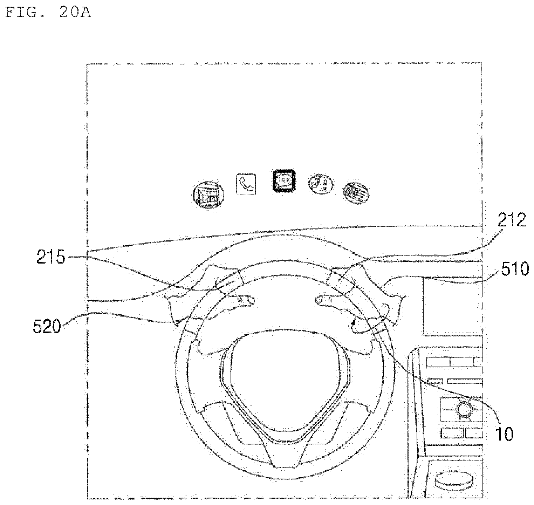

FIGS. 20A to 20H are reference views for describing an operation for receiving a second input.

The second input may be a user input for selecting a first item corresponding to a first icon.

The second input may be a user input received through the input unit 210. The input unit 210 may include the first input unit 212 and the second input unit 215.

As illustrated in FIG. 20A, the second input may be a first user input. The first user input may be a user input generated based on a change in rotation or location of a contact region when the first hand 510 rotates in the first direction 10 while the first hand 510 is in contact with the first input unit 212 and thus the contact region is generated.

In some implementations, the second input may be a first twist gesture input. The first twist gesture input may be a gesture input generated based on a change in grip angle which occurs when the first hand 510 rotates in the first direction 10 due to motion of the wrist while the first input unit 212 is gripped by the first hand 510.

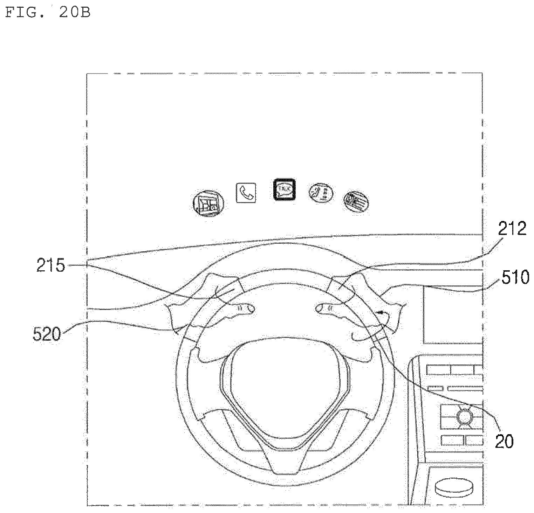

As illustrated in FIG. 20B, the second input may be a second user input. The second user input may be a user input generated based on a change in rotation or location of a contact region when the first hand 510 rotates in the second direction 20 while the first hand 510 is in contact with the first input unit 212 and thus the contact region is generated.

In some implementations, the second input may be a second twist gesture input. The second twist gesture input may be a gesture input generated based on a change in grip angle which occurs when the first hand 510 rotates in the second direction 20 due to motion of the wrist while the first input unit 212 is gripped by the first hand 510.

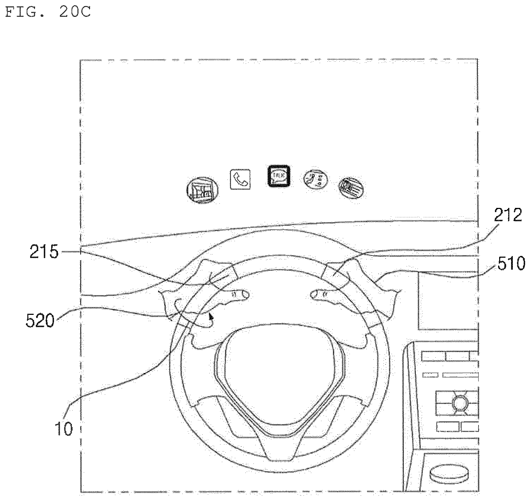

As illustrated in FIG. 20C, the second input may be a third user input. The third user input may be a user input generated based on a change in rotation or location of a contact region when the second hand 520 rotates in the first direction 10 while the second hand 520 is in contact with the second input unit 215 and thus the contact region is generated.

In some implementations, the second input may be a third twist gesture input. The third twist gesture input may be a gesture input generated based on a change in grip angle which occurs when the second hand 520 rotates in the first direction 10 due to motion of the wrist while the second input unit 215 is gripped by the second hand 520.

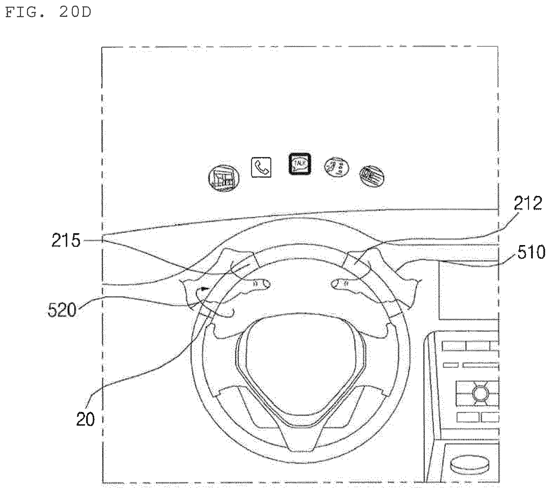

As illustrated in FIG. 20D, the second input may be a fourth user input. The fourth user input may be a user input generated based on a change in rotation or location of a contact region when the second hand 520 rotates in the second direction 20 while the second hand 520 is in contact with the second input unit 215 and thus the contact region is generated.

In some implementations, the second input may be a fourth twist gesture input. The fourth twist gesture input may be a gesture input generated based on a change in grip angle which occurs when the second hand 520 rotates in the second direction 20 due to motion of the wrist while the second input unit 215 is gripped by the second hand 520.

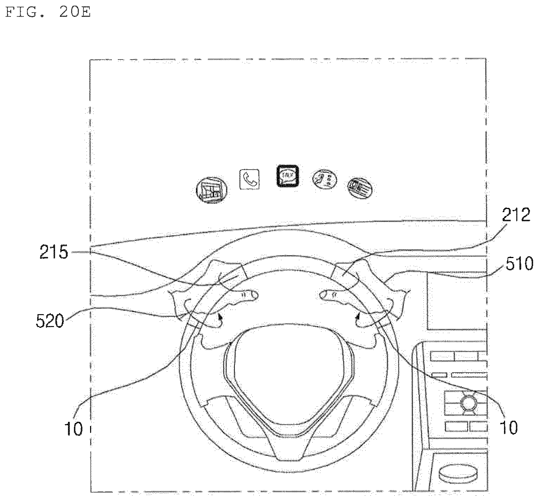

As illustrated in FIG. 20E, the second input may be an input generated based on a combination of the first and third user inputs.

In some implementations, the second input may be an input generated based on a combination of the first and third twist gesture inputs.

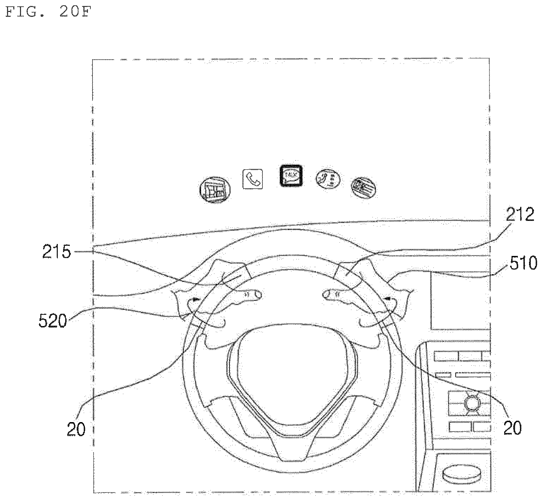

As illustrated in FIG. 20F, the second input may be an input generated based on a combination of the second and fourth user inputs.

In some implementations, the second input may be an input generated based on a combination of the second and fourth twist gesture inputs.

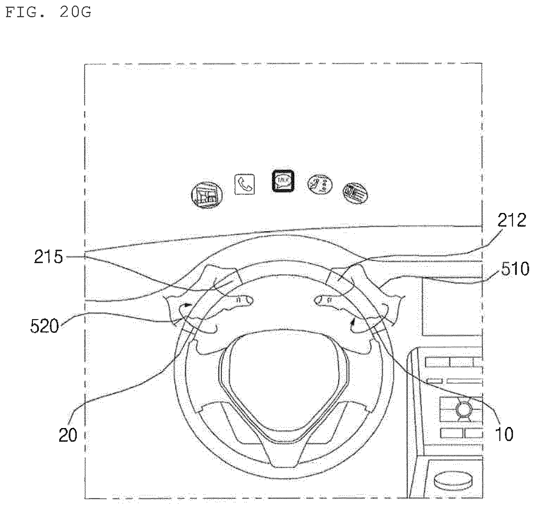

As illustrated in FIG. 20G, the second input may be an input generated based on a combination of the first and fourth user inputs.

In some implementations, the second input may be an input generated based on a combination of the first and fourth twist gesture inputs.

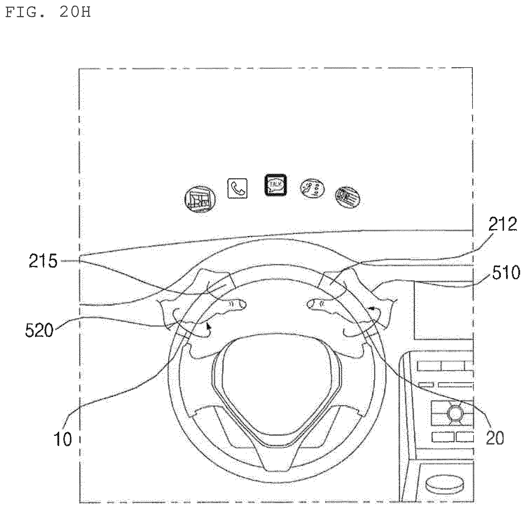

As illustrated in FIG. 20H, the second input may be an input generated based on a combination of the second and third user inputs.

In some implementations, the second input may be an input generated based on a combination of the second and third twist gesture inputs.

In some implementations, in FIGS. 20A to 20H, the second input may be an input based on any one or a combination of two or more of fifth to eighth user inputs. Alternatively, the second input may be an input based on any one or a combination of two or more of first to fourth sweep gesture inputs.

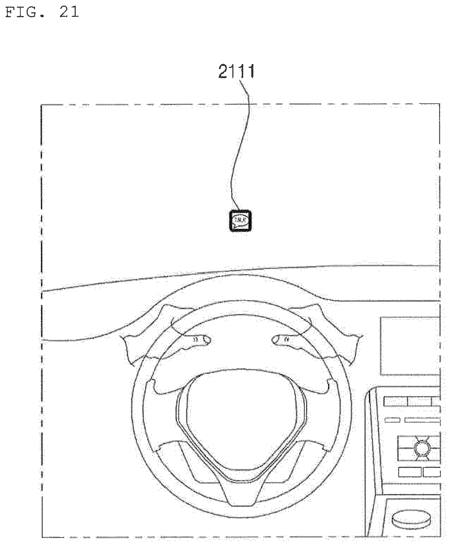

FIG. 21 is a reference view for describing an operation for selecting a first item.

Referring to FIG. 21, if a second input is input, the processor 270 may provide a control signal for selecting the first item corresponding to a highlighted first icon 2111.

If the first item has a sub list, when the first item is selected, the display apparatus 400 may display the sub list.

For example, if the first item is a phone item, when the first item is selected, the display apparatus 400 may display a sub list including dial, contact list, call logs, speed dial, and settings items. In this case, the sub list may be displayed in the form of icons.

For example, if the first item is a message item, when the first item is selected, the display apparatus 400 may display a sub list including view message, create message, and settings items. In this case, the sub list may be displayed in the form of icons.

For example, if the first item is an air-conditioner item, when the first item is selected, the display apparatus 400 may display a sub list including auto, cooler, heater, and settings items. In this case, the sub list may be displayed in the form of icons.

For example, if the first item is an entertainment item, when the first item is selected, the display apparatus 400 may display a sub list including radio, play files, streaming, connect to mobile, and settings items. In this case, the sub list may be displayed in the form of icons.

For example, if the first item is a navigator item, when the first item is selected, the display apparatus 400 may display a sub list including search destination, traffic information, select route, oil price information, location information, and settings items. The sub list may be displayed in the form of icons.

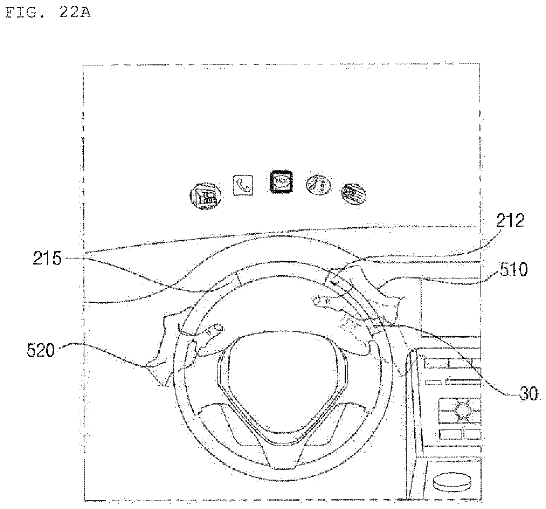

FIGS. 22A to 22D are first reference views for describing an operation for receiving a third input.

As illustrated in FIG. 22A, the third input may be a fifth user input. The fifth user input may be a user input generated based on a change in rotation or location of a contact region when the first hand 510 rotates in the third direction 30 according to the curvature of the rim of the steering wheel while the first hand 510 is in contact with the first input unit 212 and thus the contact region is generated.

In some implementations, the third input may be a first sweep gesture input. The first sweep gesture input may be a gesture input generated based on a change in grip location which occurs when the first hand 510 rotates in the third direction 30 while the first input unit 212 is gripped by the first hand 510.

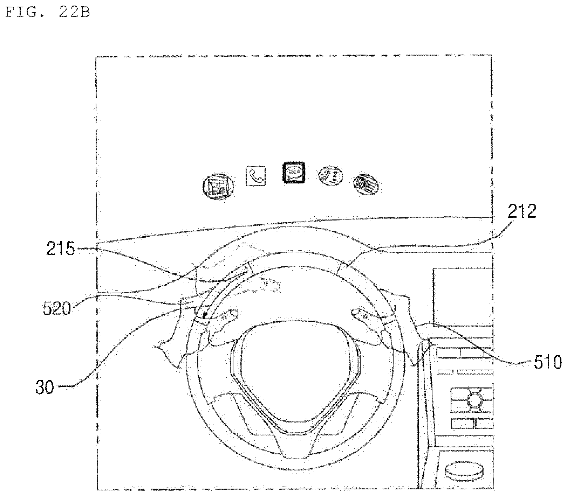

As illustrated in FIG. 22B, the third input may be a seventh user input. The seventh user input may be a user input generated based on a change in rotation or location of a contact region when the second hand 520 rotates in the third direction 30 according to the curvature of the rim of the steering wheel while the second hand 520 is in contact with the second input unit 215 and thus the contact region is generated.

In some implementations, the third input may be a third sweep gesture input. The third sweep gesture input may be a gesture input generated based on a change in grip location which occurs when the second hand 520 rotates in the third direction 30 while the second input unit 215 is gripped by the second hand 520.

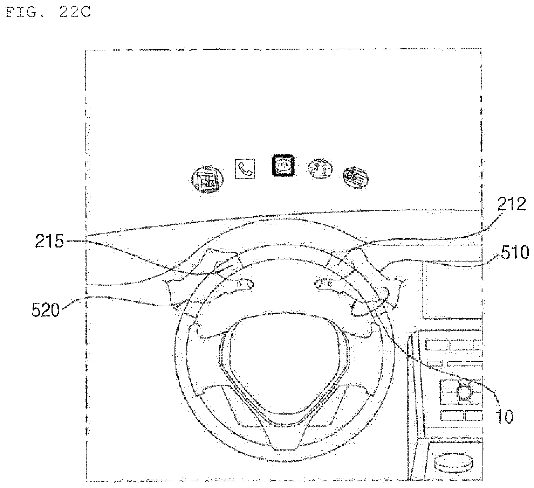

As illustrated in FIG. 22C, the third input may be a first user input. The first user input may be a user input generated based on a change in rotation or location of a contact region when the first hand 510 rotates in the first direction 10 while the first hand 510 is in contact with the first input unit 212 and thus the contact region is generated.

In some implementations, the third input may be a first twist gesture input. The first twist gesture input may be a gesture input generated based on a change in grip angle which occurs when the first hand 510 rotates in the first direction 10 due to motion of the wrist while the first input unit 212 is gripped by the first hand 510.

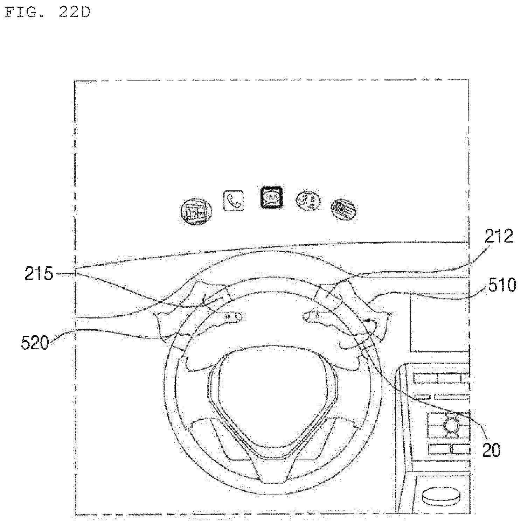

As illustrated in FIG. 22D, the third input may be a second user input. The second user input may be a user input generated based on a change in rotation or location of a contact region when the first hand 510 rotates in the second direction 20 while the first hand 510 is in contact with the first input unit 212 and thus the contact region is generated.

In some implementations, the third input may be a second twist gesture input. The second twist gesture input may be a gesture input generated based on a change in grip angle which occurs when the first hand 510 rotates in the second direction 20 due to motion of the wrist while the first input unit 212 is gripped by the first hand 510.

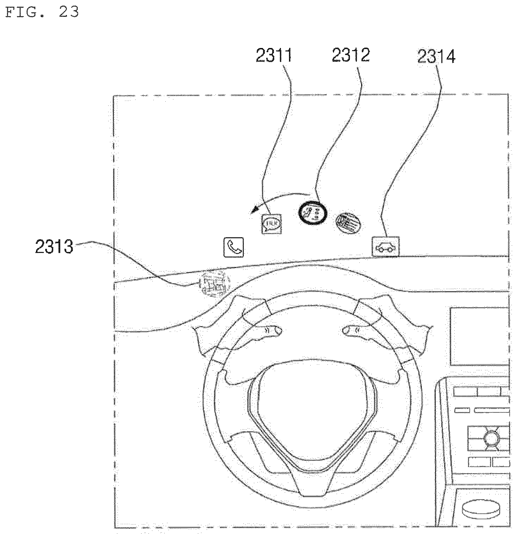

FIG. 23 is a first reference view for describing an operation for switching a highlighted icon.

As illustrated in FIG. 23, if a third input is received, the processor 270 may provide a control signal for switching the highlighted icon, to the display apparatus 400.

Specifically, if the third input described above in relation to FIGS. 22A to 22D is received, the processor 270 may provide a control signal for switching the highlighted icon from a first icon 2311 to a second icon 2312.

In some implementations, when a plurality of icons are located to form a certain curvature according to the curvature of the rim of the steering wheel, if the third input is received, the processor 270 may provide a control signal for moving the icons leftward according to the certain curvature by a preset distance, to the display apparatus 400. The display apparatus 400 may move the icons leftward according to the certain curvature by the preset distance.

In this case, the processor 270 may provide a control signal for not displaying a third icon 2313 among the plurality of displayed icons, on the screen, to the display apparatus 400. In addition, the processor 270 may provide a control signal for allowing a fourth icon 2314 not included in the plurality of displayed icons, to appear, to the display apparatus 400. The display apparatus 400 may allow the third icon 2313 to disappear from the screen, and allow the fourth icon 2314 to appear.

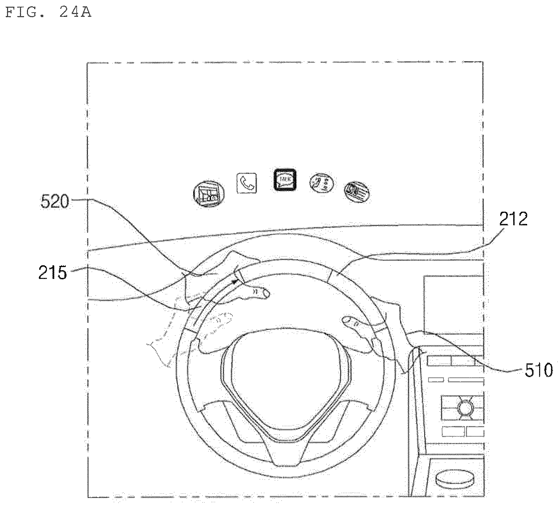

FIGS. 24A to 24D are second reference views for describing an operation for receiving a third input.

As illustrated in FIG. 24A, the third input may be an eighth user input. The eighth user input may be a user input generated based on a change in rotation or location of a contact region when the second hand 520 rotates in the fourth direction 20 according to the curvature of the rim of the steering wheel while the second hand 520 is in contact with the second input unit 215 and thus the contact region is generated.

In some implementations, the third input may be a fourth sweep gesture input. The fourth sweep gesture input may be a gesture input generated based on a change in grip location which occurs when the second hand 520 rotates in the fourth direction 20 while the second input unit 215 is gripped by the second hand 520.

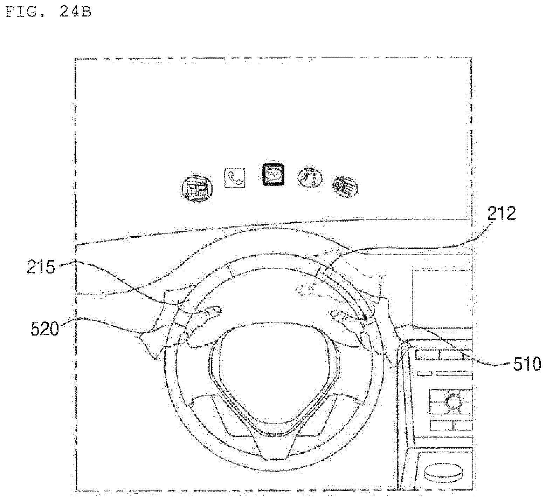

As illustrated in FIG. 24B, the third input may be a sixth user input. The sixth user input may be a user input generated based on a change in rotation or location of a contact region when the first hand 510 rotates in the fourth direction 20 according to the curvature of the rim of the steering wheel while the first hand 510 is in contact with the first input unit 212 and thus the contact region is generated.

In some implementations, the third input may be a second sweep gesture input. The second sweep gesture input may be a gesture input generated based on a change in grip location which occurs when the first hand 510 rotates in the fourth direction 20 while the first input unit 212 is gripped by the first hand 510.

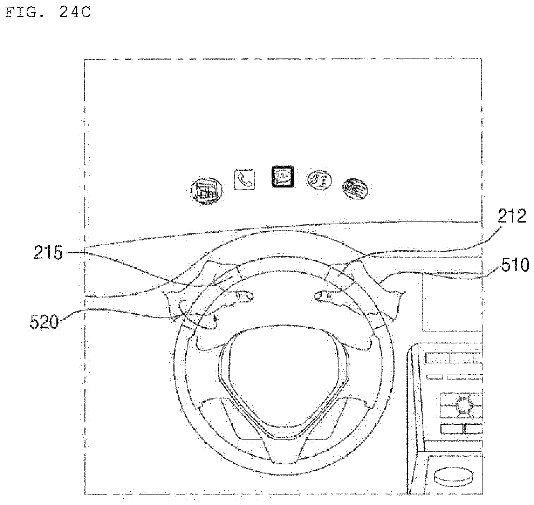

As illustrated in FIG. 24C, the third input may be a third user input. The third user input may be a user input generated based on a change in rotation or location of a contact region when the second hand 520 rotates in the first direction 10 while the second hand 520 is in contact with the second input unit 215 and thus the contact region is generated.

In some implementations, the third input may be a third twist gesture input. The third twist gesture input may be a gesture input generated based on a change in grip angle which occurs when the second hand 520 rotates in the first direction 10 due to motion of the wrist while the second input unit 215 is gripped by the second hand 520.

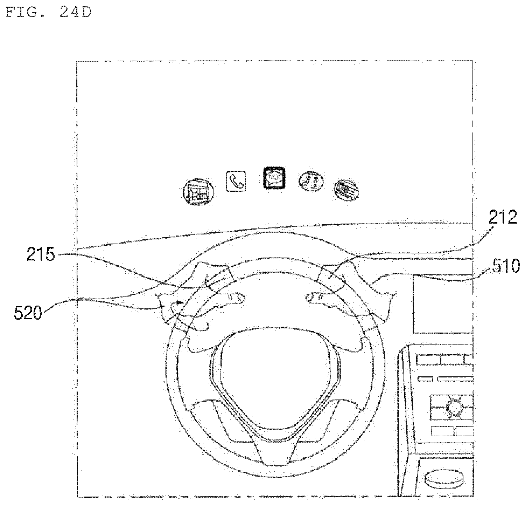

As illustrated in FIG. 24D, the third input may be a fourth user input. The fourth user input may be a user input generated based on a change in rotation or location of a contact region when the second hand 520 rotates in the second direction 20 while the second hand 520 is in contact with the second input unit 215 and thus the contact region is generated.

In some implementations, the third input may be a fourth twist gesture input. The fourth twist gesture input may be a gesture input generated based on a change in grip angle which occurs when the second hand 520 rotates in the second direction 20 due to motion of the wrist while the second input unit 215 is gripped by the second hand 520.

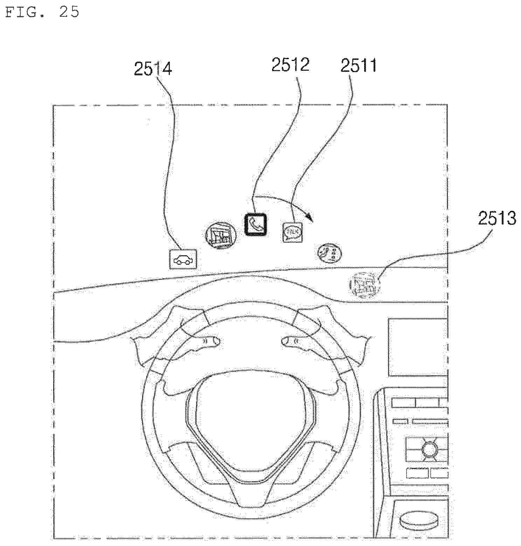

FIG. 25 is a second reference view for describing an operation for switching a highlighted icon.

As illustrated in FIG. 25, if a third input is received, the processor 270 may provide a control signal for switching the highlighted icon, to the display apparatus 400.

Specifically, if the third input described above in relation to FIGS. 24A to 24D is received, the processor 270 may provide a control signal for switching the highlighted icon from a first icon 2511 to a second icon 2512.

In some implementations, when a plurality of icons are located to form a certain curvature according to the curvature of the rim of the steering wheel, if the third input is received, the processor 270 may provide a control signal for moving the icons rightward according to the certain curvature by a preset distance, to the display apparatus 400. The display apparatus 400 may move the icons rightward according to the certain curvature by the preset distance.

In this case, the processor 270 may provide a control signal for not displaying a third icon 2513 among the plurality of displayed icons, on the screen, to the display apparatus 400. In addition, the processor 270 may provide a control signal for allowing a fourth icon 2514 not included in the plurality of displayed icons, to appear, to the display apparatus 400. The display apparatus 400 may allow the third icon 2513 to disappear from the screen, and allow the fourth icon 2514 to appear.

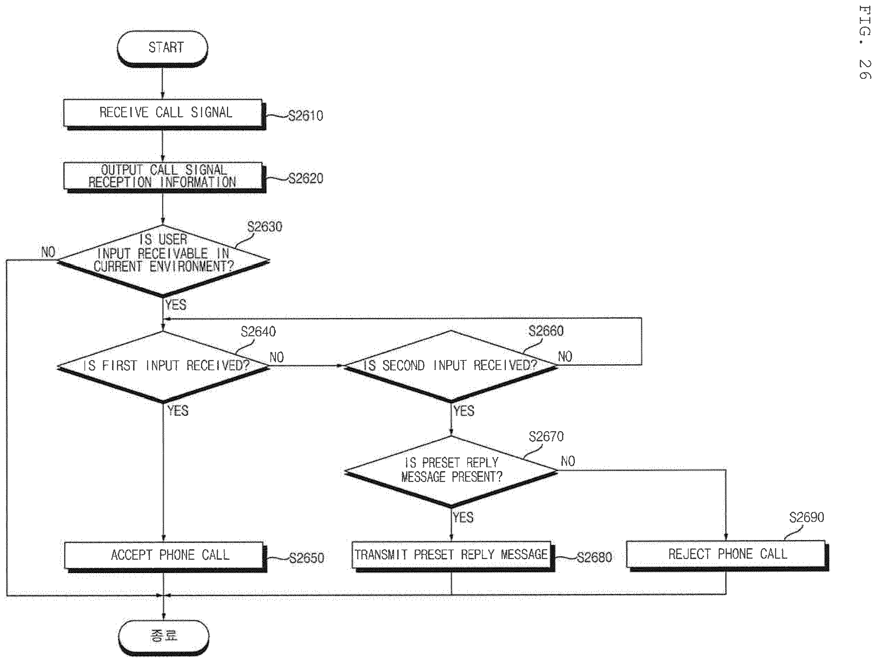

FIG. 26 is a flowchart for describing operation of the vehicle 700 when a call signal is received.

Referring to FIG. 26, if the call signal is received (S2610), the display apparatus 400 may output call signal reception information (S2620).

The vehicle 700 may include a communication module for enabling a phone call from an external apparatus. In this case, if the call signal is received from the external apparatus, the call signal reception information may be output on the display apparatus 400.

Alternatively, the vehicle 700 may be connected to the mobile device 600 of the user. The vehicle 700 may include the short range communication module 713 (see FIG. 10A) for enabling short range communication with the mobile device 600. If the mobile device 600 receives a call signal from another mobile device, the display apparatus 400 may display call signal reception information.

After the call signal reception information is output, the processor 270 may determine whether a user input is receivable in a current environment (S2630).

The processor 270 may receive vehicle speed information or steering wheel rotation angle information through the interface 280 from the sensing unit 760. The processor 270 may determine whether a user input is receivable in the current environment, based on the vehicle speed information or the steering wheel rotation angle information.

If it is determined that a user input is receivable when a vehicle speed is equal to or greater than a preset speed or when a steering wheel rotation angle is equal to or greater than a preset angle, safe driving may not be achieved. Accordingly, safe driving may be achieved by blocking reception of a user input under the above condition.

If a user input is receivable in the current environment, the processor 270 may receive a first input (S2640).

The first input may be a user input received through the input unit 210.

The first input may be one of the first to eighth user inputs described above in relation to FIGS. 1 to 9D. Alternatively, the first input may be a combination of two or more of the first to eighth user inputs. Otherwise, the first input may be one of the first to fourth twist gesture inputs. Alternatively, the first input may be a combination of two or more of the first to fourth twist gesture inputs. Otherwise, the first input may be one of the first to fourth sweep gesture inputs. Alternatively, the first input may be a combination of two or more of the first to fourth sweep gesture inputs.

If the first input is received, the processor 270 may provide a control signal for accepting a phone call from the other mobile device (S2650). In this case, the control signal may be transmitted to the communication unit 710 of the vehicle 700. Since the vehicle 700 and the mobile device 600 are interconnected, the user may accept the phone call from the other mobile device using the input unit 720 and the output unit 740 of the vehicle 700.

If the first input is not received in step S2640, the processor 270 may receive a second input (S2660).

The second input may be a user input received through the input unit 210.

The second input may be one of the first to eighth user inputs described above in relation to FIGS. 1 to 9D. Alternatively, the second input may be a combination of two or more of the first to eighth user inputs. Otherwise, the second input may be one of the first to fourth twist gesture inputs. Alternatively, the second input may be a combination of two or more of the first to fourth twist gesture inputs. Otherwise, the second input may be one of the first to fourth sweep gesture inputs. Alternatively, the second input may be a combination of two or more of the first to fourth sweep gesture inputs.

If a preset reply message is present (S2670), when the second input is received, the processor 270 may provide a control signal for transmitting the preset reply message to the other mobile device (S2680). In this case, the control signal may be transmitted to the communication unit 710 of the vehicle 700.

If the preset reply message is not present (S2670), when the second input is received, the processor 270 may provide a control signal for rejecting the phone call (S2690). In this case, the control signal may be transmitted to the communication unit 710 of the vehicle 700.

In some implementations, the first and second inputs described above in relation to FIG. 26 may be different types of user inputs or gesture inputs.

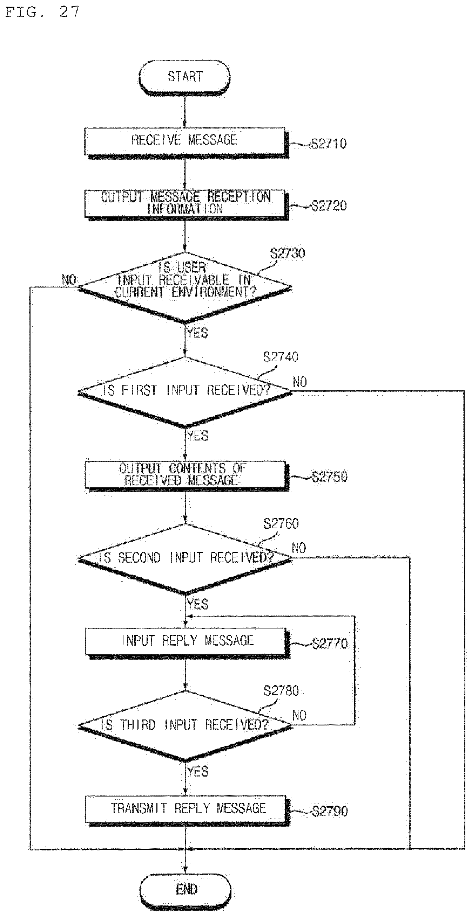

FIG. 27 is a flowchart for describing operation of the vehicle 700 when a message is received.

Referring to FIG. 27, if the message is received (S2710), the display apparatus 400 may output message reception information (S2720).

Here, the message may include a text message, an instant message, a social network service (SNS) message, or an email received by the mobile device 600 of the user.

The vehicle 700 may include a communication module for enabling message exchange with an external apparatus. In this case, if the message is received from the external apparatus, the message reception information may be output on the display apparatus 400.

Alternatively, the vehicle 700 may be connected to the mobile device 600 of the user. The vehicle 700 may include the short range communication module 713 (see FIG. 10A) for enabling short range communication with the mobile device 600. If the mobile device 600 receives a message from another mobile device, the display apparatus 400 may display message reception information.

After the message reception information is output, the processor 270 may determine whether a user input is receivable in a current environment (S2730).

The processor 270 may receive vehicle speed information or steering wheel rotation angle information through the interface 280 from the sensing unit 760. The processor 270 may determine whether a user input is receivable in the current environment, based on the vehicle speed information or the steering wheel rotation angle information.

If it is determined that a user input is receivable when a vehicle speed is equal to or greater than a preset speed or when a steering wheel rotation angle is equal to or greater than a preset angle, safe driving may not be achieved. Accordingly, safe driving may be achieved by blocking reception of a user input under the above condition.

If a user input is receivable in the current environment, the processor 270 may receive a first input (S2740).

The first input may be a user input received through the input unit 210.

The first input may be one of the first to eighth user inputs described above in relation to FIGS. 1 to 9D. Alternatively, the first input may be a combination of two or more of the first to eighth user inputs. Otherwise, the first input may be one of the first to fourth twist gesture inputs. Alternatively, the first input may be a combination of two or more of the first to fourth twist gesture inputs. Otherwise, the first input may be one of the first to fourth sweep gesture inputs. Alternatively, the first input may be a combination of two or more of the first to fourth sweep gesture inputs.

If the first input is received, the processor 270 may provide a control signal for outputting the contents of the received message (S2750). Here, the control signal may be provided to the display apparatus 400 or the sound output unit 742 (see FIG. 10A).

The processor 270 may provide a control signal for visually outputting the contents of the received message through the display apparatus 400.

The processor 270 may provide a control signal for audibly outputting the contents of the received message through the sound output unit 742 (see FIG. 10A). The sound output unit 742 (see FIG. 10A) may output the received message as voice.

After the contents of the received message are output, the processor 270 may receive a second input (S2760).

The second input may be a user input received through the input unit 210.

The second input may be one of the first to eighth user inputs described above in relation to FIGS. 1 to 9D. Alternatively, the second input may be a combination of two or more of the first to eighth user inputs. Otherwise, the second input may be one of the first to fourth twist gesture inputs. Alternatively, the second input may be a combination of two or more of the first to fourth twist gesture inputs. Otherwise, the second input may be one of the first to fourth sweep gesture inputs. Alternatively, the second input may be a combination of two or more of the first to fourth sweep gesture inputs.

If the second input is received, the processor 270 may receive a reply message input by the user (S2770).

The reply message input by the user may be received through the third input unit 220 (see FIG. 3B). The third input unit 220 (see FIG. 3B) may convert an audio input into an electrical signal and transmit the electrical signal to the processor 270.

As the second input is received, the processor 270 may receive a voice message input as the reply message by the user, through the third input unit 220 (see FIG. 3B). The processor 270 may provide a control signal for converting the voice message into text. The voice message may be converted into text through a speech to text (STT) module. In some implementations, the STT module may be included in the processor 270, the processor 405 (see FIG. 10B) of the display apparatus 400, or the controller 770.

After the reply message is input, the processor 270 may receive a third input (S2780).

The third input may be a user input received through the input unit 210.

The third input may be one of the first to eighth user inputs described above in relation to FIGS. 1 to 9D. Alternatively, the third input may be a combination of two or more of the first to eighth user inputs. Otherwise, the third input may be one of the first to fourth twist gesture inputs. Alternatively, the third input may be a combination of two or more of the first to fourth twist gesture inputs. Otherwise, the third input may be one of the first to fourth sweep gesture inputs. Alternatively, the third input may be a combination of two or more of the first to fourth sweep gesture inputs.

If the third input is received, the processor 270 may provide a control signal for transmitting the reply message to the other mobile device (S2790). In this case, the control signal may be provided to the communication unit 710 of the vehicle 700.

In some implementations, the first, second, and third inputs described above in relation to FIG. 27 may be different types of user inputs or gesture inputs.

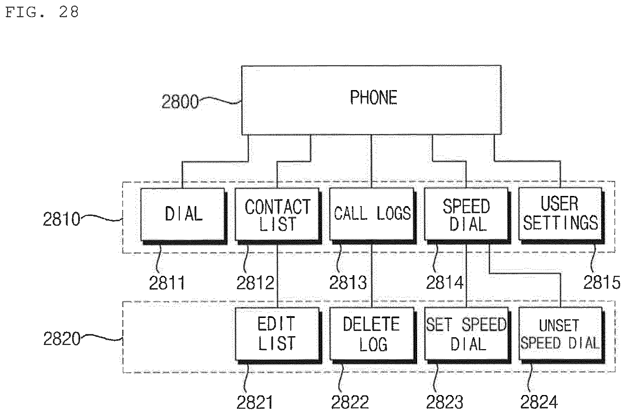

FIGS. 28 to 32 are reference views for describing sub menu structures of items displayed on the display apparatus 400.

FIG. 28 shows a sub menu structure of a phone item 2800.

Referring to FIG. 28, the phone item 2800 may be the first item described above in relation to FIG. 11A. For example, the phone item 2800 may be the first item corresponding to a first icon which is highlighted when a second input is received on a first screen displayed as a first input is received.

The sub menu structure of the phone item 2800 may be provided as a hierarchical structure. In the current implementation, the sub menu structure of the phone item 2800 is divided into a first-level sub menu 2810 and a second-level sub menu 2820. However, the sub menu structure of the phone item 2800 may also have three or more levels.

If the phone item 2800 corresponding to the first item is selected, the processor 270 may provide a control signal for displaying the first-level sub menu 2810 of the phone item 2800, to the display apparatus 400.

The first-level sub menu 2810 of the phone item 2800 may include a dial item 2811, a contact list item 2812, a call logs item 2813, a speed dial item 2814, and a user settings item 2815. In some implementations, each item of the first-level sub menu 2810 of the phone item 2800 may be displayed as an icon corresponding thereto.

After the first-level sub menu 2810 of the phone item 2800 is displayed, the processor 270 may provide a control signal for highlighting at least one item of the first-level sub menu 2810.

After any one item is highlighted, if a fourth input is received, the processor 270 may provide a control signal for selecting the highlighted item.

If the highlighted item is selected, the processor 270 may provide a control signal for displaying the second-level sub menu 2820 of the selected item, to the display apparatus 400. The second-level sub menu 2820 may include at least one item. Each item of the second-level sub menu 2820 may be displayed as an icon corresponding thereto.

Here, the fourth input may be a user input received through the input unit 210.

The fourth input may be one of the first to eighth user inputs described above in relation to FIGS. 1 to 9D. Alternatively, the fourth input may be a combination of two or more of the first to eighth user inputs. Otherwise, the fourth input may be one of the first to fourth twist gesture inputs. Alternatively, the fourth input may be a combination of two or more of the first to fourth twist gesture inputs. Otherwise, the fourth input may be one of the first to fourth sweep gesture inputs. Alternatively, the fourth input may be a combination of two or more of the first to fourth sweep gesture inputs.

After any one item is highlighted, if a fifth input other than the fourth input is received, the processor 270 may provide a control signal for switching the highlighted item. The display apparatus 400 may switch the highlighted item based on the control signal.

Here, the fifth input may be a user input received through the input unit 210.

The fifth input may be one of the first to eighth user inputs described above in relation to FIGS. 1 to 9D. Alternatively, the fifth input may be a combination of two or more of the first to eighth user inputs. Otherwise, the fifth input may be one of the first to fourth twist gesture inputs. Alternatively, the fifth input may be a combination of two or more of the first to fourth twist gesture inputs. Otherwise, the fifth input may be one of the first to fourth sweep gesture inputs. Alternatively, the fifth input may be a combination of two or more of the first to fourth sweep gesture inputs.

In some implementations, after the highlighted item is switched based on the fifth input, if the above-described fourth input is received, the processor 270 may provide a control signal for selecting the highlighted item.

In some implementations, the second-level sub menu 2820 of the phone item 2800 may include an edit list item 2821, a delete log item 2822, a set speed dial item 2823, and an unset speed dial item 2824.

Here, the edit list item 2821 may be a sub item of the contact list item 2812. The delete log item 2822 may be a sub item of the call logs item 2813. The set speed dial item 2823 and the unset speed dial item 2824 may be sub items of the speed dial item 2814.

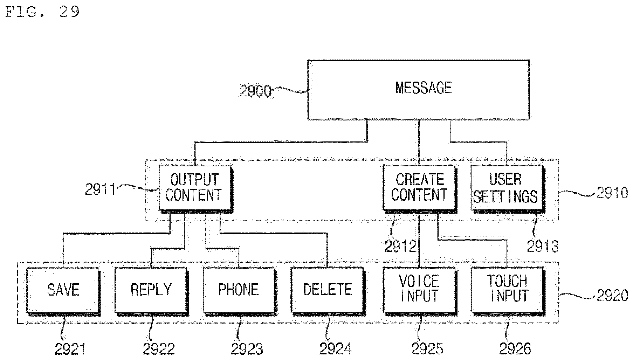

FIG. 29 shows a sub menu structure of a message item 2900.

Referring to FIG. 29, the message item 2900 may be the first item described above in relation to FIG. 11A. For example, the message item 2900 may be the first item corresponding to a first icon which is highlighted when a second input is received on a first screen displayed as a first input is received.

The sub menu structure of the message item 2900 may be provided as a hierarchical structure. In the current implementation, the sub menu structure of the message item 2900 is divided into a first-level sub menu 2910 and a second-level sub menu 2920. However, the sub menu structure of the message item 2900 may also have three or more levels.

In some implementations, a message may include a text message, an instant message, an SNS message, or an email.

The instant message may be a message provided through a third party service such as KakaoTalk, Line, or Telegram.

If the message item 2900 corresponding to the first item is selected, the processor 270 may provide a control signal for displaying the first-level sub menu 2910 of the message item 2900, to the display apparatus 400.

The first-level sub menu 2910 of the message item 2900 may include an output content item 2911, a create content item 2912, and a user settings item 2913. In some implementations, each item of the first-level sub menu 2910 of the message item 2900 may be displayed as an icon corresponding thereto.

After the first-level sub menu 2910 of the message item 2900 is displayed, the processor 270 may provide a control signal for highlighting at least one item of the first-level sub menu 2910.

After any one item is highlighted, if a fourth input is received, the processor 270 may provide a control signal for selecting the highlighted item.

If the highlighted item is selected, the processor 270 may provide a control signal for displaying the second-level sub menu 2920 of the selected item, to the display apparatus 400. The second-level sub menu 2920 may include at least one item. Each item of the second-level sub menu 2920 may be displayed as an icon corresponding thereto.

Here, the fourth input may be a user input received through the input unit 210.

The fourth input may be one of the first to eighth user inputs described above in relation to FIGS. 1 to 9D. Alternatively, the fourth input may be a combination of two or more of the first to eighth user inputs. Otherwise, the fourth input may be one of the first to fourth twist gesture inputs. Alternatively, the fourth input may be a combination of two or more of the first to fourth twist gesture inputs. Otherwise, the fourth input may be one of the first to fourth sweep gesture inputs. Alternatively, the fourth input may be a combination of two or more of the first to fourth sweep gesture inputs.

After any one item is highlighted, if a fifth input other than the fourth input is received, the processor 270 may provide a control signal for switching the highlighted item. The display apparatus 400 may switch the highlighted item based on the control signal.

Here, the fifth input may be a user input received through the input unit 210.

The fifth input may be one of the first to eighth user inputs described above in relation to FIGS. 1 to 9D. Alternatively, the fifth input may be a combination of two or more of the first to eighth user inputs. Otherwise, the fifth input may be one of the first to fourth twist gesture inputs. Alternatively, the fifth input may be a combination of two or more of the first to fourth twist gesture inputs. Otherwise, the fifth input may be one of the first to fourth sweep gesture inputs. Alternatively, the fifth input may be a combination of two or more of the first to fourth sweep gesture inputs.

In some implementations, after the highlighted item is switched based on the fifth input, if the above-described fourth input is received, the processor 270 may provide a control signal for selecting the highlighted item.

In some implementations, the second-level sub menu 2920 of the message item 2900 may include a save item 2921, a reply item 2922, a phone item 2923, a delete item 2924, a voice input item 2925, and a touch input item 2926.

Here, the save item 2921, the reply item 2922, the phone item 2923, and the delete item 2924 may be sub items of the output content item 2911. The voice input item 2925 and the touch input item 2926 may be sub items of the create-content item 2912.

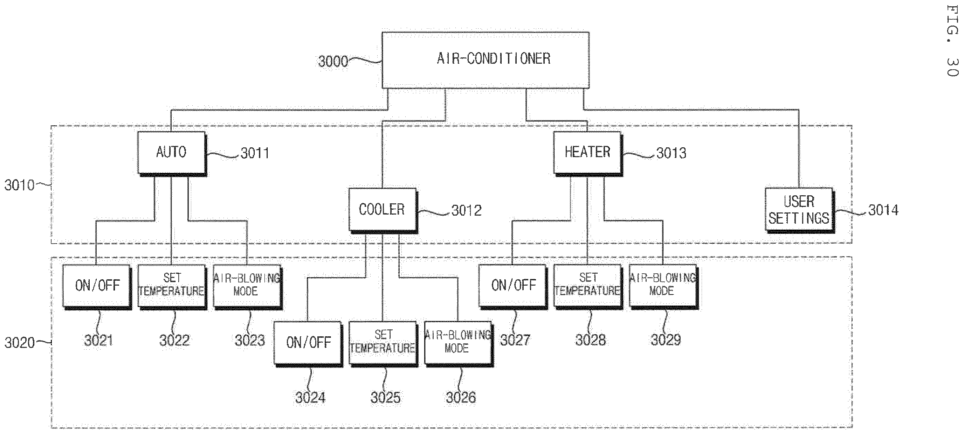

FIG. 30 shows a sub menu structure of an air-conditioner item 3000.

Referring to FIG. 30, the air-conditioner item 3000 may be the first item described above in relation to FIG. 11A. For example, the air-conditioner item 3000 may be the first item corresponding to a first icon which is highlighted when a second input is received on a first screen displayed as a first input is received.

The sub menu structure of the air-conditioner item 3000 may be provided as a hierarchical structure. In the current implementation, the sub menu structure of the air-conditioner item 3000 is divided into a first-level sub menu 3010 and a second-level sub menu 3020. However, the sub menu structure of the air-conditioner item 3000 may also have three or more levels.

If the air-conditioner item 3000 corresponding to the first item is selected, the processor 270 may provide a control signal for displaying the first-level sub menu 3010 of the air-conditioner item 3000, to the display apparatus 400.

The first-level sub menu 3010 of the air-conditioner item 3000 may include an auto item 3011, a cooler item 3012, a heater item 3013, and a user settings item 3014. In some implementations, each item of the first-level sub menu 3010 of the air-conditioner item 3000 may be displayed as an icon corresponding thereto.

After the first-level sub menu 3010 of the air-conditioner item 3000 is displayed, the processor 270 may provide a control signal for highlighting at least one item of the first-level sub menu 3010.

After any one item is highlighted, if a fourth input is received, the processor 270 may provide a control signal for selecting the highlighted item.

If the highlighted item is selected, the processor 270 may provide a control signal for displaying the second-level sub menu 3020 of the selected item, to the display apparatus 400. The second-level sub menu 3020 may include at least one item. Each item of the second-level sub menu 3020 may be displayed as an icon corresponding thereto.

Here, the fourth input may be a user input received through the input unit 210.

The fourth input may be one of the first to eighth user inputs described above in relation to FIGS. 1 to 9D. Alternatively, the fourth input may be a combination of two or more of the first to eighth user inputs. Otherwise, the fourth input may be one of the first to fourth twist gesture inputs. Alternatively, the fourth input may be a combination of two or more of the first to fourth twist gesture inputs. Otherwise, the fourth input may be one of the first to fourth sweep gesture inputs. Alternatively, the fourth input may be a combination of two or more of the first to fourth sweep gesture inputs.

After any one item is highlighted, if a fifth input other than the fourth input is received, the processor 270 may provide a control signal for switching the highlighted item. The display apparatus 400 may switch the highlighted item based on the control signal.

Here, the fifth input may be a user input received through the input unit 210.

The fifth input may be one of the first to eighth user inputs described above in relation to FIGS. 1 to 9D. Alternatively, the fifth input may be a combination of two or more of the first to eighth user inputs. Otherwise, the fifth input may be one of the first to fourth twist gesture inputs. Alternatively, the fifth input may be a combination of two or more of the first to fourth twist gesture inputs. Otherwise, the fifth input may be one of the first to fourth sweep gesture inputs. Alternatively, the fifth input may be a combination of two or more of the first to fourth sweep gesture inputs.

In some implementations, after the highlighted item is switched based on the fifth input, if the above-described fourth input is received, the processor 270 may provide a control signal for selecting the highlighted item.

In some implementations, the second-level sub menu 3020 of the air-conditioner item 3000 may include on/off items 3021, 3024, and 3027, set temperature items 3022, 3025, and 3028, and air-blowing mode items 3023, 3026, and 3029.

The auto item 3011 of the first-level sub menu 3010 may include sub items such as the on/off item 3021, the set temperature item 3022, and the air-blowing mode item 3023.

The cooler item 3012 of the first-level sub menu 3010 may include sub items such as the on/off item 3024, the set temperature item 3025, and the air-blowing mode item 3026.

The heater item 3013 of the first-level sub menu 3010 may include sub items such as the on/off item 3027, the set temperature item 3028, and the air-blowing mode item 3029.

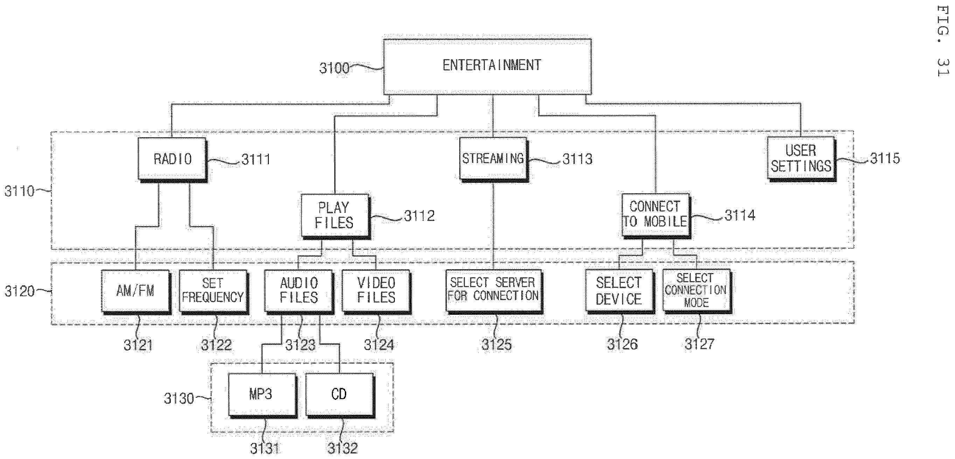

FIG. 31 shows a sub menu structure of an entertainment item 3100.

Referring to FIG. 31, the entertainment item 3100 may be the first item described above in relation to FIG. 11A. For example, the entertainment item 3100 may be the first item corresponding to a first icon which is highlighted when a second input is received on a first screen displayed as a first input is received.

The sub menu structure of the entertainment item 3100 may be provided as a hierarchical structure. In the current implementation, the sub menu structure of the entertainment item 3100 is divided into a first-level sub menu 3110, a second-level sub menu 3120, and a third-level sub menu 3130. However, the sub menu structure of the entertainment item 3100 may also have four or more levels.

If the entertainment item 3100 corresponding to the first item is selected, the processor 270 may provide a control signal for displaying the first-level sub menu 3110 of the entertainment item 3100, to the display apparatus 400.

The first-level sub menu 3110 of the entertainment item 3100 may include a radio item 3111, a play files item 3112, a streaming item 3113, a connect-to-mobile item 3114, and a user settings item 3115. In some implementations, each item of the first-level sub menu 3110 of the entertainment item 3100 may be displayed as an icon corresponding thereto.

After the first-level sub menu 3110 of the entertainment item 3100 is displayed, the processor 270 may provide a control signal for highlighting at least one item of the first-level sub menu 3110.

After any one item is highlighted, if a fourth input is received, the processor 270 may provide a control signal for selecting the highlighted item.

If the highlighted item is selected, the processor 270 may provide a control signal for displaying the second-level sub menu 3120 of the selected item, to the display apparatus 400. The second-level sub menu 3120 may include at least one item. Each item of the second-level sub menu 3120 may be displayed as an icon corresponding thereto.

Here, the fourth input may be a user input received through the input unit 210.

The fourth input may be one of the first to eighth user inputs described above in relation to FIGS. 1 to 9D. Alternatively, the fourth input may be a combination of two or more of the first to eighth user inputs. Otherwise, the fourth input may be one of the first to fourth twist gesture inputs. Alternatively, the fourth input may be a combination of two or more of the first to fourth twist gesture inputs. Otherwise, the fourth input may be one of the first to fourth sweep gesture inputs. Alternatively, the fourth input may be a combination of two or more of the first to fourth sweep gesture inputs.

After any one item is highlighted, if a fifth input other than the fourth input is received, the processor 270 may provide a control signal for switching the highlighted item. The display apparatus 400 may switch the highlighted item based on the control signal.

Here, the fifth input may be a user input received through the input unit 210.

The fifth input may be one of the first to eighth user inputs described above in relation to FIGS. 1 to 9D. Alternatively, the fifth input may be a combination of two or more of the first to eighth user inputs. Otherwise, the fifth input may be one of the first to fourth twist gesture inputs. Alternatively, the fifth input may be a combination of two or more of the first to fourth twist gesture inputs. Otherwise, the fifth input may be one of the first to fourth sweep gesture inputs. Alternatively, the fifth input may be a combination of two or more of the first to fourth sweep gesture inputs.

In some implementations, after the highlighted item is switched based on the fifth input, if the above-described fourth input is received, the processor 270 may provide a control signal for selecting the highlighted item.

In some implementations, the second-level sub menu 3120 of the entertainment item 3100 may include an AM/FM item 3121, a set frequency item 3122, an audio files item 3123, a video files item 3124, a select server for connection item 3125, a select device item 3126, and a select connection mode item 3127.

Here, the AM/FM item 3121 and the set frequency item 3122 may be sub items of the radio item 3111. The audio files item 3123 and the video files item 3124 may be sub items of the play files item 3112. The select server for connection item 3125 may be a sub item of the streaming item 3113. The select device item 3126 and the select connection mode item 3127 may be sub items of the connect-to-mobile item 3114.

In some implementations, the select connection mode item 3127 may be an item for selecting a mode for connection between the vehicle 700 and the mobile device 600, e.g., Bluetooth™, RFID, IrDA, UWB, ZigBee, NFC, Wi-Fi, Wi-Fi Direct, or Wireless USB.

In some implementations, the third-level sub menu 3130 of the entertainment item 3100 may include an MP3 item 3131 and a CD item 3132.

Here, the MP3 item 3131 and the CD item 3132 may be sub items of the audio files item 3123.

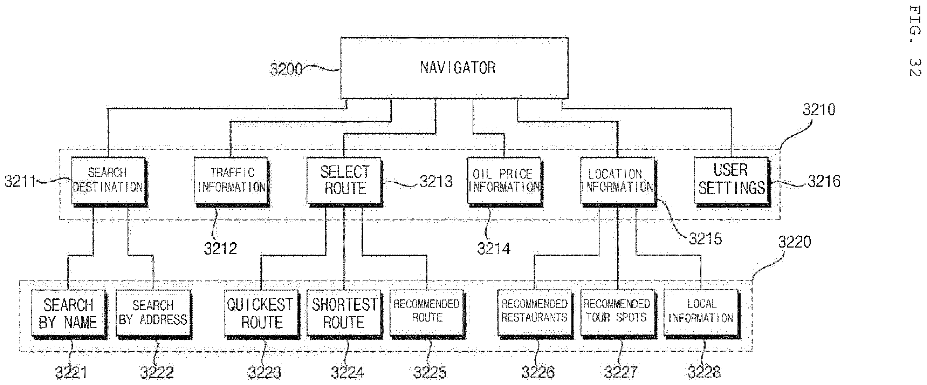

FIG. 32 shows a sub menu structure of a navigator item 3200.

Referring to FIG. 32, the navigator item 3200 may be the first item described above in relation to FIG. 11A. For example, the navigator item 3200 may be the first item corresponding to a first icon which is highlighted when a second input is received on a first screen displayed as a first input is received.

The sub menu structure of the navigator item 3200 may be provided as a hierarchical structure. In the current implementation, the sub menu structure of the navigator item 3200 is divided into a first-level sub menu 3210 and a second-level sub menu 3220. However, the sub menu structure of the navigator item 3200 may also have three or more levels.

If the navigator item 3200 corresponding to the first item is selected, the processor 270 may provide a control signal for displaying the first-level sub menu 3210 of the navigator item 3200, to the display apparatus 400.

The first-level sub menu 3210 of the navigator item 3200 may include a search destination item 3211, a traffic information item 3212, a select route item 3213, an oil price information item 3214, a location information item 3215, and a user settings item 3216. In some implementations, each item of the first-level sub menu 3210 of the navigator item 3200 may be displayed as an icon corresponding thereto.

After the first-level sub menu 3210 of the navigator item 3200 is displayed, the processor 270 may provide a control signal for highlighting at least one item of the first-level sub menu 3210.

After any one item is highlighted, if a fourth input is received, the processor 270 may provide a control signal for selecting the highlighted item.

If the highlighted item is selected, the processor 270 may provide a control signal for displaying the second-level sub menu 3220 of the selected item, to the display apparatus 400. The second-level sub menu 3220 may include at least one item. Each item of the second-level sub menu 3220 may be displayed as an icon corresponding thereto.

Here, the fourth input may be a user input received through the input unit 210.

The fourth input may be one of the first to eighth user inputs described above in relation to FIGS. 1 to 9D. Alternatively, the fourth input may be a combination of two or more of the first to eighth user inputs. Otherwise, the fourth input may be one of the first to fourth twist gesture inputs. Alternatively, the fourth input may be a combination of two or more of the first to fourth twist gesture inputs. Otherwise, the fourth input may be one of the first to fourth sweep gesture inputs. Alternatively, the fourth input may be a combination of two or more of the first to fourth sweep gesture inputs.

After any one item is highlighted, if a fifth input other than the fourth input is received, the processor 270 may provide a control signal for switching the highlighted item. The display apparatus 400 may switch the highlighted item based on the control signal.

Here, the fifth input may be a user input received through the input unit 210.

The fifth input may be one of the first to eighth user inputs described above in relation to FIGS. 1 to 9D. Alternatively, the fifth input may be a combination of two or more of the first to eighth user inputs. Otherwise, the fifth input may be one of the first to fourth twist gesture inputs. Alternatively, the fifth input may be a combination of two or more of the first to fourth twist gesture inputs. Otherwise, the fifth input may be one of the first to fourth sweep gesture inputs. Alternatively, the fifth input may be a combination of two or more of the first to fourth sweep gesture inputs.

In some implementations, after the highlighted item is switched based on the fifth input, if the above-described fourth input is received, the processor 270 may provide a control signal for selecting the highlighted item.

In some implementations, the second-level sub menu 3220 of the navigator item 3200 may include a search by name item 3221, a search by address item 3222, a quickest route item 3223, a shortest route item 3224, a recommended route item 3225, a recommended restaurants item 3226, a recommended tour spots item 3227, and a local information item 3228.

Here, the search by name item 3221 and the search by address item 3222 may be sub items of the search destination item 3211. The quickest route item 3223, the shortest route item 3224, and the recommended route item 3225 may be sub items of the select route item 3213. The recommended restaurants item 3226, the recommended tour spots item 3227, and the local information item 3228 may be sub items of the location information item 3215.

As is apparent from the above description, implementations described herein may have one or more of the following effects.

First, a user may control various functions of a vehicle while driving the vehicle, looking ahead, and gripping a steering wheel.

Second, a gaze of the user may be fixed ahead when the user provides various inputs to control the vehicle, and thus safe driving may be achieved.

Third, since a certain screen displayed on a windshield is controlled using an input apparatus provided on the steering wheel, a gaze of a driver may be fixed ahead and thus safe driving may be achieved.

Fourth, since the gaze of the user is detected and the location of a screen display region is controlled based on the gaze of the user, user convenience may be increased.

Effects of implementations described herein are not limited to what has been particularly described hereinabove and there may be other advantages.

The methods, techniques, systems, and apparatuses described herein may be implemented in digital electronic circuitry or computer hardware, for example, by executing instructions stored in tangible computer-readable storage media.

Apparatuses implementing these techniques may include appropriate input and output devices, a computer processor, and/or tangible computer-readable storage media storing instructions for execution by a processor.

A process implementing techniques disclosed herein may be performed by a processor executing instructions stored on a tangible computer-readable storage medium for performing desired functions by operating on input data and generating appropriate output. Suitable processors include, by way of example, both general and special purpose microprocessors. Suitable computer-readable storage devices for storing executable instructions include all forms of non-volatile memory, including, by way of example, semiconductor memory devices, such as Erasable Programmable Read-Only Memory (EPROM), Electrically Erasable Programmable Read-Only Memory (EEPROM), and flash memory devices; magnetic disks such as fixed, floppy, and removable disks; other magnetic media including tape; and optical media such as Compact Discs (CDs) or Digital Video Disks (DVDs). Any of the foregoing may be supplemented by, or incorporated in, specially designed application-specific integrated circuits (ASICs). Examples of such a processor may include the processor 270 or the controller 770.

Although the operations of the disclosed techniques may be described herein as being performed in a certain order and/or in certain combinations, in some implementations, individual operations may be rearranged in a different order, combined with other operations described herein, and/or eliminated, and desired results still may be achieved. Similarly, components in the disclosed systems may be combined in a different manner and/or replaced or supplemented by other components and desired results still may be achieved.

## Claims

1. An in-vehicle input apparatus (200) comprising:
an input unit (210) comprising at least one sensor attached to a steering wheel of a vehicle and configured to:
sense contact by a user with a rim of the steering wheel of the vehicle; and
output at least one input signal based on the sensed contact by the user with the rim of the steering wheel of the vehicle;
at least one processor (270) configured to:
monitor, over time, the at least one input signal;
based on the monitored at least one input signal, determine a change of a contact region where a hand of the user contacts the rim of the steering wheel of the vehicle;
determine, based on the determined change of the contact region where the hand of the user contacts the rim of the steering wheel of the vehicle, a control operation for the vehicle; and
generate a control signal based on the determined control operation for the vehicle,
wherein the at least one input unit (210) comprises:
a first input unit (212) configured to generate a first user input signal based on a change of a first contact region where a first hand of the user contacts the rim of the steering wheel;
wherein the processor (270) is further configured to:
receive, through the first input unit (212), the first user input signal as a first type of signal based on a change in a rotation along a first direction toward the user, or as a second type of signal based on a change in a rotation along a second direction away from the user;
**characterized in that** the processor (270) is further configured to:
receive the first type of signal and then subsequently receive the second type of signal within a preset time after the first type of signal is received through the first input unit (212); and
generate a control signal different from control signals individually generated based on the first type and second type of signals, as the first type of signal is received and then the second type of signal is received.

2. The in-vehicle input apparatus (200) according to claim 1, wherein the at least one input unit (210) is configured to determine the change of the contact region by:
determining at least one of a change in a location of the contact region, a change in a surface area of the contact region, a change in a number of the contact regions, a change in a rotation of the contact region, or a speed of a change of the contact region.

3. The in-vehicle input apparatus (200) according to claim 2, wherein the at least one input unit (210) is configured to determine the change of the contact region by:
determining that the contact region moves radially along a circumference of the rim of the steering wheel, or
determining that the contact region moves in a twisting motion toward or away from the user.

4. The in-vehicle input apparatus (200) according to claim 2, wherein determining the change in the rotation of the contact region comprises determining at least one of a change in rotation along a first direction toward the user, a change in a rotation along a second direction away from the user, a change in a rotation along a third direction in which the rim rotates for a left-turn steering movement, or a change in a rotation along a fourth direction in which the rim rotates for a right-turn steering movement.

5. The in-vehicle input apparatus (200) according to any one of claims 1 to 4, wherein the at least one input unit (210) further comprises:
a second input unit (215) configured to generate a second user input signal based on a change of a second contact region where a second hand of the user contacts the rim of the steering wheel,
wherein the processor (270) is further configured to:
receive, through the second input unit (215), the second user input signal as a third type of signal based on a change in a rotation along the first direction, or as a fourth type of signal based on a change in a rotation along the second direction ;
receive the third type of signal and then subsequently receive the fourth type of signal within a preset time after the third type of signal is received through the second input unit (215); and
generate a control signal different from control signals individually generated based on the third type and fourth type of signals, as the third type of signal is received and then the fourth type of signal is received.

6. The in-vehicle input apparatus (200) according to claim 5, wherein the processor (270) is configured to generate the control signal based on a combination of the first user input signal generated by the first input unit and the second user input signal generated by the second input unit.

7. The in-vehicle input apparatus (200) according to any one of claims 5 to 6, wherein the processor (270) is further configured to:
receive, through the first input unit (212), the first input signal as a fifth type of signal based on a change in a rotation along a third direction in which the rim rotates for a left-turn steering movement, or a sixth type of signal based on a change in a rotation along a fourth direction in which the rim rotates for a right-turn steering movement;
receive, through the second input unit (215), the second input signal as a seventh type of signal based on a change in a rotation along the third direction, or an eighth type of signal based on a change in a rotation along the fourth direction; and
generate the control signal based on at least one of the fifth type of signal, the sixth type of signal, the seventh type of signal, or the eighth type of signal.

## Patentansprüche

1. Bordeigene Eingabevorrichtung (200), umfassend:
eine Eingabeeinheit (210), die wenigstens einen Sensor umfasst, der an einem Lenkrad eines Fahrzeugs befestigt ist und ausgestaltet ist zum:
Abtasten von Kontakt durch einen Nutzer mit einem Rand des Lenkrads des Fahrzeugs; und
Ausgeben von wenigstens einem Eingabesignal basierend auf dem abgetasteten Kontakt durch den Nutzer mit dem Rand des Lenkrads des Fahrzeugs;
wenigstens einen Prozessor (270), der ausgestaltet ist zum:
Überwachen, über die Zeit, des wenigstens einen Eingabesignals;
basierend auf dem überwachten wenigstens einen Eingabesignal, Bestimmen einer Änderung eines Kontaktbereichs, wo eine Hand des Nutzers den Rand des Lenkrads des Fahrzeugs berührt;
Bestimmen, basierend auf der bestimmten Änderung des Kontaktbereichs, wo die Hand des Nutzers den Rand des Lenkrads des Fahrzeugs berührt, eines Steuerbetriebs für das Fahrzeug; und
Erzeugen eines Steuersignals basierend auf dem bestimmten Steuerbetrieb für das Fahrzeug,
wobei die wenigstens eine Eingabeeinheit (210) umfasst:
eine erste Eingabeeinheit (212), die dazu ausgestaltet ist, ein erstes Nutzereingabesignal basierend auf einer Änderung eines ersten Kontaktbereichs, wo eine erste Hand des Nutzers den Rand des Lenkrads berührt, zu erzeugen;
wobei der Prozessor (270) ferner ausgestaltet ist zum:
Empfangen, durch die erste Eingabeeinheit (212), des ersten Nutzereingabesignals als eine erste Art von Signal basierend auf einer Änderung einer Rotation entlang einer ersten Richtung in Richtung des Nutzers, oder als eine zweite Art von Signal basierend auf einer Änderung einer Rotation entlang einer zweiten Richtung weg von dem Nutzer;
**dadurch gekennzeichnet, dass** der Prozessor (270) ferner ausgestaltet ist zum:
Empfangen der ersten Art von Signal und dann anschließend Empfangen der zweiten Art von Signal innerhalb einer vorgegebenen Zeit, nachdem die erste Art von Signal durch die erste Eingabeeinheit (212) empfangen wurde; und
Erzeugen eines Steuersignals, das sich von Steuersignalen unterscheidet, die basierend auf der ersten Art und der zweiten Art von Signal individuell erzeugt werden, wenn die erste Art von Signal empfangen wird und dann die zweite Art von Signal empfangen wird.

2. Bordeigene Eingabevorrichtung (200) nach Anspruch 1, wobei die wenigstens eine Eingabeeinheit (210) dazu ausgestaltet ist, die Änderung des Kontaktbereichs zu bestimmen durch:
Bestimmen von wenigstens entweder einer Änderung einer Position des Kontaktbereichs, einer Änderung einer Oberfläche des Kontaktbereichs, einer Änderung einer Anzahl der Kontaktbereiche, einer Änderung einer Rotation des Kontaktbereichs oder einer Geschwindigkeit einer Änderung des Kontaktbereichs.

3. Bordeigene Eingabevorrichtung (200) nach Anspruch 2, wobei die wenigstens eine Eingabeeinheit (210) dazu ausgestaltet ist, die Änderung des Kontaktbereichs zu bestimmen durch:
Bestimmen, dass sich der Kontaktbereich radial entlang eines Umfangs des Rands des Lenkrads bewegt, oder
Bestimmen, dass sich der Kontaktbereich in einer Drehbewegung hin zum oder weg vom Nutzer bewegt.

4. Bordeigene Eingabevorrichtung (200) nach Anspruch 2, wobei das Bestimmen der Änderung der Rotation des Kontaktbereichs ein Bestimmen von wenigstens einer Änderung einer Rotation entlang einer ersten Richtung zum Nutzer, einer Änderung einer Rotation entlang einer zweiten Richtung weg vom Nutzer, einer Änderung einer Rotation entlang einer dritten Richtung, bei welcher sich der Rand für eine Lenkbewegung nach links dreht, oder einer Änderung einer Rotation entlang einer vierten Richtung, bei welcher sich der Rand für eine Lenkbewegung nach rechts dreht, umfasst.

5. Bordeigene Eingabevorrichtung (200) nach einem der Ansprüche 1 bis 4, wobei die wenigstens eine Eingabeeinheit (210) ferner umfasst:
eine zweite Eingabeeinheit (215), die dazu ausgestaltet ist, ein zweites Nutzereingabesignal basierend auf einer Änderung eines zweiten Kontaktbereichs, wo eine zweite Hand des Nutzers den Rand des Lenkrads berührt, zu erzeugen,
wobei der Prozessor (270) ferner ausgestaltet ist zum:
Empfangen, durch die zweite Eingabeeinheit (215), des zweiten Nutzereingabesignals als eine dritte Art von Signal basierend auf einer Änderung einer Rotation entlang der ersten Richtung, oder als eine vierte Art von Signal basierend auf einer Änderung einer Rotation entlang der zweiten Richtung;
Empfangen der dritten Art von Signal und dann anschließend Empfangen der vierten Art von Signal innerhalb einer vorgegebenen Zeit, nachdem die dritte Art von Signal durch die zweite Eingabeeinheit (215) empfangen wurde; und
Erzeugen eines Steuersignals, das sich von Steuersignalen unterscheidet, die basierend auf der dritten Art und der vierten Art von Signal individuell erzeugt werden, wenn die dritte Art von Signal empfangen wird und dann die vierte Art von Signal empfangen wird.

6. Bordeigene Eingabevorrichtung (200) nach Anspruch 5, wobei der Prozessor (270) dazu ausgestaltet ist, das Steuersignal basierend auf einer Kombination aus dem ersten Nutzereingabesignal, das von der ersten Eingabeeinheit erzeugt wird, und dem zweiten Nutzereingabesignal, das von der zweiten Eingabeeinheit erzeugt wird, zu erzeugen.

7. Bordeigene Eingabevorrichtung (200) nach einem der Ansprüche 5 bis 6, wobei der Prozessor (270) ferner ausgestaltet ist zum:
Empfangen, durch die erste Eingabeeinheit (212), des ersten Eingabesignals als fünfte Art von Signal basierend auf einer Änderung einer Rotation entlang einer dritten Richtung, bei welcher sich der Rand für eine Lenkbewegung nach links dreht, oder als sechste Art von Signal basierend auf einer Änderung einer Rotation entlang einer vierten Richtung, bei welcher sich der Rand für eine Lenkbewegung nach rechts dreht;
Empfangen, durch die zweite Eingabeeinheit (215), des zweiten Eingabesignals als siebte Art von Signal basierend auf einer Änderung einer Rotation entlang der dritten Richtung, oder als achte Art von Signal basierend auf einer Änderung einer Rotation entlang der vierten Richtung; und
Erzeugen des Steuersignals basierend auf wenigstens entweder der fünften Art von Signal, der sechsten Art von Signal, der siebten Art von Signal oder der achten Art von Signal.

## Revendications

1. Appareil d'entrée embarqué dans un véhicule (200) comprenant :
une unité d'entrée (210) comprenant au moins un capteur fixé à un volant de direction d'un véhicule et configurée pour :
détecter un contact par un utilisateur avec une jante du volant de direction du véhicule ; et
délivrer au moins un signal d'entrée sur la base du contact détecté par l'utilisateur avec la jante du volant de direction du véhicule ;
au moins un processeur (270) configuré pour :
surveiller, au cours du temps, l'au moins un signal d'entrée ;
sur la base de l'au moins un signal d'entrée surveillé, déterminer un changement d'une région de contact dans laquelle une main de l'utilisateur est en contact avec la jante du volant de direction du véhicule ;
déterminer, sur la base du changement déterminé de la région de contact dans laquelle la main de l'utilisateur est en contact avec la jante du volant de direction du véhicule, une opération de commande pour le véhicule ; et
générer un signal de commande sur la base de l'opération de commande déterminée pour le véhicule,
l'au moins une unité d'entrée (210) comprenant :
une première unité d'entrée (212) configurée pour générer un premier signal d'entrée d'utilisateur sur la base d'un changement d'une première région de contact dans laquelle une première main de l'utilisateur est en contact avec la jante du volant de direction ;
le processeur (270) étant en outre configuré pour :
recevoir, par l'intermédiaire de la première unité d'entrée (212), le premier signal d'entrée d'utilisateur en tant que premier type de signal sur la base d'un changement d'une rotation le long d'une première direction vers l'utilisateur, ou en tant que second type de signal sur la base d'un changement d'une rotation le long d'une seconde direction éloignée de l'utilisateur ;
**caractérisé par le fait que** le processeur (270) est en outre configuré pour :
recevoir le premier type de signal puis recevoir par la suite le second type de signal dans un temps prédéfini après que le premier type de signal est reçu par l'intermédiaire de la première unité d'entrée (212) ; et
générer un signal de commande différent de signaux de commande générés individuellement sur la base du premier type et du second type de signaux, lorsque le premier type de signal est reçu puis que le second type de signal est reçu.

2. Appareil d'entrée embarqué dans un véhicule (200) selon la revendication 1, dans lequel l'au moins une unité d'entrée (210) est configurée pour déterminer le changement de la région de contact par :
détermination d'au moins l'un parmi un changement d'un emplacement de la région de contact, un changement d'une zone de surface de la région de contact, un changement d'un nombre des régions de contact, un changement d'une rotation de la région de contact ou une vitesse d'un changement de la région de contact.

3. Appareil d'entrée embarqué dans un véhicule (200) selon la revendication 2, dans lequel l'au moins une unité d'entrée (210) est configurée pour déterminer le changement de la région de contact par :
détermination du fait que la région de contact se déplace de manière radiale le long d'une circonférence de la jante du volant de direction, ou
détermination du fait que la région de contact se déplace selon un mouvement sinueux vers ou à l'opposé de l'utilisateur.

4. Appareil d'entrée embarqué dans un véhicule (200) selon la revendication 2, dans lequel la détermination du changement de la rotation de la région de contact comprend la détermination d'au moins l'un parmi un changement de rotation le long d'une première direction vers l'utilisateur, un changement d'une rotation le long d'une deuxième direction à l'opposé de l'utilisateur, un changement d'une rotation le long d'une troisième direction dans laquelle la jante tourne pour un mouvement de direction pour tourner à gauche, ou un changement d'une rotation le long d'une quatrième direction dans laquelle la jante tourne pour un mouvement de direction pour tourner à droite.

5. Appareil d'entrée embarqué dans un véhicule (200) selon l'une quelconque des revendications 1 à 4, dans lequel l'au moins une unité d'entrée (210) comprend en outre :
une seconde unité d'entrée (215) configurée pour générer un second signal d'entrée d'utilisateur sur la base d'un changement d'une seconde région de contact dans laquelle une seconde main de l'utilisateur est en contact avec la jante du volant de direction,
le processeur (270) étant en outre configuré pour :
recevoir, par l'intermédiaire de la seconde unité d'entrée (215), le second signal d'entrée d'utilisateur en tant que troisième type de signal sur la base d'un changement d'une rotation le long de la première direction, ou en tant que quatrième type de signal sur la base d'un changement d'une rotation le long de la deuxième direction ;
recevoir le troisième type de signal et recevoir par la suite le quatrième type de signal dans un temps prédéfini après que le troisième type de signal est reçu par l'intermédiaire de la seconde unité d'entrée (215) ; et
générer un signal de commande différent de signaux de commande générés individuellement sur la base du troisième type et du quatrième type de signaux, lorsque le troisième type de signal est reçu puis que le quatrième type de signal est reçu.

6. Appareil d'entrée embarqué dans un véhicule (200) selon la revendication 5, dans lequel le processeur (270) est configuré pour générer le signal de commande sur la base d'une combinaison du premier signal d'entrée d'utilisateur généré par la première unité d'entrée et du second signal d'entrée d'utilisateur généré par la seconde unité d'entrée.

7. Appareil d'entrée embarqué dans un véhicule (200) selon l'une quelconque des revendications 5 à 6, dans lequel le processeur (270) est en outre configuré pour :
recevoir, par l'intermédiaire de la première unité d'entrée (212), le premier signal d'entrée en tant que cinquième type de signal sur la base d'un changement d'une rotation le long d'une troisième direction dans laquelle la jante tourne pour un mouvement de direction pour tourner à gauche, ou en tant que sixième type de signal sur la base d'un changement d'une rotation le long d'une quatrième direction dans laquelle la jante tourne pour un mouvement de direction pour tourner à droite ;
recevoir, par l'intermédiaire de la seconde unité d'entrée (215), le second signal d'entrée en tant que septième type de signal sur la base d'un changement d'une rotation le long de la troisième direction, ou en tant que huitième type de signal sur la base d'un changement d'une rotation le long de la quatrième direction ; et
générer le signal de commande sur la base d'au moins l'un du cinquième type de signal, du sixième type de signal, du septième type de signal ou du huitième type de signal.
